(19) Europäisches Patentamt
European Patent Office
Office européen des brevets

(11) **EP 4 542 866 A1**

(12) **EUROPEAN PATENT APPLICATION**
published in accordance with Art. 153(4) EPC

(43) Date of publication:
23.04.2025 Bulletin 2025/17

(51) International Patent Classification (IPC):
*H04B 1/04* $^{(2006.01)}$

(21) Application number: 23830355.6

(52) Cooperative Patent Classification (CPC):
H04B 1/04

(22) Date of filing: 28.06.2023

(86) International application number:
PCT/CN2023/103312

(87) International publication number:
WO 2024/002184 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.06.2022 CN 202210760866

(71) Applicant: Huawei Technologies Co., Ltd.
Shenzhen, Guangdong 518129 (CN)

(72) Inventors:
• LIANG, Jian
Shenzhen, Guangdong 518129 (CN)
• ZHU, Nianyong
Shenzhen, Guangdong 518129 (CN)
• YU, Xiaobao
Shenzhen, Guangdong 518129 (CN)
• WANG, Bing
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **RADIO FREQUENCY CIRCUIT AND COMMUNICATION DEVICE**

(57) This application provides a radio frequency circuit and a communication device, and relates to the field of communication technologies. In the radio frequency circuit, a phase processing circuit may convert an orthogonal baseband signal into a plurality of baseband signals with a same amplitude and a predetermined phase difference. Therefore, when transmitting a signal or receiving a signal, the communication device can obtain better communication quality based on the plurality of multi-phase baseband signals. The radio frequency circuit includes a frequency mixer and the phase processing circuit coupled to the frequency mixer. The phase processing circuit is configured to receive the orthogonal baseband signal, and generate the multi-phase signal based on the orthogonal baseband signal, where the multi-phase signal includes m analog signals, a phase difference between any two of the analog signals having adjacent phases is fixed, and m is a positive integer greater than or equal to 3. The frequency mixer is configured to perform frequency mixing on the multi-phase signal to generate a radio frequency transmit signal.

[FIG. 6]

## Description

### TECHNICAL FIELD

This application relates to the field of communication technologies, and in particular, to a radio frequency circuit and a communication device.

### BACKGROUND

A communication device has functions of transmitting a signal and receiving a signal. When the communication device transmits a signal, the communication device generates transmit information, generates a baseband transmit signal based on the transmit information, generates a radio frequency transmit signal based on the baseband transmit signal, and further transmits the radio frequency transmit signal. When the communication device receives a signal, the communication device receives a radio frequency receive signal, generates a baseband receive signal based on the radio frequency receive signal, and obtains reception information based on the baseband receive signal.

When transmitting the signal, the communication device usually further transmits some interference signals, where the transmitted interference signals affect communication quality of the communication device.

### SUMMARY

Embodiments of this application provide a radio frequency circuit and a communication device. The radio frequency circuit can improve communication quality.

According to a first aspect, a radio frequency circuit is provided. The radio frequency circuit includes a frequency mixer and a phase processing circuit coupled to the frequency mixer. The phase processing circuit is configured to receive an orthogonal baseband signal, and generate a multi-phase signal based on the orthogonal baseband signal, where the multi-phase signal includes m analog signals, a phase difference between any two of the analog signals having adjacent phases is fixed, and m is a positive integer greater than or equal to 3. The frequency mixer is configured to perform frequency mixing on the multi-phase signal to generate a radio frequency transmit signal. In the radio frequency circuit, the phase processing circuit may generate the m analog signals based on the received orthogonal baseband signal. For example, the phase processing circuit may generate, based on the received orthogonal baseband transmit signal, eight analog signals whose phases are respectively 0 degrees, 45 degrees, 90 degrees, 135 degrees, 180 degrees, 225 degrees, 270 degrees, and 315 degrees, so that the frequency mixer performs frequency mixing on the eight analog signals. A phase of a wanted signal generated through frequency mixing is not affected, and a distortion signal generated through frequency mixing is exactly four pairs of distortion signals that are in a differential form. Superimposition of the distortion signals that are in the differential form is equivalent to eliminating the distortion signal. When the distortion signal is eliminated, it may be considered that the radio frequency circuit has better CIM3 suppression effect, to improve communication quality.

Optionally, the phase processing circuit is specifically configured to perform interpolation on at least two of a baseband transmit signal in the orthogonal baseband signal and a reference signal based on different interpolation factors, to generate the multi-phase signal.

Optionally, the phase processing circuit is further configured to generate one reference signal based on one baseband transmit signal in the orthogonal baseband signal, where the baseband transmit signal and the reference signal are in a differential form; or the phase processing circuit is further configured to obtain one reference signal from an alternating current ground of the radio frequency circuit.

Optionally, the orthogonal baseband signal includes n pairs of orthogonal baseband signals, where each pair of orthogonal baseband signals includes two mutually orthogonal baseband transmit signals. The phase processing circuit includes m interpolation networks. Any interpolation network is configured to receive at least two input signals, and perform interpolation on the at least two input signals based on an interpolation factor of each input signal in the at least two input signals, to obtain one analog signal, where n is a positive integer greater than or equal to 1, and the input signal is one of the baseband transmit signal and the reference signal. In this optional solution, when any interpolation network performs interpolation on at least two input signals based on an interpolation factor of each input signal in the at least two input signals, it is equivalent to generating an analog signal with a predetermined phase based on the at least two input signals with different phases, the predetermined phase is determined based on the phases and interpolation factors of the at least two input signals. When the phases and/or interpolation factors of the at least two input signals are different, analog signals with different predetermined phases may be output.

Optionally, the radio frequency circuit further includes a local oscillator circuit, configured to generate m local oscillator transmit signals, where a phase of each local oscillator transmit signal in the m local oscillator transmit signals one-to-one corresponds to a phase of each analog signal in the multi-phase signal. The frequency mixer is configured to separately perform frequency mixing on the multi-phase signal based on the m local oscillator transmit signals, to generate the radio frequency transmit signal. In this optional solution, the radio frequency circuit may generate, via the phase processing circuit based on a quantity and phases of local oscillator transmit signals received by a present frequency mixer, the multi-phase signal that one-to-one corresponds to the local oscillator transmit signal in quantity and phase. For example, the frequency mixer may receive eight local oscillator transmit signals whose phases are respectively 0 degrees, -45 degrees, -90 degrees, -135 degrees, -180 degrees, -225 degrees, -270 degrees, and -315 degrees. In this case, the phase processing circuit in the radio frequency circuit converts the received n pairs of orthogonal baseband transmit signals into eight analog signals whose phases are respectively 0 degrees, 45 degrees, 90 degrees, 135 degrees, 180 degrees, 225 degrees, 270 degrees, and 315 degrees, so that the local oscillator transmit signals received by the frequency mixer match the analog signals in phase and quantity.

Optionally, the analog signal $V_k$ satisfies the following formula: $V_k = \sum_{i=1}^{j} \alpha(i) * \theta_i$ , where $V_k$ indicates one analog signal obtained by a kth interpolation network in the m interpolation networks, $k \in [1, m]$, j indicates a total quantity of input signals received by the kth interpolation network, $\theta_i$ indicates an ith input signal received by the kth interpolation network, and $\alpha(i)$ indicates an interpolation factor corresponding to the ith input signal.

Optionally, the phase processing circuit further includes a phase converter. The phase converter is configured to generate one reference signal based on one baseband transmit signal, where the baseband transmit signal and the reference signal are in a differential form.

Optionally, the interpolation network includes one or more electronic components, the interpolation factor is determined based on an electrical parameter of the one or more electronic components, and the plurality of electronic components are coupled in one or both of the following manners: parallel connection and series connection.

Optionally, any interpolation network is further configured to generate one reference signal based on one baseband transmit signal, where the baseband transmit signal and the reference signal are in a differential form.

Optionally, all the m analog signals are single-ended signals. In this optional implementation, the m analog signals may be, for example, three analog signals. Phases of the three analog signals are respectively 0 degrees, 60 degrees, and 120 degrees.

Optionally, the m analog signals include x pairs of differential signals, where x is a positive integer greater than or equal to 3, and m=2*x. In this optional implementation, the m analog signals may be, for example, six analog signals. Phases of the six analog signals are respectively 0 degrees, 60 degrees, 120 degrees, 180 degrees, 240 degrees, and 300 degrees, where the analog signal with the phase of 0 degrees and the analog signal with the phase of 180 degrees are one pair of differential signals, the analog signal with the phase of 60 degrees and the analog signal with the phase of 240 degrees are one pair of differential signals, and the analog signal with the phase of 120 degrees and the analog signal with the phase of 300 degrees are one pair of differential signals.

Optionally, when m=6, a first interpolation network in the six interpolation networks receives a first input signal and a third input signal, performs interpolation on the first input signal based on a 1st interpolation factor, and performs interpolation on the third input signal based on a 2nd interpolation factor, to obtain a first analog signal, where the 1st interpolation factor is $\dfrac{\left(3+\sqrt[2]{3}\right)}{6}$ , and the 2nd interpolation factor is $\dfrac{\left(3-\sqrt[2]{3}\right)}{6}$ ; or a first interpolation network receives a first input signal and a fifth input signal, performs interpolation on the first input signal based on a 17th interpolation factor, and performs interpolation on the fifth input signal based on an 18th interpolation factor, to obtain a first analog signal, where the 17th interpolation factor is $\dfrac{1}{2}$ , and the 18th interpolation factor is $\dfrac{1}{2}$ . A second interpolation network in the six interpolation networks receives the first input signal, a second input signal, and the third input signal, performs interpolation on the first input signal based on a 3rd interpolation factor, performs interpolation on the second input signal based on a 4th interpolation factor, and performs interpolation on the third input signal based on a 5th interpolation factor, to obtain a second analog signal, where the 3rd interpolation factor is $\dfrac{\left(3+\sqrt[2]{3}\right)}{12}$ , the 4th interpolation factor is $\dfrac{1}{2}$ , and the 5th interpolation factor is $\dfrac{\left(3-\sqrt[2]{3}\right)}{12}$ . A third interpolation network in the six interpolation networks receives the first input signal, the second input signal, and the third input signal, performs interpolation on the first input signal based on a 6th interpolation factor, performs interpolation on the second input signal based on a 7th interpolation factor, and performs interpolation on the third input signal based on an 8th interpolation factor, to obtain a third analog signal, where the 6th interpolation factor is $\dfrac{\left(3-\sqrt[2]{3}\right)}{12}$ the 7th interpolation factor is $\dfrac{1}{2}$ , and the 8th interpolation factor is $\dfrac{\left(3+\sqrt[2]{3}\right)}{12}$ . A fourth interpolation network in the six interpolation networks receives the first input signal and the third input signal, performs interpolation on the first input signal based on a 9th interpolation factor, and performs interpolation on the third input signal based on a 10th interpolation factor, to obtain a fourth analog signal, where the 9th interpolation factor is $\frac{(3-\sqrt[2]{3})}{6}$, and the 10th interpolation factor is $\frac{(3+\sqrt[2]{3})}{6}$; or a fourth interpolation network receives the third input signal and the fifth input signal, performs interpolation on the first input signal based on a 19th interpolation factor, and performs interpolation on the fifth input signal based on a 20th interpolation factor, to obtain a fourth analog signal, where the 19th interpolation factor is $\frac{1}{2}$, and the 20th interpolation factor is $\frac{1}{2}$. A fifth interpolation network in the six interpolation networks receives the first input signal, the third input signal, and a fourth input signal, performs interpolation on the first input signal based on an 11th interpolation factor, performs interpolation on the third input signal based on a 12th interpolation factor, and performs interpolation on the fourth input signal based on a 13th interpolation factor, to obtain a fifth analog signal, where the 11th interpolation factor is $\frac{(3-\sqrt[2]{3})}{12}$, the 12th interpolation factor is $\frac{(3+\sqrt[2]{3})}{12}$, and the 13th interpolation factor is $\frac{1}{2}$. A sixth interpolation network in the six interpolation networks receives the first input signal, the third input signal, and the fourth input signal, performs interpolation on the first input signal based on a 14th interpolation factor, performs interpolation on the third input signal based on a 15th interpolation factor, and performs interpolation on the fourth input signal based on a 16th interpolation factor, to obtain a sixth analog signal, where the 14th interpolation factor is $\frac{(3+\sqrt[2]{3})}{12}$, the 15th interpolation factor is $\frac{(3-\sqrt[2]{3})}{12}$, and the 16th interpolation factor is $\frac{1}{2}$. The fifth input signal is a first reference signal obtained from the alternating current ground of the radio frequency circuit. When n=2, the two pairs of orthogonal baseband signals include a first pair of orthogonal baseband signals and a second pair of orthogonal baseband signals, the first input signal is a first baseband transmit signal in the first pair of orthogonal baseband signals, the second input signal is a second baseband transmit signal in the first pair of orthogonal baseband signals, the third input signal is a third baseband transmit signal in the second pair of orthogonal baseband signals, the first baseband transmit signal and the third baseband transmit signal are in a differential form, the fourth input signal is a fourth baseband transmit signal in the second pair of orthogonal baseband signals, and the second baseband transmit signal and the fourth baseband transmit signal are in a differential form; or when n=1, the first input signal is a fifth baseband transmit signal in the one pair of orthogonal baseband signals, the second input signal is a sixth baseband transmit signal in the one pair of orthogonal baseband signals, the third input signal is a second reference signal generated based on the fifth baseband transmit signal, the second reference signal and the fifth baseband transmit signal are in a differential form, the fourth input signal is a third reference signal generated based on the sixth baseband transmit signal, and the third reference signal and the sixth baseband transmit signal are in a differential form.

Optionally, when m=3, a first interpolation network in the three interpolation networks receives a first input signal and a third input signal, performs interpolation on the first input signal based on a 1st interpolation factor, and performs interpolation on the third input signal based on a 2nd interpolation factor, to obtain a first analog signal, where the 1st interpolation factor is $\frac{(3+\sqrt[2]{3})}{6}$, and the 2nd interpolation factor is $\frac{(3-\sqrt[2]{3})}{6}$, or a first interpolation network receives a first input signal and a fifth input signal, performs interpolation on the first input signal based on a 3rd interpolation factor, and performs interpolation on the fifth input signal based on a 4th interpolation factor, to obtain a first analog signal, where the 3rd interpolation factor is $2$, and the 4th interpolation factor is $\frac{1}{2}$. A second interpolation network in the three interpolation networks receives the first input signal, a second input signal, and the third input signal, performs interpolation on the first input signal based on a 5th interpolation factor, performs interpolation on the second input signal based on a 6th interpolation factor, and performs interpolation on the third input signal based on a 7th interpolation factor, to obtain a third analog signal, where the 5th interpolation factor is $\frac{(3-\sqrt[2]{3})}{12}$, the 6th interpolation factor is $\frac{1}{2}$, and the 7th interpolation factor is $\frac{(3+\sqrt[2]{3})}{12}$. A third interpolation network in the six interpolation networks receives the first input signal, the third input signal, and a fourth input signal, performs interpolation on the first input signal based on an 8th interpolation factor, performs interpolation on the third input signal based on a 9th interpolation factor, and performs interpolation on the fourth input signal based on a 10th interpolation factor, to obtain a fifth analog signal, where the 8th interpolation factor is $\frac{(3-\sqrt[2]{3})}{12}$, the 9th interpolation

factor is $\dfrac{(3+\sqrt[2]{3})}{12}$, and the 10th interpolation factor is $\dfrac{1}{2}$. The fifth input signal is a first reference signal obtained from the alternating current ground of the radio frequency circuit. When n=2, the two pairs of orthogonal baseband signals include a first pair of orthogonal baseband signals and a second pair of orthogonal baseband signals, the first input signal is a first baseband transmit signal in the first pair of orthogonal baseband signals, the second input signal is a second baseband transmit signal in the first pair of orthogonal baseband signals, the third input signal is a third baseband transmit signal in the second pair of orthogonal baseband signals, the first baseband transmit signal and the third baseband transmit signal are in a differential form, the fourth input signal is a fourth baseband transmit signal in the second pair of orthogonal baseband signals, and the second baseband transmit signal and the fourth baseband transmit signal are in a differential form; or when n=1, the first input signal is a fifth baseband transmit signal in the one pair of orthogonal baseband signals, the second input signal is a sixth baseband transmit signal in the one pair of orthogonal baseband signals, the third input signal is a second reference signal generated based on the fifth baseband transmit signal, the second reference signal and the fifth baseband transmit signal are in a differential form, the fourth input signal is a third reference signal generated based on the sixth baseband transmit signal, and the third reference signal and the sixth baseband transmit signal are in a differential form. Optionally, when m=8, a first interpolation network in the eight interpolation networks receives a first input signal and a third input signal, performs interpolation on the first input signal based on a 1st interpolation factor, and performs interpolation on the third input signal based on a 2nd interpolation factor, to obtain a first analog signal, where the 1st interpolation factor is $\dfrac{(2+\sqrt[2]{2})}{4}$, and the 2nd interpolation factor is $\dfrac{(2-\sqrt[2]{2})}{4}$; or a first interpolation network receives a first input signal and a fifth input signal, performs interpolation on the first input signal based on a 17th interpolation factor, and performs interpolation on the fifth input signal based on an 18th interpolation factor, to obtain a first analog signal, where the 17th interpolation factor is $\dfrac{\sqrt[2]{2}}{2}$, and the 18th interpolation factor is $\dfrac{(2-\sqrt[2]{2})}{2}$. A second interpolation network in the eight interpolation networks receives the first input signal and a second input signal, performs interpolation on the first input signal based on a 3rd interpolation factor, and performs interpolation on the second input signal based on a 4th interpolation factor, to obtain a second analog signal, where the 3rd interpolation factor is $\dfrac{1}{2}$, and the 4th interpolation factor is $\dfrac{1}{2}$. A third interpolation network in the eight interpolation networks receives the second input signal and a fourth input signal, performs interpolation on the second input signal based on a 5th interpolation factor, and performs interpolation on the fourth input signal based on a 6th interpolation factor, to obtain a third analog signal, where the 5th interpolation factor is $\dfrac{(2+\sqrt[2]{2})}{4}$, and the 6th interpolation factor is $\dfrac{(2-\sqrt[2]{2})}{4}$; or a third interpolation network receives the second input signal and the fifth input signal, performs interpolation on the second input signal based on a 19th interpolation factor, and performs interpolation on the fifth input signal based on a 20th interpolation factor, to obtain a third analog signal, where the 19th interpolation factor is $\dfrac{\sqrt[2]{2}}{2}$, and the 20th interpolation factor is $\dfrac{(2-\sqrt[2]{2})}{2}$. A fourth interpolation network in the eight interpolation networks receives the second input signal and the third input signal, performs interpolation on the second input signal based on a 7th interpolation factor, and performs interpolation on the third input signal based on an 8th interpolation factor, to obtain a fourth analog signal, where the 7th interpolation factor is $\dfrac{1}{2}$, and the 8th interpolation factor is $\dfrac{1}{2}$. A fifth interpolation network in the eight interpolation networks receives the first input signal and the third input signal, performs interpolation on the first input signal based on a 9th interpolation factor, and performs interpolation on the third input signal based on a 10th interpolation factor, to obtain a fifth analog signal, where the 9th interpolation factor is $\dfrac{(2-\sqrt[2]{2})}{4}$, and the 10th interpolation factor is $\dfrac{(2+\sqrt[2]{2})}{4}$; or a fifth interpolation network receives the third input signal and the fifth input signal, performs interpolation on the third input signal based on a 21st interpolation factor, and performs interpolation on the fifth input signal based on a 22nd interpolation factor, to obtain a fifth analog signal, where the 21st interpolation factor is $\dfrac{\sqrt[2]{2}}{2}$, and the 22nd interpolation factor is $\dfrac{(2-\sqrt[2]{2})}{2}$. A sixth interpolation network in the eight interpolation networks receives the third input signal and the fourth input signal, performs interpolation on the third input signal based on an 11th interpolation factor, and performs interpolation on the fourth input signal based on a 12th interpolation factor, to obtain a sixth analog signal, where the 11th interpolation factor is $\frac{1}{2}$, and the 12th interpolation factor is $\frac{1}{2}$. A seventh interpolation network in the eight interpolation networks receives the second input signal and the fourth input signal, performs interpolation on the second input signal based on a 13th interpolation factor, and performs interpolation on the fourth input signal based on a 14th interpolation factor, to obtain a seventh analog signal, where the 13th interpolation factor is $\frac{\left(2-\sqrt[2]{2}\right)}{4}$, and the 14th interpolation factor is $\frac{\left(2+\sqrt[2]{2}\right)}{4}$; or a seventh interpolation network receives the fourth input signal and the fifth input signal, performs interpolation on the fourth input signal based on a 23rd interpolation factor, and performs interpolation on the fifth input signal based on a 24th interpolation factor, to obtain a seventh analog signal, where the 23rd interpolation factor is $\frac{\sqrt[2]{2}}{2}$, and the 24th interpolation factor is $\frac{(2-\sqrt[2]{2})}{2}$. An eighth interpolation network in the eight interpolation networks receives the first input signal and the fourth input signal, performs interpolation on the first input signal based on a 15th interpolation factor, and performs interpolation on the fourth input signal based on a 16th interpolation factor, to obtain an eighth analog signal, where the 15th interpolation factor is $\frac{1}{2}$, and the 16th interpolation factor is $\frac{1}{2}$. The fifth input signal is a first reference signal obtained from the alternating current ground of the radio frequency circuit. When n=2, the two pairs of orthogonal baseband signals include a first pair of orthogonal baseband signals and a second pair of orthogonal baseband signals, the first input signal is a first baseband transmit signal in the first pair of orthogonal baseband signals, the second input signal is a second baseband transmit signal in the first pair of orthogonal baseband signals, the third input signal is a third baseband transmit signal in the second pair of orthogonal baseband signals, the first baseband transmit signal and the third baseband transmit signal are in a differential form, the fourth input signal is a fourth baseband transmit signal in the second pair of orthogonal baseband signals, and the second baseband transmit signal and the fourth baseband transmit signal are in a differential form; or when n=1, the first input signal is a fifth baseband transmit signal in the one pair of orthogonal baseband signals, the second input signal is a sixth baseband transmit signal in the one pair of orthogonal baseband signals, the third input signal is a second reference signal generated based on the fifth baseband transmit signal, the second reference signal and the fifth baseband transmit signal are in a differential form, the fourth input signal is a third reference signal generated based on the sixth baseband transmit signal, and the third reference signal and the sixth baseband transmit signal are in a differential form.

Optionally, when m=4, a first interpolation network in the four interpolation networks receives a first input signal and a third input signal, performs interpolation on the first input signal based on a 1st interpolation factor, and performs interpolation on the third input signal based on a 2nd interpolation factor, to obtain a first analog signal, where the 1st interpolation factor is $\frac{\left(2+\sqrt[2]{2}\right)}{4}$, and the 2nd interpolation factor is $\frac{\left(2-\sqrt[2]{2}\right)}{4}$; or a first interpolation network receives a first input signal and a fifth input signal, performs interpolation on the first input signal based on a 3rd interpolation factor, and performs interpolation on the fifth input signal based on a 4th interpolation factor, to obtain a first analog signal, where the 3rd interpolation factor is $\frac{\sqrt[2]{2}}{2}$, and the 4th interpolation factor is $\frac{(2-\sqrt[2]{2})}{2}$. A second interpolation network in the four interpolation networks receives the first input signal and a second input signal, performs interpolation on the first input signal based on a 5th interpolation factor, and performs interpolation on the second input signal based on a 6th interpolation factor, to obtain a second analog signal, where the 5th interpolation factor is $\frac{1}{2}$, and the 6th interpolation factor is $\frac{1}{2}$. A third interpolation network in the four interpolation networks receives the second input signal and a fourth input signal, performs interpolation on the second input signal based on a 7th interpolation factor, and performs interpolation on the fourth input signal based on an 8th interpolation factor, to obtain a third analog signal, where the 7th interpolation factor is $\frac{\left(2+\sqrt[2]{2}\right)}{4}$, and the 8th interpolation factor is $\frac{\left(2-\sqrt[2]{2}\right)}{4}$; or a third interpolation network receives the second input signal and the fifth input signal, performs interpolation on the second input signal based on a 9th interpolation factor, and performs interpolation on the fifth input signal based on a 10th interpolation factor, to obtain a third analog signal, where the 9th interpolation factor is $\frac{\sqrt[2]{2}}{2}$, and the 10th interpolation factor is $\frac{(2-\sqrt[2]{2})}{2}$. A fourth interpolation network in the four interpolation networks receives the second input signal and the third input signal, performs interpolation on the second input signal based on an 11th interpolation factor, and performs interpolation on the third input signal based on a 12th interpolation factor, to obtain a fourth analog signal, where the 11th interpolation factor is $\frac{1}{2}$, and the 12th interpolation factor is $\frac{1}{2}$. The fifth input signal is a first reference signal obtained from the alternating current ground of the radio frequency circuit. When n=2, the two pairs of orthogonal baseband signals include a first pair of orthogonal baseband signals and a second pair of orthogonal baseband signals, the first input signal is a first baseband transmit signal in the first pair of orthogonal baseband signals, the second input signal is a second baseband transmit signal in the first pair of orthogonal baseband signals, the third input signal is a third baseband transmit signal in the second pair of orthogonal baseband signals, the first baseband transmit signal and the third baseband transmit signal are in a differential form, the fourth input signal is a fourth baseband transmit signal in the second pair of orthogonal baseband signals, and the second baseband transmit signal and the fourth baseband transmit signal are in a differential form; or when n=1, the first input signal is a fifth baseband transmit signal in the one pair of orthogonal baseband signals, the second input signal is a sixth baseband transmit signal in the one pair of orthogonal baseband signals, the third input signal is a second reference signal generated based on the fifth baseband transmit signal, the second reference signal and the fifth baseband transmit signal are in a differential form, the fourth input signal is a third reference signal generated based on the sixth baseband transmit signal, and the third reference signal and the sixth baseband transmit signal are in a differential form.

Optionally, the phase processing circuit includes 2n input ends, and the 2n input ends respectively receive the n pairs of orthogonal baseband signals. When a quantity of input signals received by at least one interpolation network included in the m interpolation networks is different from a quantity of input signals received by another interpolation network, the phase processing circuit further includes at least one dummy unit dummy, the at least one dummy unit is coupled to any two input ends in the 2n input ends, the dummy unit includes one or more electronic components coupled between the any two input ends, and the plurality of electronic components are coupled between the any two input ends in one or both of the following manners: parallel connection and series connection.

For example, when n=2, the two pairs of orthogonal baseband signals are in a differential form, one pair of orthogonal baseband signals in the two pairs of orthogonal baseband signals includes a first signal and a second signal, and the other pair of orthogonal baseband signals in the two pairs of orthogonal baseband signals includes a third signal and a fourth signal. A first input end in the 2n input ends is configured to receive the first signal, a second input end in the 2n input ends is configured to receive the second signal, a third input end in the 2n input ends is configured to receive the third signal, and a fourth input end in the 2n input ends is configured to receive the fourth signal. The first interpolation network in the six interpolation networks includes a fourth electronic component coupled between the first input end in the 2n input ends and an output end, and a fifth electronic component coupled between the third input end in the 2n input ends and the output end. A ratio of an electrical parameter of the fourth electronic component to an electrical parameter of the fifth electronic component is

$$\frac{(\sqrt[2]{3}-1)}{2} : \frac{(\sqrt[2]{3}+1)}{2}.$$

For example, the second interpolation network in the six interpolation networks includes a first electronic component coupled between the first input end in the 2n input ends and an output end, a second electronic component coupled between the second input end in the 2n input ends and the output end, and a third electronic component coupled between the third input end in the 2n input ends and the output end. A ratio of an electrical parameter of the first electronic component to an electrical parameter of the second electronic component to an electrical parameter of the third electronic component is

$$\left(\sqrt[2]{3} - 1\right) : \left(\frac{1}{\sqrt[2]{3}}\right) : \left(\sqrt[2]{3} + 1\right).$$

For example, the third interpolation network in the six interpolation networks includes a third electronic component coupled between the first input end in the 2n input ends and an output end, a second electronic component coupled between the second input end in the 2n input ends and the output end, and a first electronic component coupled between the third input end in the 2n input ends and the output end. A ratio of an electrical parameter of the first electronic component to an electrical parameter of the second electronic component to an electrical parameter of the third electronic component is

$$\left(\sqrt[2]{3} - 1\right) : \left(\frac{1}{\sqrt[2]{3}}\right) : \left(\sqrt[2]{3} + 1\right).$$

For example, the fourth interpolation network in the six interpolation networks includes a fifth electronic component coupled between the first input end in the 2n input ends and an output end, and a fourth electronic component coupled between the third input end in the 2n input ends and the output end. A ratio of an electrical parameter of the fourth electronic component to an electrical parameter of the fifth electronic component is

$$\frac{(\sqrt[2]{3}-1)}{2} : \frac{(\sqrt[2]{3}+1)}{2}.$$

For example, the fifth interpolation network in the six interpolation networks includes a third electronic component coupled between the first input end in the 2n input ends and an output end, a first electronic component coupled between the third input end in the 2n input ends and the output end, and a second electronic component coupled between the fourth input end in the 2n input ends and the output end. A ratio of an electrical parameter of the first electronic component to an electrical parameter of the second electronic component to an electrical parameter of the third electronic component is $\left(\sqrt[2]{3}-1\right):\left(\frac{1}{\sqrt[2]{3}}\right):\left(\sqrt[2]{3}+1\right)$ .

For example, the sixth interpolation network in the six interpolation networks includes a first electronic component coupled between the first input end in the 2n input ends and an output end, a third electronic component coupled between the third input end in the 2n input ends and the output end, and a second electronic component coupled between the fourth input end in the 2n input ends and the output end. A ratio of an electrical parameter of the first electronic component to an electrical parameter of the second electronic component to an electrical parameter of the third electronic component is $\left(\sqrt[2]{3}-1\right):\left(\frac{1}{\sqrt[2]{3}}\right):\left(\sqrt[2]{3}+1\right)$ .

For example, when m=6, the phase processing circuit further includes a first dummy unit dummy, and the first dummy unit dummy is coupled between the second input end and the fourth input end in the 2n input ends. The first dummy unit includes a fourth electronic component and a fifth electronic component, the fourth electronic component in the first dummy unit is close to the second input end, the fourth electronic component and the fifth electronic component are connected in series, and a ratio of an electrical parameter of the fourth electronic component to an electrical parameter of the fifth electronic component is $\frac{\left(\sqrt[2]{3}-1\right)}{2}:\frac{\left(\sqrt[2]{3}+1\right)}{2}$ .

For example, when m=6, the phase processing circuit further includes a second dummy unit dummy, and the second dummy unit dummy is coupled between the second input end and the fourth input end in the 2n input ends. The second dummy unit includes a fifth electronic component and a fourth electronic component, the fifth electronic component in the second dummy unit is close to the second input end, the fifth electronic component and the fourth electronic component are connected in series, and a ratio of an electrical parameter of the fourth electronic component to an electrical parameter of the fifth electronic component is $\frac{\left(\sqrt[2]{3}-1\right)}{2}:\frac{\left(\sqrt[2]{3}+1\right)}{2}$ .

For example, the first electronic component includes a first electronic sub-component and a second electronic sub-component that are connected in series between a first end and a second end of the first electronic component, and a third electronic sub-component that is connected in parallel to a series structure of the first electronic sub-component and the second electronic sub-component. A ratio of an electrical parameter of the first electronic sub-component to an electrical parameter of the second electronic sub-component to an electrical parameter of the third electronic sub-component is $\sqrt[2]{3}:1:1$ .

For example, the second electronic component includes a first electronic sub-component, a second electronic sub-component, and a third electronic sub-component that are connected in parallel between a first end and a second end of the second electronic component. A ratio of an electrical parameter of the first electronic sub-component to an electrical parameter of the second electronic sub-component to an electrical parameter of the third electronic sub-component is $\sqrt[2]{3}:\sqrt[2]{3}:\sqrt[2]{3}$ .

For example, the third electronic component includes a first electronic sub-component, a second electronic sub-component, a third electronic sub-component, and a fourth electronic sub-component that are connected in series between a first end and a second end of the third electronic component, and a fifth electronic sub-component that is connected in parallel to a series structure of the first electronic sub-component and the second electronic sub-component. A ratio of an electrical parameter of the first electronic sub-component to an electrical parameter of the second electronic sub-component to an electrical parameter of the third electronic sub-component to an electrical parameter of the fourth electronic sub-component to an electrical parameter of the fifth electronic sub-component is $\sqrt[2]{3}:1:1:1:1$ .

For example, the fourth electronic component includes a first electronic sub-component and a second electronic sub-component that are connected in series between a first end and a second end of the fourth electronic component, and a third electronic sub-component that is connected in parallel to a series structure of the first electronic sub-component and the second electronic sub-component. The fourth electronic component further includes a fourth electronic sub-component and a fifth electronic sub-component that are connected in series between the first end and the second end of the fourth electronic component, and a sixth electronic sub-component that is connected in parallel to a series structure of the fourth electronic sub-component and the fifth electronic sub-component. A ratio of an electrical parameter of the first electronic sub-component to an electrical parameter of the second electronic sub-component to an electrical parameter of the third electronic sub-component is $\sqrt[2]{3}:1:1$ . The electrical parameter of the first electronic sub-component is the same as an electrical parameter of the fourth electronic sub-component, the electrical parameter of the second electronic sub-component is the same as an electrical parameter of the fifth electronic sub-component, and the electrical parameter of the third electronic sub-component is the same as an electrical parameter of the sixth electronic sub-component.

For example, the fifth electronic component includes a first electronic sub-component, a second electronic sub-component, a third electronic sub-component, and a fourth electronic sub-component that are connected in series between a first end and a second end of the fifth electronic component, and a fifth electronic sub-component that is connected in parallel to a series structure of the first electronic sub-component and the second electronic sub-component. The fifth electronic component further includes a sixth electronic sub-component, a seventh electronic sub-component, an eighth electronic sub-component, and a ninth electronic sub-component that are connected in series between the first end and the second end of the fifth electronic component, and a tenth electronic sub-component that is connected in parallel to a series structure of the sixth electronic sub-component and the seventh electronic sub-component. A ratio of an electrical parameter of the first electronic sub-component to an electrical parameter of the second electronic sub-component to an electrical parameter of the third electronic sub-component to an electrical parameter of the fourth electronic sub-component to an electrical parameter of the fifth electronic sub-component is $\sqrt[2]{3} : 1 : 1 : 1 : 1$. The electrical parameter of the first electronic sub-component is the same as an electrical parameter of the sixth electronic sub-component, the electrical parameter of the second electronic sub-component is the same as an electrical parameter of the seventh electronic sub-component, the electrical parameter of the third electronic sub-component is the same as an electrical parameter of the eighth electronic sub-component, the electrical parameter of the fourth electronic sub-component is the same as an electrical parameter of the ninth electronic sub-component, and the electrical parameter of the fifth electronic sub-component is the same as an electrical parameter of the tenth electronic sub-component.

For example, when n=2, the two pairs of orthogonal baseband signals are in a differential form, one pair of orthogonal baseband signals in the two pairs of orthogonal baseband signals includes a first signal and a second signal, and the other pair of orthogonal baseband signals in the two pairs of orthogonal baseband signals includes a third signal and a fourth signal. A first input end in the 2n input ends is configured to receive the first signal, a second input end in the 2n input ends is configured to receive the second signal, a third input end in the 2n input ends is configured to receive the third signal, and a fourth input end in the 2n input ends is configured to receive the fourth signal. The first interpolation network in the eight interpolation networks includes a sixth electronic component coupled between the first input end in the 2n input ends and an output end, and a seventh electronic component coupled between the third input end in the 2n input ends and the output end. A ratio of an electrical parameter of the sixth electronic component to an electrical parameter of the seventh electronic component is

$$\left(2 - \sqrt[2]{2}\right) : \left(2 + \sqrt[2]{2}\right)$$

For example, the second interpolation network in the eight interpolation networks includes an eighth electronic component coupled between the first input end in the 2n input ends and an output end, and a ninth electronic component coupled between the second input end in the 2n input ends and the output end. A ratio of an electrical parameter of the eighth electronic component to an electrical parameter of the ninth electronic component is 1: 1.

For example, the third interpolation network in the eight interpolation networks includes a sixth electronic component coupled between the second input end in the 2n input ends and an output end, and a seventh electronic component coupled between the fourth input end in the 2n input ends and the output end. A ratio of an electrical parameter of the sixth electronic component to an electrical parameter of the seventh electronic component is $\left(2 - \sqrt[2]{2}\right) : \left(2 + \sqrt[2]{2}\right)$.

For example, the fourth interpolation network in the eight interpolation networks includes an eighth electronic component coupled between the second input end in the 2n input ends and an output end, and a ninth electronic component coupled between the third input end in the 2n input ends and the output end. A ratio of an electrical parameter of the eighth electronic component to an electrical parameter of the ninth electronic component is 1: 1.

For example, the fifth interpolation network in the eight interpolation networks includes a seventh electronic component coupled between the first input end in the 2n input ends and an output end, and a sixth electronic component coupled between the third input end in the 2n input ends and the output end. A ratio of an electrical parameter of the sixth electronic component to an electrical parameter of the seventh electronic component is

$$\left(2 - \sqrt[2]{2}\right) : \left(2 + \sqrt[2]{2}\right)$$

For example, the sixth interpolation network in the eight interpolation networks includes an eighth electronic component coupled between the third input end in the 2n input ends and an output end, and a ninth electronic component coupled between the fourth input end in the 2n input ends and the output end. A ratio of an electrical parameter of the eighth electronic component to an electrical parameter of the ninth electronic component is 1: 1.

For example, the seventh interpolation network in the eight interpolation networks includes a seventh electronic component coupled between the second input end in the 2n input ends and an output end, and a sixth electronic component coupled between the fourth input end in the 2n input ends and the output end. A ratio of an electrical parameter of the sixth electronic component to an electrical parameter of the seventh electronic component is $\left(2 - \sqrt[2]{2}\right):\left(2 + \sqrt[2]{2}\right)$.

For example, the eighth interpolation network in the eight interpolation networks includes an eighth electronic component coupled between the first input end in the 2n input ends and an output end, and a ninth electronic component coupled between the fourth input end in the 2n input ends and the output end. A ratio of an electrical parameter of the eighth electronic component to an electrical parameter of the ninth electronic component is 1: 1.

For example, the sixth electronic component includes a first electronic sub-component and a second electronic sub-component that are connected in parallel between a first end and a second end of the sixth electronic component. A ratio of an electrical parameter of the first electronic sub-component to an electrical parameter of the second electronic sub-component is $1 : \sqrt[2]{2}$.

For example, the seventh electronic component includes a first electronic sub-component, a second electronic sub-component, and a third electronic sub-component that are connected in series between a first end and a second end of the sixth electronic component, and a fourth electronic sub-component that is connected in parallel to the first electronic sub-component. A ratio of an electrical parameter of the first electronic sub-component to an electrical parameter of the second electronic sub-component to an electrical parameter of the third electronic sub-component to an electrical parameter of the fourth electronic sub-component is $1 : \sqrt[2]{2} : \sqrt[2]{2} : \sqrt[2]{2}$.

Optionally, the electronic component includes one or more of the following: a capacitor, a resistor, and an inductor. When the electronic component is a resistor, the electrical parameter is a resistance value; when the electronic component is a capacitor, the electrical parameter is a capacitance value; or when the electronic component is an inductor, the electrical parameter is an inductance value.

According to a second aspect, a radio frequency circuit is provided. The radio frequency circuit includes a frequency mixer and a phase processing circuit coupled to the frequency mixer. The frequency mixer is configured to perform frequency mixing on a radio frequency receive signal to generate m baseband receive signals, where a phase difference between any two baseband receive signals that have adjacent phases is fixed, and m is a positive integer greater than or equal to 3. The phase processing circuit is configured to receive the m baseband receive signals, and generate an orthogonal analog signal based on the m baseband receive signals. In the radio frequency circuit, when signal processing of a baseband processing circuit in a communication device is processing two pairs of differential orthogonal baseband signals, the phase processing circuit in the radio frequency circuit in the present communication device may generate two pairs of differential orthogonal analog signals based on the m baseband receive signals. The two pairs of differential orthogonal analog signals include a first pair of orthogonal analog signals and a second pair of orthogonal analog signals. The first pair of orthogonal analog signals includes an analog signal $V_{k=1}$ with a phase of 0 degrees and an analog signal $V_{k=2}$ with a phase of 90 degrees. The second pair of orthogonal analog signals includes an analog signal $V_{k=3}$ with a phase of 180 degrees and an analog signal $V_{k=4}$ with a phase of 270 degrees. In addition, the first pair of orthogonal analog signals and the second pair of orthogonal analog signals are in a differential form, and the orthogonal analog signal is an orthogonal baseband signal at a receive end. When signal processing of a baseband processing circuit in a communication device is processing one pair of differential orthogonal baseband signals, the phase processing circuit in the radio frequency circuit in the present communication device may generate one pair of orthogonal analog signals based on the m baseband receive signals. The one pair of orthogonal analog signals includes an analog signal $V_{k=1}$ with a phase of 0 degrees and an analog signal $V_{k=2}$ with a phase of 90 degrees. The orthogonal analog signal is an orthogonal baseband signal at a receive end. Therefore, transmitting the orthogonal analog signal to the baseband processing circuit by the radio frequency circuit may match signal processing of the baseband processing circuit. This improves quality of the received signal, and improves communication quality.

Optionally, the phase processing circuit is specifically configured to perform interpolation on at least two of the baseband receive signal and a reference signal based on different interpolation factors, to generate n pairs of orthogonal analog signals, where one pair of orthogonal analog signals includes two mutually orthogonal analog signals, and n is a positive integer greater than or equal to 1.

Optionally, the phase processing circuit is further configured to generate one reference signal based on one baseband receive signal, where the baseband receive signal and the reference signal are in a differential form; or the phase processing circuit is further configured to obtain one reference signal from an alternating current ground of the radio frequency circuit.

Optionally, the phase processing circuit includes 2n interpolation networks. Any interpolation network is configured to receive at least two input signals, and perform interpolation on the at least two input signals based on an interpolation factor of each input signal in the at least two input signals, to obtain one analog signal, where the input signal is one of the baseband receive signal and the reference signal.

Optionally, the radio frequency circuit further includes a local oscillator circuit, configured to generate m local oscillator receive signals, where m radio frequency receive signals are included, and a phase of any local oscillator receive signal in the m local oscillator receive signals one-to-one corresponds to a phase of each radio frequency receive signal in m radio frequency receive signals. The frequency mixer is configured to perform frequency mixing on the m radio frequency receive signals based on the m local oscillator receive signals respectively, to generate the m baseband receive signals, where m is a positive integer, and m $\geq$ 6.

Optionally, the analog signal $V_k$ satisfies the following formula: $V_k = \sum_{i=1}^{j} \alpha(i) * \theta_i$ , where $V_k$ indicates one analog signal obtained by a kth interpolation network in the 2n interpolation networks, k $\in$ [1, 2n], j indicates a total quantity of input signals received by the kth interpolation network, $\theta_i$ indicates an ith input signal received by the kth interpolation network, i<n, and $\alpha$(i) indicates an interpolation factor corresponding to the ith input signal.

According to a third aspect, a communication device is provided. The communication device includes a baseband processing circuit and the radio frequency circuit according to either the first aspect or the second aspect. The baseband processing circuit is coupled to the radio frequency circuit. The baseband processing circuit is configured to generate an orthogonal baseband signal based on transmit information, and/or the baseband processing circuit is configured to obtain reception information based on an orthogonal analog signal.

According to a fourth aspect, a baseband signal processing method is provided. The baseband signal processing method includes: receiving an orthogonal baseband signal, and generating a multi-phase signal based on the orthogonal baseband signal, where the multi-phase signal includes m analog signals, a phase difference between any two of the analog signals having adjacent phases is fixed, and m is a positive integer greater than or equal to 3; and performing frequency mixing on the multi-phase signal to generate a radio frequency transmit signal.

Optionally, the receiving an orthogonal baseband signal, and generating a multi-phase signal based on the orthogonal baseband signal specifically includes: receiving at least two input signals, and performing interpolation on the at least two input signals based on an interpolation factor of each input signal in the at least two input signals, to obtain one analog signal, where the input signal is one of a baseband transmit signal in the orthogonal baseband signal and a reference signal.

Optionally, the method further includes: generating one reference signal based on one baseband receive signal, where the baseband receive signal and the reference signal are in a differential form; or obtaining one reference signal from an alternating current ground.

Optionally, the analog signal $V_k$ satisfies the following formula: $V_k = \sum_{i=1}^{j} \alpha(i) * \theta_i$ , where $V_k$ indicates a kth analog signal in the m analog signals, j indicates a total quantity of input signals received when the kth analog signal is generated, $\theta_i$ indicates an ith input signal in the at least two input signals, i<2n, and $\alpha$(i) indicates an interpolation factor corresponding to the ith input signal.

According to a fifth aspect, a baseband signal processing method is provided. The baseband signal processing method includes: performing frequency mixing on a radio frequency receive signal to generate m baseband receive signals, where a phase difference between any two baseband receive signals that have adjacent phases is fixed, and m is a positive integer greater than or equal to 3; and receiving the m baseband receive signals, and generating an orthogonal analog signal based on the m baseband receive signals.

Optionally, the orthogonal analog signal includes n pairs of orthogonal analog signals, where one pair of orthogonal analog signals includes two mutually orthogonal analog signals, and n is a positive integer greater than or equal to 1. The receiving the m baseband receive signals, and generating an orthogonal analog signal based on the m baseband receive signals specifically includes: receiving at least two input signals, and performing interpolation on the at least two input signals based on an interpolation factor of each input signal in the at least two input signals, to obtain one analog signal. The input signal is one of the baseband receive signal and a reference signal.

Optionally, the method further includes: generating one reference signal based on one baseband receive signal, where the baseband receive signal and the reference signal are in a differential form; or obtaining one reference signal from an alternating current ground.

Optionally, the analog signal $V_k$ satisfies the following formula: $V_k = \sum_{i=1}^{j} \alpha(i) * \theta_i$ , where $V_k$ indicates a kth analog signal in the n pairs of orthogonal analog signals, j indicates a total quantity of input signals received when the kth analog signal is generated, $\theta_i$ indicates an ith input signal in the at least two input signals, i<2n, and $\alpha$(i) indicates an interpolation factor corresponding to the ith input signal.

For technical effect brought by any one of the possible implementations of the third aspect and the fourth aspect, refer to the technical effect brought by the implementations of the first aspect, and for technical effect brought by any one of the possible implementations of the third aspect and the fifth aspect, refer to the technical effect brought by the implementations of the second aspect. Details are not described herein again.

**BRIEF DESCRIPTION OF DRAWINGS**

FIG. 1 is a diagram of a structure of a communication device according to an embodiment of this application;

FIG. 2 is a diagram of a structure of a radio frequency circuit in a communication device according to an embodiment of this application;

FIG. 3 is a diagram of a structure of a baseband processing circuit in a communication device according to an embodiment of this application;

FIG. 4 is a diagram of a CIM3 generation mechanism according to an embodiment of this application;

FIG. 5 is a diagram of a structure of a radio frequency circuit according to another embodiment of this application;

FIG. 6 is a diagram of a structure of a radio frequency circuit according to another embodiment of this application;

FIG. 7 is a diagram 1 of frequency mixing effect according to another embodiment of this application;

FIG. 8 is a diagram 2 of frequency mixing effect according to another embodiment of this application;

FIG. 9 is a diagram 1 of frequency mixing effect according to another embodiment of this application;

FIG. 10 is a diagram of a structure of an interpolation network in a phase processing circuit according to another embodiment of this application;

FIG. 11 is a diagram of a structure of an interpolation network in a phase processing circuit according to another embodiment of this application;

FIG. 12 is a diagram of a structure of a phase processing circuit according to another embodiment of this application;

FIG. 13 is a diagram of a structure of an interpolation network in a phase processing circuit according to another embodiment of this application;

FIG. 14 is a diagram of a structure of an interpolation network in a phase processing circuit according to another embodiment of this application;

FIG. 15 is a diagram of a structure of a phase processing circuit according to another embodiment of this application;

FIG. 16 is a diagram of a structure of an electronic component in a phase processing circuit according to another embodiment of this application;

FIG. 17 is a diagram of a structure of an electronic component in a phase processing circuit according to another embodiment of this application;

FIG. 18 is a diagram of a structure of a phase processing circuit according to another embodiment of this application;

FIG. 19 is a diagram of a structure of a resistor in a phase processing circuit according to another embodiment of this application;

FIG. 20 is a diagram of a structure of a phase processing circuit according to another embodiment of this application;

FIG. 21 is a diagram of a structure of an interpolation network in a phase processing circuit according to another embodiment of this application;

FIG. 22 is a diagram of a structure of an interpolation network in a phase processing circuit according to another embodiment of this application;

FIG. 23 is a diagram of a structure of an interpolation network in a phase processing circuit according to another embodiment of this application;

FIG. 24 is a diagram of a structure of an interpolation network in a phase processing circuit according to another embodiment of this application;

FIG. 25 is a diagram of a structure of a phase processing circuit according to another embodiment of this application;

FIG. 26 is a diagram of a structure of an interpolation network in a phase processing circuit according to another embodiment of this application;

FIG. 27 is a diagram of a structure of an electronic component in a phase processing circuit according to another embodiment of this application;

FIG. 28 is a diagram of a structure of an electronic component in a phase processing circuit according to another embodiment of this application;

FIG. 29 is a diagram of a structure of a phase processing circuit according to another embodiment of this application;

FIG. 30 is a diagram of a structure of a resistor in a phase processing circuit according to another embodiment of this application;

FIG. 31 is a diagram of a structure of a phase processing circuit according to another embodiment of this application;

FIG. 32 is a diagram of a structure of an interpolation network in a phase processing circuit according to another embodiment of this application;

FIG. 33 is a diagram of a structure of a phase processing circuit according to another embodiment of this application;

FIG. 34 is a diagram of a structure of a phase processing circuit according to another embodiment of this application;

FIG. 35 is a diagram of a structure of an interpolation network in a phase processing circuit according to another embodiment of this application;

FIG. 36 is a diagram of a structure of an interpolation network in a phase processing circuit according to another embodiment of this application;

FIG. 37 is a diagram of a structure of a phase processing circuit according to another embodiment of this application;

FIG. 38 is a diagram of a structure of a phase processing circuit according to another embodiment of this application;

FIG. 39 is a diagram of a structure of a phase processing circuit according to another embodiment of this application;

FIG. 40 is a diagram of a structure of a phase processing circuit according to another embodiment of this application;

FIG. 41 is a diagram of a structure of a phase processing circuit according to another embodiment of this application; and

FIG. 42 is a diagram of a structure of a radio frequency circuit according to another embodiment of this application.

## DESCRIPTION OF EMBODIMENTS

The following describes technical solutions in embodiments of this application with reference to accompanying drawings in embodiments of this application. It is clear that the described embodiments are merely a part rather than all of embodiments of this application.

The following describes technical terms in embodiments of this application.

Resource element (resource element, RE): A resource element RE is a smallest radio resource unit in long term evolution (long term evolution, LTE), and is a minimum granularity of a physical layer resource. One resource element RE can transmit a maximum of six data bits. In addition, LTE has two-dimensional resources: a frequency domain resource and a time domain resource. The resource element RE transmits one time domain symbol (for example, one time domain symbol in an orthogonal frequency division multiplexing (orthogonal frequency division multiplexing, OFDM) technology) via one frequency domain subcarrier.

To facilitate radio resource management in LTE, management and scheduling are usually performed on a basis of resource blocks (resource block, RB) in LTE, where RB is one level higher than the resource element RE. One resource block RB may occupy H consecutive subcarriers in frequency domain, and occupy Z consecutive symbols in time domain. For example, in LTE, H may be equal to 12, and Z may be equal to 7. It indicates that seven consecutive time domain symbols are transmitted via 12 consecutive subcarriers. In new radio or new air interface (new radio, NR), S may be equal to 12, and Z may be equal to 14. It indicates that 14 consecutive time domain symbols are transmitted via 12 consecutive subcarriers.

Harmonic distortion (harmonic distortion, HD) is harmful interference caused by various times of frequencies of an original signal frequency. A 2nd harmonic of LO of the original signal frequency is referred to as second-order harmonic distortion (HD2), a 3rd harmonic of LO of the original signal frequency is referred to as third-order harmonic distortion (HD3), and the rest may be deduced by analogy. In a radio frequency circuit, harmonic distortion occurs in both a baseband signal and a local oscillator signal. A 2nd harmonic of LO of a baseband signal frequency is second-order harmonic distortion of the baseband signal, and a 3rd harmonic of LO of a baseband signal frequency is third-order harmonic distortion of the baseband signal. A 2nd harmonic of LO of a local oscillator signal frequency is second-order harmonic distortion of the local oscillator signal, and a 3rd harmonic of LO of the local oscillator signal frequency is third-order harmonic distortion of the local oscillator signal.

A guard band may be understood as a gap between frequency bands. Because the gap has no transmission function, the gap is referred to as the guard band. The guard band is a concept in frequency division multiplexing. Herein, frequency division multiplexing is a technology in which a bandwidth of a communication channel is divided into a plurality of subchannels of different frequency bands, and the subchannels obtained through division each can transmit one signal in parallel. In addition, frequency division multiplexing is implemented by modulating all to-be-transmitted signals to different carrier frequencies, and a distance wide enough (that is, a guard band) is reserved between the carrier frequencies, to prevent adjacent frequency bands from overlapping with each other. In this way, signals of different frequencies do not interfere with each other during transmission. In addition, the signals can be easily separated from each other at a receive end via a band-pass filter, and a separation state before frequency division multiplexing is performed is restored. A most important cause for ensuring no interference is that a guard gap is reserved between carrier frequencies. The guard gap is the guard band.

In embodiments of this application, a transistor may be a metal-oxide-semiconductor field-effect transistor (metal-oxide-semiconductor field effect transistor, MOSFET), and the transistor is classified into two types: an N (negative, negative)-type transistor and a P (positive, positive)-type transistor. The transistor includes a source (source), a drain (drain), and a gate (gate). Turn-on or turn-off of the transistor may be controlled by controlling a level input to the gate of the transistor.

Frequency mixer: A frequency mixer includes two input ends and one output end, the two input ends of the frequency mixer respectively receive two input signals, and the output end of the frequency mixer outputs an output signal, where a frequency of the output signal is equal to a sum of frequencies of the two input signals, a difference between frequencies of the two input signals, or another combination.

Unless otherwise defined, all technical terms used in this specification have same meanings as those commonly known to a person of ordinary skill in the art. In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof means any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" do not limit a quantity or an execution sequence.

In addition, in embodiments of this application, position terms such as "top" and "bottom" are defined relative to positions of components in the accompanying drawings. It should be understood that these directional terms are relative concepts used for relative description and clarification, and may correspondingly change with the positions of the components in the accompanying drawings.

It should be noted that, in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

Embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and various future communication systems.

Embodiments of this application may be applied to the LTE system, a 5th generation (5th generation, 5G) mobile communication system (also referred to as NR), a subsequently evolved communication system, and the like. This is not limited in embodiments of this application.

A communication device in embodiments of this application may be a mobile phone (mobile phone), a tablet computer, a computer with a wireless transceiver function, a virtual reality (virtual reality, VR) terminal, an augmented reality (augmented reality, AR) terminal, a terminal in industrial control (industrial control), a vehicle-mounted terminal, a terminal in self driving (self driving), a terminal in assisted driving, a terminal in telemedicine (remote medical), a terminal in a smart grid (smart grid), a terminal in transportation safety (transportation safety), a terminal in a smart city (smart city), a terminal in a smart home (smart home), or the like. A specific form of the communication device is not particularly limited in embodiments of this application.

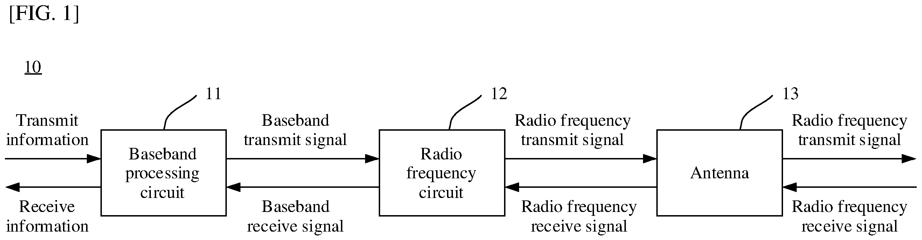

For example, refer to FIG. 1. An embodiment of this application provides a diagram of a structure of a communication device 10. The communication device 10 includes a baseband processing circuit 11 and a radio frequency circuit 12. The baseband processing circuit 11 is coupled to the radio frequency circuit 12. When the communication device 10 transmits a signal, the communication device 10 generates transmit information, the baseband processing circuit 11 is configured to generate a baseband transmit signal based on the transmit information, and transmit the baseband transmit signal to the radio frequency circuit 12, and the radio frequency circuit 12 is configured to generate a radio frequency transmit signal based on the baseband transmit signal, and transmit the radio frequency transmit signal. When the communication device 10 receives a signal, the communication device 10 receives a radio frequency receive signal, the radio frequency circuit 12 is configured to generate a baseband receive signal based on the radio frequency receive signal, and transmit the baseband receive signal to the baseband processing circuit 11, and the baseband processing circuit 11 is configured to obtain reception information based on the baseband receive signal.

More specifically, refer to FIG. 1. The communication device 10 further includes an antenna 13, and the antenna 13 is coupled to the radio frequency circuit 12. The antenna 13 is configured to transmit the radio frequency transmit signal generated by the radio frequency circuit 12, and/or the antenna 13 is configured to receive the radio frequency receive signal, and transmit the radio frequency receive signal to the radio frequency circuit 12.

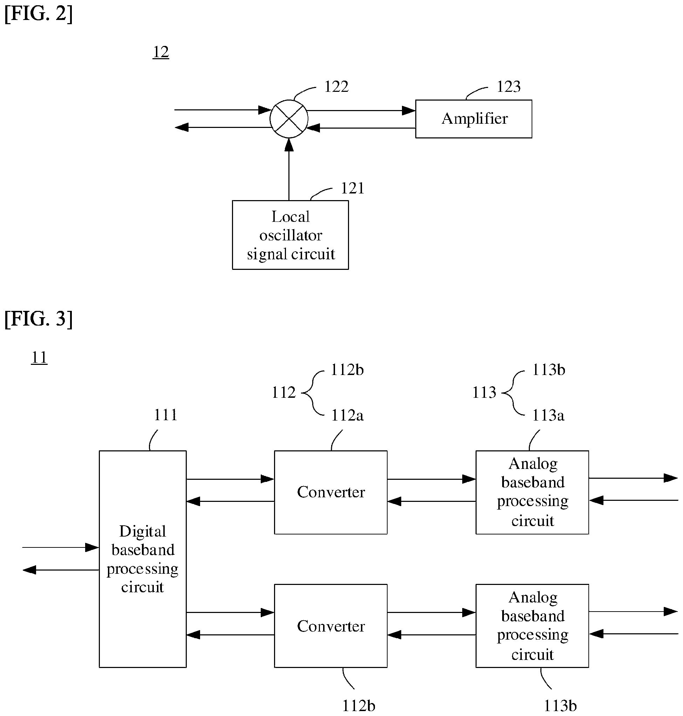

FIG. 2 is a diagram of a structure of the radio frequency circuit 12 disposed in a communication device according to an embodiment of this application. The radio frequency circuit 12 includes a local oscillator signal circuit 121, a frequency mixer 122, and an amplifier 123.

Specifically, when the communication device transmits a signal, the baseband processing circuit 11 coupled to the radio frequency circuit 12 transmits a generated baseband transmit signal to the frequency mixer 122 in the radio frequency circuit 12. The local oscillator signal circuit 121 is configured to generate a local oscillator transmit signal, and transmit the local oscillator transmit signal to the frequency mixer 122. The frequency mixer 122 is configured to perform frequency mixing on the baseband transmit signal and the local oscillator transmit signal, to generate a radio frequency transmit signal, and transmit the radio frequency transmit signal to the amplifier 123. The amplifier 123 is configured to amplify the radio frequency transmit signal to reach required transmit power, and transmit an amplified radio frequency transmit signal to the antenna 13 coupled to the radio frequency circuit 12.

It should be noted that the radio frequency circuit 12 may include more or fewer functional circuits. This is not limited in embodiments of this application.

FIG. 3 is a diagram of a structure of the baseband processing circuit 11 in the communication device 10 according to an embodiment of this application. The baseband processing circuit 11 includes a digital baseband processing circuit 111, a converter 112 (including a converter 112a and a converter 112b), an analog baseband processing circuit 113 (including an analog baseband processing circuit 113a and an analog baseband processing circuit 113b), and the like. The digital baseband processing circuit 111 is coupled to the converter 112, and the converter 112 is coupled to the analog baseband processing circuit 113. When the communication device 10 needs to transmit a signal, the communication device 10 generates transmit information, the transmit information first passes through the digital baseband processing circuit 111, and the digital baseband processing circuit 111 is configured to process the transmit information, to generate a digital baseband transmit signal. The digital baseband transmit signal includes an in-phase/quadrature (in-phase/quadrature, IQ) component, where the I component of the digital baseband transmit signal and the Q component of the digital baseband transmit signal are also referred to as digital baseband transmit IQ signals, and a phase difference between the I component of the digital baseband transmit signal and the Q component of the digital baseband transmit signal is 90 degrees. Then, the I component of the digital baseband transmit signal is converted into an I component of an analog baseband transmit signal via the converter 112a, and the Q component of the digital baseband transmit signal is converted into a Q component of the analog baseband transmit signal via the converter 112b, where the converter 112 is a digital-to-analog converter. Further, the I component of the analog baseband transmit signal passes through the analog baseband processing circuit 113a, and the analog baseband processing circuit 113a performs processing such as filtering and gain adjustment on the I component of the analog baseband transmit signal. The Q component of the analog baseband transmit signal passes through the analog baseband processing circuit 113b, and the analog baseband processing circuit 113b performs processing such as filtering and gain adjustment on the Q component of the analog baseband transmit signal. An I component of the analog baseband transmit signal and a Q component of the analog baseband transmit signal that are obtained through processing by the analog baseband processing circuit 113 are collectively referred to as a baseband transmit signal, and the baseband transmit signal is transmitted to the radio frequency circuit 12 coupled to the baseband processing circuit 11.

It should be noted that the baseband processing circuit 11 may include more or fewer functional circuits. This is not limited in embodiments of this application.

In some embodiments, because the baseband transmit signal generated by the baseband processing circuit 11 includes the I component of the analog baseband transmit signal and the Q component of the analog baseband transmit signal, an IQ generator further needs to be disposed in the radio frequency circuit 12 in this case. The IQ generator is disposed between the local oscillator signal circuit 121 and the frequency mixer 122. The local oscillator signal circuit 121 generates a local oscillator transmit signal and transmits the local oscillator transmit signal to the IQ generator. The IQ generator generates an I component of the local oscillator transmit signal and a Q component of the local oscillator transmit signal, and the IQ generator transmits the I component of the local oscillator transmit signal and the Q component of the local oscillator transmit signal to the frequency mixer 122. In this case, the frequency mixer 122 performs frequency mixing on the I component of the local oscillator transmit signal and the I component of the analog baseband transmit signal to generate an I component of a radio frequency transmit signal, and performs frequency mixing on the Q component of the local oscillator transmit signal and the Q component of the analog baseband transmit signal to generate a Q component of the radio frequency transmit signal. The I component of the radio frequency transmit signal and the Q component of the radio frequency transmit signal are collectively referred to as the radio frequency transmit signal.

A radio frequency transmit signal generated by the radio frequency circuit 12 includes a wanted signal that actually needs to be transmitted. For example, a center frequency of the baseband transmit signal may be denoted as fbb, and a center frequency of the local oscillator transmit signal may be denoted as flo. In this case, in the radio frequency transmit signal, a signal whose center frequency is flo+fbb is the wanted signal. However, because the radio frequency circuit 12 includes some non-linear components, the transmitted radio frequency transmit signal further includes some interference signals with a deviation. The interference signal includes harmonic distortion of a baseband transmit signal, for example, second-order harmonic distortion of the baseband transmit signal (whose center frequency is denoted as 2fbb) and third-order harmonic distortion of the baseband transmit signal (whose center frequency is denoted as 3fbb), further includes harmonic distortion of a local oscillator transmit signal, for example, second-order harmonic distortion of the local oscillator transmit signal (whose center frequency is denoted as 2flo) and third-order harmonic distortion of the local oscillator transmit signal (whose center frequency is denoted as 3flo), and further includes a harmonic intermodulation distortion term generated by intermodulation of the harmonic distortion of the baseband transmit signal and the harmonic distortion of the local oscillator transmit signal.

Specifically, the baseband processing circuit 11 generates a baseband transmit signal, simultaneously generates harmonic distortion of the baseband transmit signal, and transmits the baseband transmit signal and the harmonic distortion of the baseband transmit signal to the frequency mixer 122. The local oscillator signal circuit 121 generates a local oscillator transmit signal, and simultaneously generates harmonic distortion of the local oscillator transmit signal. The local oscillator signal circuit 121 transmits the local oscillator transmit signal and the harmonic distortion of the local oscillator transmit signal to the frequency mixer 122. The frequency mixer 122 performs frequency mixing on the baseband transmit signal and the local oscillator transmit signal to generate a wanted signal, the frequency mixer 122 also performs frequency mixing on the baseband transmit signal and the harmonic distortion of the local oscillator transmit signal to generate a first-type distortion signal, the frequency mixer 122 also performs frequency mixing on the harmonic distortion of the baseband transmit signal and the local oscillator transmit signal to generate a second-type distortion signal, the frequency mixer 122 also performs frequency mixing on the harmonic distortion of the baseband transmit signal and the harmonic distortion of the local oscillator transmit signal to generate a third-type distortion signal, and the frequency mixer 122 transmits the wanted signal, the first-type distortion signal, the second-type distortion signal, and the third-type distortion signal to the amplifier 123. The amplifier 123 amplifies the wanted signal, and the amplifier 123 also performs intermodulation on any two signals in the wanted signal, the first-type distortion signal, the second-type distortion signal, and the third-type distortion signal to generate a harmonic intermodulation distortion term.

Counter third-order intermodulation distortion products (counter 3rd-order intermodulation products, CIM3) in the harmonic intermodulation distortion term have high energy and great harm.

For example, in the radio frequency transmit signal transmitted by the radio frequency circuit 12, when the signal whose center frequency is flo+fbb is the wanted signal, a center frequency of a CIM3 is flo-3fbb.

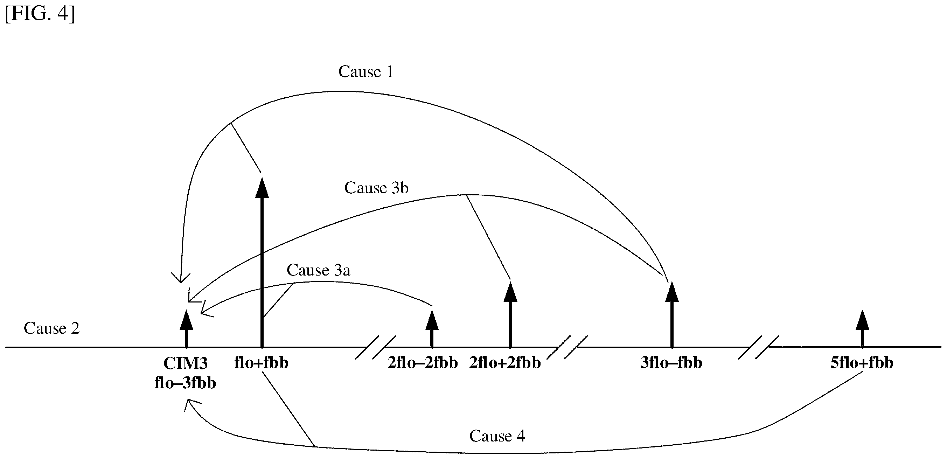

FIG. 4 is a diagram of a CIM3 generation mechanism according to an embodiment of this application. A CIM3 may be generated due to the following four causes: Cause 1: A frequency mixer performs frequency mixing on a baseband transmit signal and third-order harmonic distortion of a local oscillator transmit signal to generate a first distortion signal, and a center frequency of the first distortion signal is 3flo-fbb. In addition, the frequency mixer also normally generates a wanted signal. If a center frequency of the wanted signal is flo+fbb, an amplifier performs third-order intermodulation on the first distortion signal and the wanted signal, where specific third-order intermodulation is (3flo-fbb)-2*(flo+fbb). That is, the CIM3 whose center frequency is flo-3fbb is generated through third-order intermodulation of the first distortion signal and the wanted signal. Cause 2: The frequency mixer performs frequency mixing on third-order harmonic distortion of the baseband transmit signal and the local oscillator transmit signal to generate a second distortion signal, and a center frequency of the second distortion signal is flo-3fbb, that is, the CIM3. Cause 3a: The frequency mixer performs frequency mixing on second-order harmonic distortion of the baseband transmit signal and second-order harmonic distortion of the local oscillator transmit signal to generate a third distortion signal, and a center frequency of the third distortion signal is 2flo-2fbb. In addition, the frequency mixer also normally generates a wanted signal. If a center frequency of the wanted signal is flo+fbb, the amplifier performs second-order intermodulation on the third distortion signal and the wanted signal, where specific second-order intermodulation is (2flo-2fbb)-(flo+fbb). That is, the CIM3 whose center frequency is flo-3fbb is generated through second-order intermodulation of the third distortion signal and the wanted signal. Cause 3b: The frequency mixer performs frequency mixing on the second-order harmonic distortion of the baseband transmit signal and the second-order harmonic distortion of the local oscillator transmit signal to generate a fourth distortion signal, and a center frequency of the fourth distortion signal is 2flo+2fbb. In addition, the frequency mixer also generates the first distortion signal. If the center frequency of the first distortion signal is 3flo-fbb, the amplifier performs second-order intermodulation on the fourth distortion signal and the first distortion signal, where specific second-order intermodulation is (3flo-fbb)-(2flo+2fbb). That is, the CIM3 whose center frequency is flo-3fbb is generated through second-order intermodulation of the fourth distortion signal and the first distortion signal. Cause 4: The frequency mixer performs frequency mixing on the baseband transmit signal and fifth-order harmonic distortion of the local oscillator transmit signal to generate a fifth distortion signal, and a center frequency of the fifth distortion signal is 5flo+fbb. In addition, the frequency mixer also normally generates a wanted signal. If a center frequency of the wanted signal is flo+fbb, the amplifier performs fifth-order intermodulation on the fifth distortion signal and the wanted signal, where specific fifth-order intermodulation is (5flo+fbb)-4*(flo+fbb). That is, the CIM3 whose center frequency is flo-3fbb is generated through fifth-order intermodulation of the fifth distortion signal and the wanted signal.

In the foregoing cause 2 of generating the CIM3, because nonlinearity of the baseband transmit signal is low, the third-order harmonic distortion of the baseband transmit signal is also small. Therefore, the cause 2 is not a main factor of causing the CIM3. In the foregoing cause 3a and cause 3b of generating the CIM3, a present baseband processing circuit is usually designed in a differential form. To be specific, the baseband transmit signal includes both an I component of the baseband transmit signal and a Q component of the baseband transmit signal, and also includes an I- component of the baseband transmit signal and a Q-component of the baseband transmit signal, where a phase difference between the I component of the baseband transmit signal and the I- component of the baseband transmit signal is 180 degrees, and a phase difference between the Q component of the baseband transmit signal and the Q-component of the baseband transmit signal is 180 degrees. The differential design can reduce generation of an even-order harmonic of the baseband transmit signal (that is, a second-order harmonic of the baseband transmit signal). Therefore, the cause 3a and the cause 3b are not main factors of causing the CIM3. In the foregoing cause 5, because a fifth-order intermodulation amount is small, the cause 4 is not a main factor of causing the CIM3. In this case, the foregoing cause 1 is the main factor of causing the CIM3.

For example, in a scenario in which a communication device transmits a single resource block RB or a few resource blocks RBs, the CIM3 may fall within a receive band of the communication device or a guard band defined by a communication system in which the communication device is located. This may severely affect signal receiving quality of another user or system, and further affects communication quality of the another user or system.

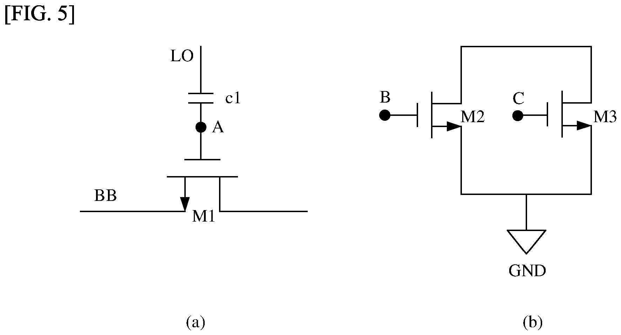

Because the CIM3 has great impact on communication quality, the CIM3 needs to be reduced. (a) in FIG. 5 is a diagram of a structure of a bias circuit of a frequency mixer according to an embodiment of this application. The bias circuit of the frequency mixer includes a transistor M1 and a capacitor c1. A first end of the capacitor c1 receives a local oscillator transmit signal LO generated by a local oscillator signal circuit, a second end of the capacitor c1 is coupled to a control end of the transistor M1 through a connection point A, a first end of the transistor M1 is configured to receive a baseband transmit signal BB, and a second end of the transistor M1 is coupled to the frequency mixer. In this case, nonlinearity of the transistor M1 may be adjusted by adjusting a voltage magnitude of the connection point A. When the nonlinearity of the transistor M1 changes, amplitudes and phases of various types of distortion signals (for example, the first-type distortion signal, the second-type distortion signal, and the third-type distortion signal) generated by the frequency mixer may be affected, to reduce the CIM3.

(b) in FIG. 5 is a diagram of a structure of a bias circuit of an amplifier according to an embodiment of this application. The bias circuit of the amplifier includes a transistor M2 and a transistor M3. A source of the transistor M2 and a source of the transistor M3 are coupled to the amplifier, a drain of the transistor M2 and a drain of the transistor M3 are coupled to the ground, a gate of the transistor M2 receives a first voltage through a connection point B, and a gate of the transistor M3 receives a second voltage through a connection point C. In this case, nonlinearity of the transistor M2 and nonlinearity of the transistor M3 may be adjusted by adjusting the first voltage and the second voltage. When the nonlinearity of the transistor M2 and the nonlinearity of the transistor M3 change, different bias voltages may be output to the amplifier, and the bias voltage affects a working status of the amplifier. When the working status of the amplifier changes, an amplitude and a phase of the CIM3 generated through harmonic intermodulation of the amplifier are reduced, to reduce the CIM3.

Because the transistor M1, the transistor M2, and the transistor M3 are greatly affected by a process corner in a process of manufacturing the transistor, the transistor may differ under a same bias voltage at different process corners. In addition, in a running process of the communication device, a temperature generated by heat emitted from the communication device also affects performance of the transistor. Therefore, due to effect of the process corner and the temperature, (a) in FIG. 5 and (b) in FIG. 5 have limited effect on reducing the CIM3.

In some other embodiments, a 60-degree phase rotator is disposed in the local oscillator signal circuit, so that the local oscillator signal circuit generates two local oscillator transmit signals with a same amplitude and a 60-degree phase difference as a delay. In this case, superimposition of the two local oscillator transmit signals at an output end of the frequency mixer reduces third-order harmonic distortion of the local oscillator transmit signal, to reduce the CIM3. In this embodiment, waveforms of the two local oscillator transmit signals overlap, and the two overlapping local oscillator transmit signals affect a working status of a radio frequency circuit. Consequently, effect of reducing the CIM3 is weakened.

The foregoing describes the case in which the communication quality is affected when the communication device transmits the signal. Therefore, when the communication device receives a signal, the communication quality is still affected.

Refer to FIG. 2. When the communication device receives the signal, the antenna 13 coupled to the radio frequency circuit 12 transmits a received radio frequency receive signal to the amplifier 123. The amplifier 123 is configured to amplify the received radio frequency receive signal, and transmit an amplified radio frequency receive signal to the frequency mixer 122. The local oscillator signal circuit 121 is configured to generate a local oscillator receive signal, and transmit the local oscillator receive signal to the frequency mixer 122. The frequency mixer 122 is configured to perform frequency mixing on the radio frequency receive signal and the local oscillator receive signal to generate a baseband receive signal, and transmit the baseband receive signal to the baseband processing circuit 11 coupled to the radio frequency circuit 12.

When the communication device receives the signal, the local oscillator signal circuit 121 generates the local oscillator receive signal that usually includes a plurality of local oscillator receive signals, for example, six local oscillator receive signals or eight local oscillator receive signals. In this case, when the frequency mixer 122 is configured to perform frequency mixing on the radio frequency receive signal and the plurality of local oscillator receive signals, a plurality of baseband receive signals are generated. However, the baseband processing circuit 11 coupled to the radio frequency circuit 12 can process only one pair or two pairs of orthogonal baseband signals. For example, the baseband processing circuit 11 shown in FIG. 3 can process one pair of orthogonal baseband signals. The one pair of orthogonal baseband signals includes the baseband receive signal including an I component of the baseband receive signal and a Q component of the baseband receive signal. In this case, the orthogonal baseband signals are analog signals, and are also referred to as an I component of an analog baseband receive signal and a Q component of the analog baseband receive signal. The baseband processing circuit 11 processes the I component of the analog baseband receive signal and the Q component of the analog baseband receive signal to obtain reception information. The I component of the analog baseband receive signal passes through the analog baseband processing circuit 113a, and the analog baseband processing circuit 113a performs processing such as filtering and gain adjustment on the I component of the analog baseband receive signal. The Q component of the analog baseband receive signal passes through the analog baseband processing circuit 113b, and the analog baseband processing circuit 113b performs processing such as filtering and gain adjustment on the Q component of the analog baseband receive signal. Then, the I component of the analog baseband receive signal is converted into an I component of a digital baseband receive signal via the converter 112a, and the Q component of the analog baseband receive signal is converted into a Q component of the digital baseband receive signal via the converter 112b, where the converter 112 is an analog-to-digital converter. Further, the digital baseband processing circuit 111 is configured to process the I component of the digital baseband receive signal and the Q component of the digital baseband receive signal to obtain reception information.

Therefore, in the communication device, the plurality of baseband receive signals generated through frequency mixing on the radio frequency receive signal and the plurality of local oscillator receive signals need to be converted into one pair or two pairs of orthogonal baseband signals.

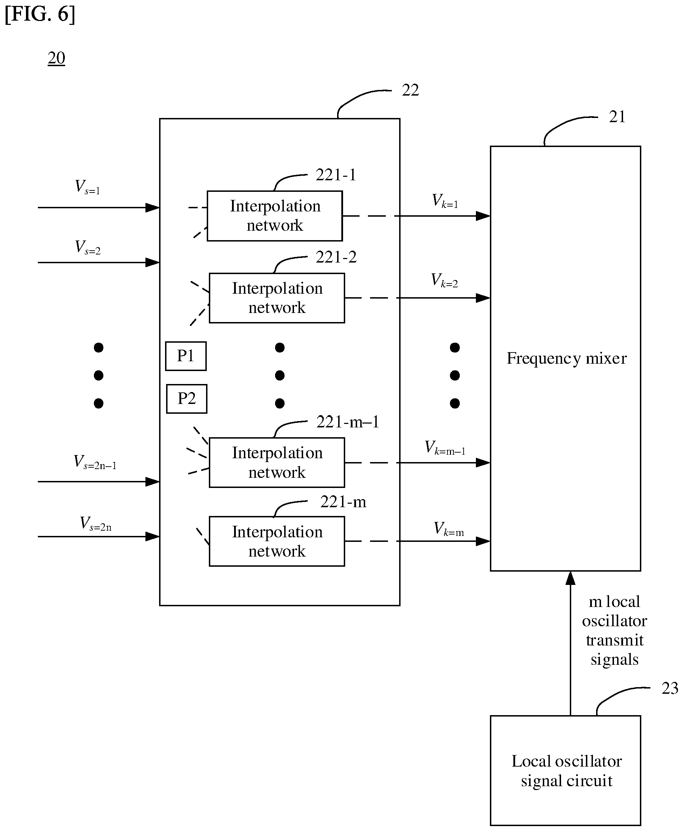

Therefore, an embodiment of this application provides a radio frequency circuit. The radio frequency circuit can improve communication quality. As shown in FIG. 6, the radio frequency circuit 20 includes a frequency mixer 21 and a phase processing circuit 22 coupled to the frequency mixer 21. The phase processing circuit 22 is configured to receive an orthogonal baseband signal, and generate a multi-phase signal based on the orthogonal baseband signal, where the multi-phase signal includes m analog signals, a phase difference between any two of the analog signals having adjacent phases is fixed, and m is a positive integer greater than or equal to 3. The frequency mixer 21 is configured to perform frequency mixing on the multi-phase signal to generate a radio frequency transmit signal. Specifically, the orthogonal baseband signal received by the phase processing circuit 22 may be one pair of orthogonal baseband signals. The one pair of orthogonal baseband signals includes a baseband transmit signal $V_{s=1}$ and a baseband transmit signal $V_{s=2}$, where the baseband transmit signal $V_{s=1}$ and the baseband transmit signal $V_{s=2}$ are orthogonal to each other, and a phase difference between the baseband transmit signal $V_{s=1}$ and the baseband transmit signal $V_{s=2}$ is 90 degrees. For example, a phase of the baseband transmit signal $V_{s=1}$ may be specifically 0 degrees, and the baseband transmit signal $V_{s=1}$ is also referred to as an I component of the baseband transmit signal; a phase of the baseband transmit signal $V_{s=2}$ may be specifically 90 degrees, and the baseband transmit signal $V_{s=2}$ is also referred to as a Q component of the baseband transmit signal. Alternatively, the orthogonal baseband signal received by the phase processing circuit 22 may be n pairs of orthogonal baseband signals. A quantity of orthogonal baseband signals is not limited in embodiments of this application.

The phase processing circuit 22 may generate the multi-phase signal based on the received orthogonal baseband signal, where the multi-phase signal includes the m analog signals, and the phase difference between any two of the analog signals having adjacent phases is fixed. Specifically, all the m analog signals may be single-ended signals. For example, the m analog signals are specifically three analog signals, phases of the three analog signals are respectively 0 degrees, 60 degrees, and 120 degrees, and a phase difference between any two of the analog signals having adjacent phases is fixed at 60 degrees. Alternatively, the m analog signals may include x pairs of differential signals, where x is a positive integer greater than or equal to 3, and m=2*x. For example, the m analog signals are specifically eight analog signals, phases of the eight analog signals are respectively 0 degrees, 45 degrees, 90 degrees, 135 degrees, 180 degrees, 225 degrees, 270 degrees, and 315 degrees, and a phase difference between any two of the analog signals having adjacent phases is fixed at 45 degrees.

The phase processing circuit 22 is specifically configured to perform interpolation on at least two of a baseband transmit signal in the orthogonal baseband signal and a reference signal based on different interpolation factors, to generate the multi-phase signal. For example, the phase processing circuit 22 may receive one pair of orthogonal baseband signals. The one pair of orthogonal baseband signals includes a baseband transmit signal $V_{s=1}$ and a baseband transmit signal $V_{s=2}$. There are also two reference signals in the phase processing circuit 22, and the two reference signals include a reference signal $V_{r=1}$ and a reference signal $V_{r=2}$. The phase processing circuit 22 performs interpolation on the baseband transmit signal $V_{s=1}$ based on an interpolation factor $\alpha 1$, and performs interpolation on the baseband transmit signal $V_{s=2}$ based on an interpolation factor $\alpha 2$, to generate a first analog signal; or the phase processing circuit 22 performs interpolation on the baseband transmit signal $V_{s=1}$ based on an interpolation factor $\alpha 3$, performs interpolation on the baseband transmit signal $V_{s=2}$ based on an interpolation factor $\alpha 4$, and performs inter-

polation on the reference signal $V_{r=1}$ based on an interpolation factor $\alpha5$, to generate a second analog signal; or the phase processing circuit 22 performs interpolation on the reference signal $V_{r=1}$ based on an interpolation factor $\alpha6$, and performs interpolation on the reference signal $V_{r=2}$ based on an interpolation factor $\alpha7$, to generate a third analog signal; or the rest may be deduced by analogy. The phase processing circuit 22 performs interpolation on at least two of the baseband transmit signal in the orthogonal baseband signal and the reference signal based on different interpolation factors, to obtain a different analog signal. In this case, the phase processing circuit 22 performs interpolation on at least two of the baseband transmit signal in the orthogonal baseband signal and the reference signal for a plurality of times based on a plurality of different interpolation factors, to obtain a plurality of different analog signals. The plurality of different analog signals are multi-phase signals.

For example, there may be one or more reference signals in the phase processing circuit 22. Specifically, the phase processing circuit 22 may be configured to generate one reference signal based on one baseband transmit signal in the orthogonal baseband signal, where the baseband transmit signal and the reference signal are in a differential form. For example, the phase processing circuit 22 is configured to generate the reference signal $V_{r=1}$ based on the baseband transmit signal $V_{s=1}$, where the baseband transmit signal $V_{s=1}$ and the reference signal $V_{r=1}$ are in a differential form, and when a phase of the baseband transmit signal $V_{s=1}$ is 0 degrees, a phase of the reference signal $V_{r=1}$ is 180 degrees. For another example, the phase processing circuit 22 is configured to generate the reference signal $V_{r=2}$ based on the baseband transmit signal $V_{s=2}$, where the baseband transmit signal $V_{s=2}$ and the reference signal $V_{r=2}$ are in a differential form, and when a phase of the baseband transmit signal $V_{s=2}$ is 90 degrees, a phase of the reference signal $V_{r=2}$ is 270 degrees.

Alternatively, the phase processing circuit 22 may be configured to obtain one reference signal from an alternating current ground of the radio frequency circuit 20. For example, the phase processing circuit 22 obtains a reference signal $V_{r=3}$ from the alternating current ground of the radio frequency circuit 20. The alternating current ground of the radio frequency circuit 20 may be a floating port that is not connected to any content. The phase processing circuit 22 transmits the generated multi-phase signal to the frequency mixer 21, and the frequency mixer 21 performs frequency mixing on the multi-phase signal to generate the radio frequency transmit signal. For example, the phase processing circuit 22 may generate, based on at least two of the received baseband transmit signal and the reference signal, eight baseband transmit signals whose phases are respectively 0 degrees, 45 degrees, 90 degrees, 135 degrees, 180 degrees, 225 degrees, 270 degrees, and 315 degrees, so that the frequency mixer performs frequency mixing on the eight baseband transmit signals. A phase of a wanted signal whose center frequency is flo+fbb and that is generated through frequency mixing is not affected, and a first distortion signal whose center frequency is 3flo-fbb and that is generated through frequency mixing is exactly four pairs of first distortion signals in a differential form. Superimposition of the first distortion signals in the differential form is equivalent to elimination of the first distortion signals. When the first distortion signals are eliminated, it may be considered that the radio frequency circuit has better CIM3 suppression effect, to improve communication quality.

Specifically, refer to FIG. 6. An output end of the phase processing circuit 22 is coupled to the frequency mixer 21. It indicates that the present radio frequency circuit 20 is configured to transmit the radio frequency transmit signal. The orthogonal baseband signal includes n pairs of orthogonal baseband signals, each pair of orthogonal baseband signals includes two mutually orthogonal baseband transmit signals, and n is a positive integer greater than or equal to 1. The phase processing circuit 22 includes m interpolation networks. Any one of the m interpolation networks is configured to receive at least two input signals, and perform interpolation on the at least two input signals based on an interpolation factor of each input signal in the at least two input signals, to obtain one analog signal. The input signal is one of the baseband transmit signal and the reference signal.

For example, the phase processing circuit 22 shown in FIG. 6 further includes m output ends, one interpolation network is coupled to one output end in the m output ends, and any interpolation network transmits one analog signal to the frequency mixer 21 from one output end to which the interpolation network is coupled.

The phase processing circuit 22 shown in FIG. 6 further includes 2n input ends, where the 2n input ends are configured to receive the orthogonal baseband signal. Specifically, each input end in the 2n input ends receives one baseband transmit signal in the n pairs of orthogonal baseband signals.

When an input signal received by any interpolation network is a baseband transmit signal, as shown in FIG. 6, the any interpolation network may be coupled to an input end of the phase processing circuit 22, to receive the baseband transmit signal received by the input end of the phase processing circuit 22. For example, the n pairs of orthogonal baseband signals shown in FIG. 6 include a first pair of orthogonal baseband signals, ..., and an nth pair of orthogonal baseband signals. Specifically, the first pair of orthogonal baseband signals includes a baseband transmit signal $V_{s=1}$ and a baseband transmit signal $V_{s=2}$, where the baseband transmit signal $V_{s=1}$ and the baseband transmit signal $V_{s=2}$ are orthogonal to each other, and a phase difference between the baseband transmit signal $V_{s=1}$ and the baseband transmit signal $V_{s=2}$ is 90 degrees. For example, a phase of the baseband transmit signal $V_{s=1}$ may be specifically 0 degrees, and the baseband transmit signal $V_{s=1}$ is also referred to as an I component of the baseband transmit signal; a phase of the baseband transmit signal $V_{s=2}$ may be specifically 90 degrees, and the baseband transmit signal $V_{s=2}$ is also referred to as a Q component of the baseband transmit signal. The nth pair of orthogonal baseband signals includes a baseband transmit signal $V_{s=2n-1}$ and a baseband transmit signal $V_{s=2n}$, where the baseband transmit signal $V_{s=2n-1}$ and the baseband transmit signal $V_{s=2n}$ are orthogonal to each other, and a phase difference between the baseband transmit signal $V_{s=2n-1}$ and the baseband transmit signal $V_{s=2n}$ is 90 degrees. For example, a phase of the baseband transmit signal $V_{s=2n-1}$ may be specifically 180 degrees, and the baseband transmit signal $V_{s=2n-1}$ is also referred to as an I- component of the baseband transmit signal. A phase of the baseband transmit signal $V_{s=2n}$ may be specifically 270 degrees, and the baseband transmit signal $V_{s=2n}$ is also referred to as a Q-component of the baseband transmit signal. It can be learned that the specific phases of the four baseband transmit signals in the two pairs of orthogonal baseband signals are different from each other. It should be noted that phases of two baseband transmit signals in one pair of orthogonal baseband signals are not limited in embodiments of this application. However, in embodiments of this application, phases of four baseband transmit signals in any two pairs of orthogonal baseband signals need to be different from each other.

When an input signal received by any interpolation network is a reference signal, as shown in FIG. 6, the phase processing circuit 22 further includes a phase converter, and the any interpolation network may be coupled to the phase converter, to receive the reference signal generated by the phase converter. The phase converter shown in FIG. 6 includes a phase converter P1 and a phase converter P2. Any interpolation network may be coupled to an output end of the phase converter P1 of the phase processing circuit 22, to receive a reference signal $V_{r=1}$ generated by the phase converter P1. For example, an input end of the phase converter P1 is coupled to one input end of the phase processing circuit 22, the phase converter P1 may receive a baseband transmit signal $V_{s=1}$ from the input end of the phase processing circuit 22, and the phase converter P1 is configured to generate a reference signal $V_{r=1}$ based on the baseband transmit signal $V_{s=1}$, where the baseband transmit signal $V_{s=1}$ and the reference signal $V_{r=1}$ are in a differential form. When a phase of the baseband transmit signal $V_{s=1}$ is 0 degrees, a phase of the reference signal $V_{r=1}$ is 180 degrees.

In some other embodiments, any interpolation network may be alternatively coupled to an output end of a phase converter P2 of the phase processing circuit 22, to receive a reference signal $V_{r=2}$. For example, the phase processing circuit 22 further includes the phase converter P2, an input end of the phase converter P2 is coupled to one input end of the phase processing circuit 22, the phase converter P2 may receive the baseband transmit signal $V_{s=2}$ from the input end of the phase processing circuit, and the phase converter P2 is configured to generate a reference signal $V_{r=2}$ based on the baseband transmit signal $V_{s=2}$, where the baseband transmit signal $V_{s=2}$ and the reference signal $V_{r=2}$ are in a differential form. When a phase of the baseband transmit signal $V_{s=2}$ is 90 degrees, a phase of the reference signal $V_{r=2}$ is 270 degrees.

When an input signal received by any interpolation network is a reference signal, as shown in FIG. 6, the any interpolation network may be alternatively coupled to the alternating current ground of the radio frequency circuit 20, to receive a reference signal $V_{r=3}$ transmitted by the alternating current ground of the radio frequency circuit 20.

Specifically, refer to FIG. 6. The m interpolation networks include an interpolation network 221-1, an interpolation network 221-2, ..., an interpolation network 221-m-1, and an interpolation network 221-m. The interpolation network 221-1 is coupled to a 1st output end of the phase processing circuit 22, and the interpolation network 221-1 receives two input signals and outputs an analog signal $V_{k=1}$. The interpolation network 221-2 is coupled to a 2nd output end of the phase processing circuit 22, and the interpolation network 221-2 receives two input signals and outputs an analog signal $V_{k=2}$. The interpolation network 221-m-1 is coupled to an (m-1)th output end of the phase processing circuit 22, and the interpolation network 221-m-1 receives three input signals and outputs an analog signal $V_{k=m-1}$. The interpolation network 221-m is coupled to an mth output end of the phase processing circuit 22, and the interpolation network 221-m receives three input signals and outputs an analog signal $V_{k=m}$.

For example, refer to FIG. 6. The interpolation network 221-1 is used as an example. The interpolation network 221-1 receives the two input signals, where one input signal received by the interpolation network 221-1 is specifically the baseband transmit signal $V_{s=1}$, the other input signal received by the interpolation network 221-1 is specifically the baseband transmit signal $V_{s=2}$, and the phase of the baseband transmit signal $V_{s=1}$ is different from the phase of the baseband transmit signal $V_{s=2}$. Therefore, when the interpolation network 221-1 performs interpolation on the baseband transmit signal $V_{s=1}$ based on one interpolation factor, and performs interpolation on the baseband transmit signal $V_{s=2}$ based on one interpolation factor, the interpolation network 221-1 may obtain one analog signal $V_{k=1}$, and output, to the frequency mixer 21, the analog signal $V_{k=1}$ from the 1st output end that is of the phase processing circuit 22 and to which the interpolation network 221-1 is coupled, where a phase of the analog signal $V_{k=1}$ is a predetermined phase.

More specifically, when the phase of the baseband transmit signal $V_{s=1}$ is specifically 0 degrees, and the phase of the baseband transmit signal $V_{s=2}$ is specifically 90 degrees, the interpolation network 221-1 performs interpolation on the baseband transmit signal $V_{s=1}$

based on an interpolation factor whose value is $\frac{1}{2}$, and performs interpolation on the baseband transmit signal $V_{s=2}$ based on an interpolation factor whose value is $\frac{1}{2}$, to obtain an analog signal $V_{k=1}$. In other words, the interpolation factor corresponding to the baseband transmit signal $V_{s=1}$ received by the interpolation network 221-1 is $\frac{1}{2}$, and the interpolation factor corresponding to the baseband transmit signal $V_{s=2}$ received by the interpolation network 221-1 is $\frac{1}{2}$. In this case, the analog signal obtained by the interpolation network 221-1 is

$$V_k = \frac{1}{2} * V_{s=1} + \frac{1}{2} * V_{s=2}$$, and the phase of the analog signal $V_k$ obtained by the interpolation network 221-1 is 45 degrees.

For example, when at least two input signals received by different interpolation networks are different, and/or interpolation factors of input signals in the at least two input signals are different, analog signals with different phases may be obtained. In this case, it may be considered that the m interpolation networks can obtain m analog signals $V_k$, where k ∈ [1, m], m is greater than or equal to 3, and the m analog signals $V_k$ are collectively referred to as a multi-phase signal.

It indicates that the phase processing circuit 22 includes the 2n input ends, the m interpolation networks, and the m output ends. One interpolation network is coupled to one output end of the phase processing circuit 22. The 2n input ends receive the n pairs of orthogonal baseband signals, where each pair of orthogonal baseband signals includes two mutually orthogonal baseband transmit signals, phases of the two mutually orthogonal baseband transmit signals are different, and a phase difference between the two mutually orthogonal baseband transmit signals is 90 degrees. In addition, each input end is configured to receive one baseband transmit signal. The phases of the baseband transmit signals received by the 2n input ends are different from each other. In addition, there is a reference signal further in the phase processing circuit 22. Any interpolation network may receive at least two input signals, and the input signal is one of the baseband transmit signal and the reference signal. When performing interpolation on the at least two input signals based on an interpolation factor of each input signal in the at least two input signals, the interpolation network may obtain an analog signal with a predetermined phase, where the predetermined phase is determined based on phases of the at least two input signals and the interpolation factor corresponding to each input signal in the at least two input signals. When the phases of the at least two input signals are different and/or the interpolation factors corresponding to the input signals in the at least two input signals are different, analog signals with different predetermined phases may be obtained. The analog signal obtained by the interpolation network may also be referred to as a baseband transmit signal.

The output end of the phase processing circuit 22 is coupled to the frequency mixer 21. Because the phase processing circuit 22 may form the m analog signals, and phases of the m analog signals may be freely adjusted, it indicates that the radio frequency circuit 20 may generate, via the phase processing circuit 22 based on a quantity and phases of local oscillator transmit signals received by the present frequency mixer 21, analog signals that match the local oscillator transmit signals in quantity and phase.

For example, the frequency mixer 21 may receive eight local oscillator transmit signals whose phases are respectively 0 degrees, -45 degrees, -90 degrees, -135 degrees, -180 degrees, -225 degrees, -270 degrees, and -315 degrees. In this case, a multi-phase signal generated by the phase processing circuit 22 includes eight analog signals whose phases are respectively 0 degrees, 45 degrees, 90 degrees, 135 degrees, 180 degrees, 225 degrees, 270 degrees, and 315 degrees, so that the local oscillator transmit signals received by the frequency mixer 21 match the multi-phase signal in phase and quantity. In a signal transmission process, quantities of phases of the local oscillator transmit signals and the analog signals increase, a phase of a wanted signal whose center frequency is flo+fbb and that is generated through frequency mixing is not affected, and a first distortion signal whose center frequency is 3flo-fbb and that is generated through frequency mixing is exactly four pairs of first distortion signals in a differential form. Superimposition of the first distortion signals in the differential form is equivalent to eliminating the first distortion signals. When the first distortion signal is eliminated, it may be considered that the radio frequency circuit has better CIM3 suppression effect, to improve communication quality.

More specifically, refer to FIG. 6. The frequency mixer 21 is coupled to the output end of the phase processing circuit 22. The radio frequency circuit 20 further includes a local oscillator circuit 23. The local oscillator circuit 23 is coupled to the frequency mixer 21. The m output ends of the phase processing circuit 22 output the multi-phase signal to the frequency mixer 21. Specifically, the multi-phase signal includes the m analog signals. The local oscillator circuit 23 is configured to generate m local oscillator transmit signals, where a phase of each local oscillator transmit signal in the m local oscillator transmit signals one-to-one corresponds to a phase of each analog signal in the multi-phase signal. The frequency mixer 21 is configured to perform frequency mixing on the m local oscillator transmit signals and the m analog signals to generate the radio frequency transmit signal.

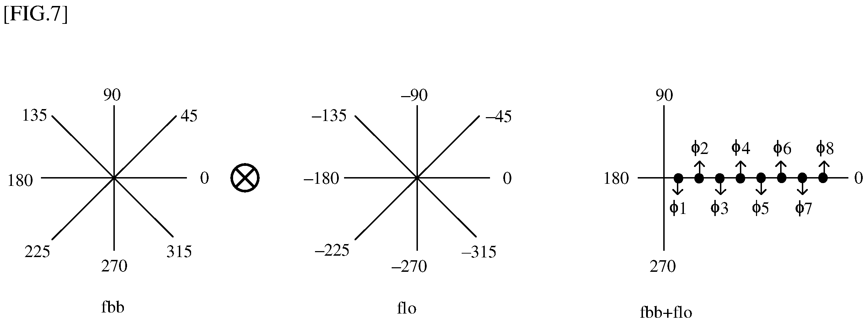

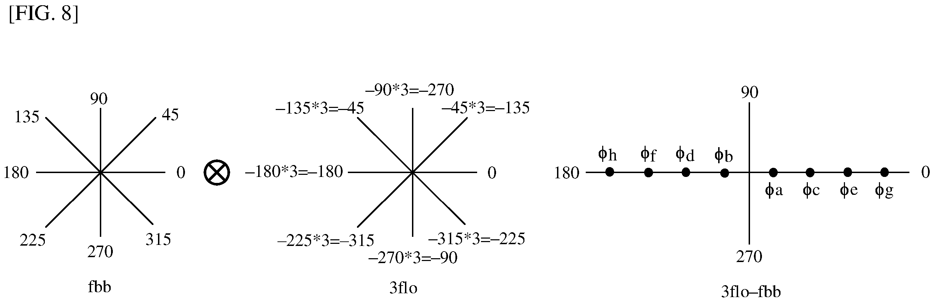

An example in which the phase processing circuit 22 includes eight interpolation networks is used for description. In this case, the local oscillator circuit 23 is configured to generate eight local oscillator transmit signals whose phases are respectively 0 degrees, -45 degrees, -90 degrees, -135 degrees, -180 degrees, -225 degrees, -270 degrees, and -315 degrees. In this case, eight output ends of the phase processing circuit 22 respectively output eight analog signals whose phases are respectively 0 degrees, 45 degrees, 90 degrees, 135 degrees, 180 degrees, 225 degrees, 270 degrees, and 315 degrees to the frequency mixer 21. The frequency mixer 21 is configured to perform frequency mixing on the eight local oscillator transmit signals and the eight analog signals to generate a radio frequency transmit signal, and this process is specifically up-conversion. As shown in FIG. 7, a case of frequency mixing of eight local oscillator transmit signals flo and eight analog signals is intuitively described. Because the input end of the phase processing circuit 22 receives a baseband transmit signal, the phase processing circuit 22 adjusts a phase of the input baseband transmit signal. In this case, an analog signal generated by the phase processing circuit may also be referred to as a baseband transmit signal. In FIG. 7 and FIG. 8, a baseband transmit signal fbb represents the analog signal. A phase of a wanted signal whose center frequency is flo+fbb and that is generated through frequency mixing of a local oscillator transmit signal flo with a phase of 0 degrees and a baseband transmit signal fbb with a phase of 0 degrees is 0 degrees ($\phi$1 shown in FIG. 7). A phase of a wanted signal whose center frequency is flo+fbb and that is generated through frequency mixing of a local oscillator transmit signal flo with a phase of -45 degrees and a baseband transmit signal fbb with a phase of 45 degrees is 0 degrees ($\phi$2 shown in FIG. 7). A phase of a wanted signal whose center frequency is flo+fbb and that is generated through frequency mixing of a local oscillator transmit signal flo with a phase of -90 degrees and a baseband transmit signal fbb with a phase of 90 degrees is 0 degrees ($\phi$3 shown in FIG. 7). A phase of a wanted signal whose center frequency is flo+fbb and that is generated through frequency mixing of a local oscillator transmit signal flo with a phase of -135 degrees and a baseband transmit signal fbb with a phase of 135 degrees is 0 degrees ($\phi$4 shown in FIG. 7). A phase of a wanted signal whose center frequency is flo+fbb and that is generated through frequency mixing of a local oscillator transmit signal flo with a phase of -180 degrees and a baseband transmit signal fbb with a phase of 180 degrees is 0 degrees ($\phi$5 shown in FIG. 7). A phase of a wanted signal whose center frequency is flo+fbb and that is generated through frequency mixing of a local oscillator transmit signal flo with a phase of -225 degrees and a baseband transmit signal fbb with a phase of 225 degrees is 0 degrees ($\phi$6 shown in FIG. 7). A phase of a wanted signal whose center frequency is flo+fbb and that is generated through frequency mixing of a local oscillator transmit signal flo with a phase of -270 degrees and a baseband transmit signal fbb with a phase of 270 degrees is 0 degrees ($\phi$7 shown in FIG. 7). A phase of a wanted signal whose center frequency is flo+fbb and that is generated through frequency mixing of a local oscillator transmit signal flo with a phase of -315 degrees and a baseband transmit signal fbb with a phase of 315 degrees is 0 degrees ($\phi$8 shown in FIG. 7). That is, frequency mixing is performed on the eight local oscillator transmit signals whose phases are respectively 0 degrees, -45 degrees, -90 degrees, -135 degrees, -180 degrees, -225 degrees, -270 degrees, and -315 degrees, and the eight baseband transmit signals fbb whose phases are respectively 0 degrees, 45 degrees, 90 degrees, 135 degrees, 180 degrees, 225 degrees, 270 degrees, and 315 degrees respectively, to generate the wanted signals whose center frequencies are flo+fbb, where the phase of the wanted signal is not affected by the phase of the baseband transmit signal fbb and the phase of the local oscillator transmit signal.

As shown in FIG. 8, a case of frequency mixing of eight local oscillator transmit signals flo and eight baseband transmit signals fbb is intuitively described. A phase of a first distortion signal whose center frequency is 3flo-fbb and that is generated through frequency mixing of a local oscillator transmit signal flo with a phase of 0 degrees and a baseband transmit signal fbb with a phase of 0 degrees is 0 degrees ($\phi$a shown in FIG. 8). A phase of a first distortion signal whose center frequency is 3flo-fbb and that is generated through frequency mixing of a local oscillator transmit signal flo with a phase of -45 degrees and a baseband transmit signal fbb with a phase of 45 degrees is (-45*3-45)=-180 degrees ($\phi$b shown in FIG. 8, where -180 degrees is 180 degrees). A phase of a first distortion signal whose center frequency is 3flo-fbb and that is generated through frequency mixing of a local oscillator transmit signal flo with a phase of -90 degrees and a baseband transmit signal fbb with a phase of 90 degrees is (-90*3-90)=-360 degrees ($\phi$c shown in FIG. 8, where - 360 degrees is 0 degrees). A phase of a first distortion signal whose center frequency is 3flo-fbb and that is generated through frequency mixing of a local oscillator transmit signal flo with a phase of -135 degrees and a baseband transmit signal fbb with a phase of 135 degrees is (-135*3-135)=-540 degrees=(-360 degrees)+(-180 degrees)=-180 degrees (for example, $\phi$d shown in FIG. 8, where -180 degrees is 180 degrees). A phase of a first distortion signal whose center frequency is 3flo-fbb and that is generated through frequency mixing of a local oscillator transmit signal flo with a phase of -180 degrees and a baseband transmit signal fbb with a phase of 180 degrees is (-180*3-180)=-720 degrees=(-360 degrees)+(-360 degrees)=-360 degrees ($\phi$e shown in FIG. 8, where -360 degrees is 0 degrees). A phase of a first distortion signal whose center frequency is 3flo-fbb and that is generated through frequency mixing of a local oscillator transmit signal flo with a phase of -225 degrees and a baseband transmit signal fbb with a phase of 225 degrees is (-225*3-225)=-900 degrees=(-180 degrees)+(-360 degrees)+(-360 degrees) ($\phi$f shown in FIG. 8, where -180 degrees is 180 degrees). A phase of a first distortion signal whose center frequency is 3flo+fbb and that is generated through frequency mixing of a local oscillator transmit signal flo with a phase of -270 degrees and a baseband transmit signal fbb with a phase of 270 degrees is (-270*3-270)=-1080 degrees=(-360 degrees) +(-300 degrees)+(-360 degrees) ($\phi$g shown in FIG. 8, where -360 degrees is 0 degrees). A phase of a first distortion signal whose center frequency is 3flo-fbb and that is generated through frequency mixing of a local oscillator transmit signal flo with a phase of -315 degrees and a baseband transmit signal fbb with a phase of 315 degrees is (-315*3-315)=-1260 degrees=(-180 degrees) +(-360 degrees)+(-300 degrees)+(-360 degrees) ($\phi$h shown in FIG. 8, where -180 degrees is 180 degrees). In this case, as shown in FIG. 8, $\phi$a and $\phi$b are differential, $\phi$c and $\phi$d d are differential, $\phi$e and $\phi$f are differential, and $\phi$d g and $\phi$h are differential. Superimposition of two signals in a differential form is equivalent to elimination. That is, the first distortion signals whose center frequencies are 3flo-fbb and that are generated through frequency mixing of the eight local oscillator transmit signals whose phases are respectively 0 degrees, -45 degrees, -90 degrees, -135 degrees, -180 degrees, -225 degrees, -270 degrees, and - 315 degrees and the eight baseband transmit signals whose phases are respectively 0 degrees, 45 degrees, 90 degrees, 135 degrees, 180 degrees, 225 degrees, 270 degrees, and 315 degrees respectively are to be eliminated. Based on the foregoing analyzed cause 1 of generating the CIM3, when the first distortion signal whose center frequency is 3flo-fbb is eliminated, the CIM3 generated when the radio frequency circuit transmits the radio frequency signal is suppressed.

It should be noted that, when the phase of the local oscillator transmit signal generated by the local oscillator circuit 23 is $\phi$, the radio frequency circuit 20 may generate, via the phase processing circuit 22 and based on the local oscillator transmit signal received by the present frequency mixer 21, the analog signal whose phase is -$\phi$ and corresponds to the phase of the local oscillator transmit signal with the phase of $\phi$ (that is, a baseband transmit signal fbb).

In the foregoing example, the m analog signals (that is, m baseband transmit signals fbb) include four pairs of differential signals. The baseband transmit signal fbb with the phase of 0 degrees and the baseband transmit signal fbb with the phase of 180 degrees are a first pair of differential signals. The baseband transmit signal fbb with the phase of 45 degrees and the baseband transmit signal fbb with the phase of 225 degrees are a second pair of differential signals. The baseband transmit signal fbb with the phase of 90 degrees and the baseband transmit signal fbb with the phase of 270 degrees are a third pair of differential signals. The baseband transmit signal fbb with the phase of 135 degrees and the baseband transmit signal fbb with the phase of 315 degrees are a fourth pair of differential signals.

Although FIG. 7 and FIG. 8 describe a process in which frequency mixing is performed on the eight local oscillator transmit signals flo in a differential form and the eight baseband transmit signals fbb in a differential form to eliminate the CIM3 in the radio frequency circuit 20, during actual application, frequency mixing may be performed on four local oscillator transmit signals flo in a single-ended form and four baseband transmit signals fbb in a single-ended form, frequency mixing may be performed on five local oscillator transmit signals flo in a single-ended form and five baseband transmit signals fbb in a single-ended form, frequency mixing may be performed on six local oscillator transmit signals flo in a differential form and six baseband transmit signals fbb in a differential form, frequency mixing may be performed on 10 local oscillator transmit signals flo in a differential form and 10 baseband transmit signals fbb in a differential form, and the rest may be deduced by analogy. This is not limited in embodiments of this application. In addition, for a process in which frequency mixing is performed on a plurality of local oscillator transmit signals and a plurality of baseband transmit signals fbb to eliminate a CIM, refer to FIG. 7 and FIG. 8.

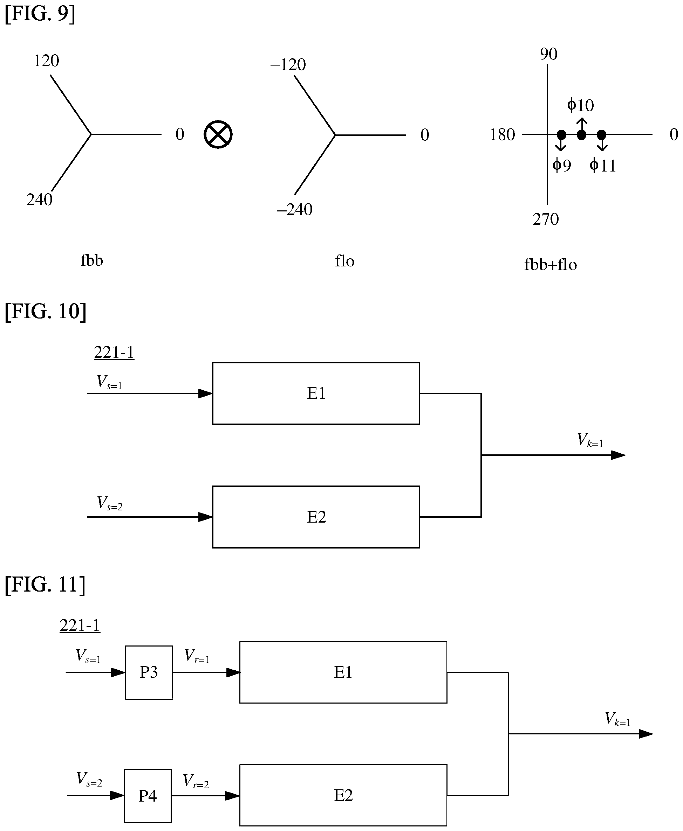

In some other embodiments, frequency mixing may be performed on three local oscillator transmit signals flo in a single-ended form and three baseband transmit signals fbb in a single-ended form. An example in which the phase processing circuit 22 includes three interpolation networks is used for description. In this case, the local oscillator circuit 23 is configured to generate three local oscillator transmit signals whose phases are respectively 0 degrees, -120 degrees, and -240 degrees. In this case, the phase processing circuit 22 outputs three analog signals whose phases are respectively 0 degrees, 120 degrees, and 240 degrees to the frequency mixer 21. The frequency mixer 21 is configured to perform frequency mixing on the three local oscillator transmit signals and the three analog signals to generate a radio frequency transmit signal, and this process is specifically up-conversion. As shown in FIG. 9, a case of frequency mixing of three local oscillator transmit signals flo and three analog signals is intuitively described. Because the input end of the phase processing circuit 22 receives a baseband transmit signal, the phase processing circuit 22 adjusts a phase of the input baseband transmit signal. In this case, an analog signal generated by the phase processing circuit 22 may also be referred to as a baseband transmit signal. In FIG. 9, a baseband transmit signal fbb represents an analog signal. A phase of a wanted signal whose center frequency is flo+fbb and that is generated through frequency mixing of a local oscillator transmit signal flo with a phase of 0 degrees and a baseband transmit signal fbb with a phase of 0 degrees is 0 degrees ($\phi$9 shown in FIG. 9). A phase of a wanted signal whose center frequency is flo+fbb and that is generated through frequency mixing of a local oscillator transmit signal flo with a phase of -120 degrees and a baseband transmit signal fbb with a phase of 120 degrees is 0 degrees ($\phi$10 shown in FIG. 9). A phase of a wanted signal whose center frequency is flo+fbb and that is generated through frequency mixing of a local oscillator transmit signal flo with a phase of -240 degrees and a baseband transmit signal fbb with a phase of 240 degrees is 0 degrees ($\phi$11 shown in FIG. 9). That is, frequency mixing is performed on the three local oscillator transmit signals whose phases are respectively 0 degrees, -120 degrees, and -240 degrees, and the three baseband transmit signals fbb whose phases are respectively 0 degrees, 120 degrees, and 240 degrees respectively, to generate the wanted signals whose center frequencies are flo+fbb, where the phase of the wanted signal is not affected by the phase of the baseband transmit signal fbb and the phase of the local oscillator transmit signal.

When a first distortion signal whose center frequency is 3flo-fbb is generated through frequency mixing of the local oscillator transmit signal flo with the phase of 0 degrees and the baseband transmit signal fbb with the phase of 0 degrees, 3flo is 0. When a first distortion signal whose center frequency is 3flo-fbb is generated through frequency mixing of the local oscillator transmit signal flo with the phase of -120 degrees and the baseband transmit signal fbb with the phase of 120 degrees, 3flo is 0. When a first distortion signal whose center frequency is 3flo-fbb is generated through frequency mixing of the local oscillator transmit signal flo with the phase of -240 degrees and the baseband transmit signal fbb with the phase of 240 degrees, 3flo is 0. When 3flo is 0, it may be considered that the first distortion signals whose center frequencies are 3flo-fbb and that are respectively generated through frequency mixing of the three local oscillator transmit signals whose phases are respectively 0 degrees, -120 degrees, and -240 degrees and the three baseband transmit signals fbb whose phases are respectively 0 degrees, 120 degrees, and 240 degrees is eliminated. Based on the foregoing analyzed cause 1 of generating the CIM3, when the first distortion signal whose center frequency is 3flo-fbb is eliminated, the CIM3 generated when the radio frequency circuit transmits the radio frequency signal is suppressed. The following describes in detail a structure of the interpolation network in the phase processing circuit 22.

Any interpolation network in the phase processing circuit 22 includes one or more electronic components, an interpolation factor is determined based on an electrical parameter of the one or more electronic components, and the plurality of electronic components are coupled in one or both of the following manners: parallel connection and series connection. The following uses the interpolation network 221-1 as an example for description. FIG. 10 is a diagram of a specific structure of the interpolation network 221-1 in the phase processing circuit 22 in the radio frequency circuit 20 according to an embodiment of this application. The interpolation network 221-1 includes an electronic component E1 and an electronic component E2. The electronic component E1 and the electronic component E2 are connected in parallel. A baseband transmit signal $V_{s=1}$ received by the interpolation network 221-1 is transmitted to the 1st output end of the phase processing circuit 22 via the electronic component E1. A baseband transmit signal $V_{s=2}$ received by the interpolation network 221-1 is transmitted to the 1st output end of the phase processing circuit 22 via the electronic component E2. An interpolation factor of the baseband transmit signal $V_{s=1}$ and an interpolation factor of the baseband transmit signal $V_{s=2}$ are determined based on an electrical parameter of the electronic component E1 and an electrical parameter of the electronic component E2.

Specifically, when a phase of the baseband transmit signal $V_{s=1}$ is specifically 0 degrees, and a phase of the baseband transmit signal $V_{s=2}$ is specifically 90 degrees, a ratio of the electrical parameter of the electronic component E1 to the electrical parameter of the electronic component E2 needs to be set to 1:1, to enable a phase of an analog signal $V_{k=1}$ obtained by the interpolation network 221-1 to be 45 degrees. The electronic component includes one or more of the following: a capacitor, a resistor, and an inductor. When the electronic component is a resistor, the electrical parameter is a resistance value. When the electronic component is a capacitor, the electrical parameter is a capacitance value. When the electronic component is an inductor, the electrical parameter is an inductance value.

For example, the electronic component E1 may be a resistor, and a resistance value of the resistor is 100 ohms ($\Omega$). The electronic component E2 is also a resistor, and a resistance value of the resistor is also 100 ohms ($\Omega$). Alternatively, the electronic component E1 may be a capacitor, and a capacitance value of the capacitor is 100 farads (F). The electronic component E2 is also a capacitor, and a capacitance value of the capacitor is 100 F. Alternatively, the electronic component E1 may be an inductor, and an inductance value of the inductor is 100 henries (H). The electronic component E2 is also an inductor, and an inductance value of the capacitor is 100 H.

In some other cases, the electronic component E1 may be two resistors whose resistance values are respectively 40 $\Omega$ and 60 $\Omega$ and that are connected in series, and the electronic component E2 may be two resistors whose resistance values are 200 $\Omega$ and that are connected in parallel. A coupling manner and a quantity of electronic components in the interpolation network are not limited in embodiments of this application.

When the ratio of the electrical parameter of the electronic component E1 to the electrical parameter of the electronic component E2 is 1:1, it indicates that the interpolation network 221-1 performs interpolation on the baseband transmit signal $V_{s=1}$ based on the interpolation factor with the value of $\dfrac{1}{2}$, and performs interpolation on the baseband transmit signal $V_{s=2}$ based on the interpolation factor with the value of $\dfrac{1}{2}$, to obtain the analog signal $V_{k=1}$. In addition,

$$V_{k=1} = \frac{1}{2} * V_{s=1} + \frac{1}{2} * V_{s=2}$$

, and the phase of the analog signal $V_{k=1}$ obtained by the interpolation network 221-1 is 45 degrees.

In some other embodiments, any interpolation network in the phase processing circuit 22 is further configured to generate one reference signal based on one baseband transmit signal, where the baseband transmit signal and the reference signal are in a differential form.

FIG. 11 is a diagram of a structure of another interpolation network 221-1 according to an embodiment of this application. At least two input signals received by the interpolation network 221-1 shown in FIG. 11 are a reference signal $V_{r=1}$ and a reference signal $V_{r=2}$. The interpolation network 221-1 first receives a baseband transmit signal $V_{s=1}$, and generates the reference signal $V_{r=1}$ based on the baseband transmit signal $V_{s=1}$, where the baseband transmit signal $V_{s=1}$ and the reference signal $V_{r=1}$ are in a differential form, a phase of the baseband transmit signal $V_{s=1}$ is 0 degrees, and a phase of the reference signal $V_{r=1}$ is 180 degrees. More specifically, a phase converter is further disposed in an interpolation network. The phase converter generates one reference signal based on one baseband transmit signal, where the baseband transmit signal and the reference signal are in a differential form. The electronic component E1 shown in FIG. 11 is further coupled to an output end of a phase converter P3, an input end of the phase converter P3 is configured to receive the baseband transmit signal $V_{s=1}$ received by the interpolation network 221-1, and the phase converter P3 is configured to generate the reference signal $V_{r=1}$ based on the baseband transmit signal $V_{s=1}$, where the reference signal $V_{r=1}$ is transmitted to the output end of the phase processing circuit 22 via the electronic component E1. The interpolation network 221-1 performs interpolation on the reference signal $V_{r=1}$. Therefore, it may also be considered that the interpolation network 221-1 receives the reference signal $V_{r=1}$.

As shown in FIG. 11, the interpolation network 221-1 first receives a baseband transmit signal $V_{s=2}$, and generates the reference signal $V_{r=2}$ based on the baseband transmit signal $V_{s=2}$, where the baseband transmit signal $V_{s=2}$ and the reference signal $V_{r=2}$ are in a differential form, a phase of the baseband transmit signal $V_{s=2}$ is 90 degrees, and a phase of the reference signal $V_{r=2}$ is 270 degrees. More specifically, the electronic component E2 is coupled to an output end of a phase converter P4, an input end of the phase converter P4 is configured to receive the baseband transmit signal $V_{s=2}$ received by the interpolation network 221-1, and the phase converter P4 is configured to generate the reference signal $V_{r=2}$ based on the baseband transmit signal $V_{s=2}$, where the reference signal $V_{r=2}$ is transmitted to the output end of the phase processing circuit 22 via the electronic component E2. The interpolation network 221-1 performs interpolation on the reference signal $V_{r=2}$. Therefore, it may also be considered that the interpolation network 221-1 receives the reference signal $V_{r=2}$. When the ratio of the electrical parameter of the electronic component E1 to the electrical parameter of the electronic component E2 is 1:1 and does not change, the interpolation network 221-1 shown in FIG. 11 performs interpolation on the reference signal $V_{r=1}$ based on the interpolation factor with the value of $\dfrac{1}{2}$, and performs interpolation on the reference signal $V_{r=2}$ based on the interpolation factor with the value of $\dfrac{1}{2}$, to obtain the analog signal $V_{k=1}$. In addition, $V_{k=1} = \dfrac{1}{2} * V_{r=1} + \dfrac{1}{2} * V_{r=2}$, and the phase of the analog signal $V_{k=1}$ obtained by the interpolation network 221-1 is 225 degrees.

In conclusion, the analog signal $V_k$ output by the output end of the phase processing circuit 22 satisfies the following formula: $V_k = \sum_{i=1}^{j} \alpha(i) * \theta_i$, where $V_k$ indicates an analog signal obtained by a kth interpolation network in the m interpolation networks, k ∈ [1, m], j indicates a total quantity of input signals received by the kth interpolation network, $\theta_i$ indicates an ith input signal received by the kth interpolation network, i<2n, and $\alpha(i)$ indicates an interpolation factor corresponding to the ith input signal.

In a signal transmission process, the baseband processing circuit is coupled to the radio frequency circuit 20. More specifically, the baseband processing circuit is coupled to the input end of the phase processing circuit 22 in the radio frequency circuit 20. The baseband processing circuit usually inputs two pairs of orthogonal baseband signals to the input end of the phase processing circuit 22. Specifically, a first pair of orthogonal baseband signals is a baseband transmit signal $V_{s=1}$ with a phase of 0 degrees and a baseband transmit signal $V_{s=2}$ with a phase of 90 degrees; a second pair of orthogonal baseband signals is the baseband transmit signal $V_{s=3}$ with the phase of 180 degrees and the baseband transmit signal $V_{s=4}$ with the phase of 270 degrees; and the first pair of orthogonal baseband signals and the second pair of orthogonal baseband signals are in a differential form. In addition, the baseband transmit signal $V_{s=1}$ is input from a first input end of the phase processing circuit 22, the baseband transmit signal $V_{s=2}$ is input from a second input end of the phase processing circuit 22, the baseband transmit signal $V_{s=3}$ is input from a third input end of the phase processing circuit 22, and the baseband transmit signal $V_{s=4}$ is input from a fourth input end of the phase processing circuit 22. In this case, the phase processing circuit 22 may output a multi-phase signal by disposing six interpolation networks, and the multi-phase signal includes six analog signals whose phases are respectively 0 degrees, 60 degrees, 120 degrees, 180 degrees, 240 degrees, and 300 degrees, where the six analog signals include three pairs of differential signals; or the phase processing circuit 22 may output a multi-phase signal by disposing eight interpolation networks, and the multi-phase signal includes eight analog signals whose phases are respectively 0 degrees, 45 degrees, 90 degrees, 135 degrees, 180 degrees, 225 degrees, 270 degrees, and 315 degrees, where the eight analog signals include four pairs of differential signals; or the phase processing circuit 22 may output a multi-phase signal by disposing three interpolation networks, and the multi-phase signal includes three analog signals whose phases are respectively 0 degrees, 60 degrees, and 120 degrees, where all the three analog signals are single-ended signals; or the phase processing circuit 22 may output a multi-phase signal by disposing four interpolation networks, and the multi-phase signal includes four analog signals whose phases are respectively 0 degrees, 45 degrees, 90 degrees, and 135 degrees, where all the four analog signals are single-ended signals. This is not limited in embodiments of this application.

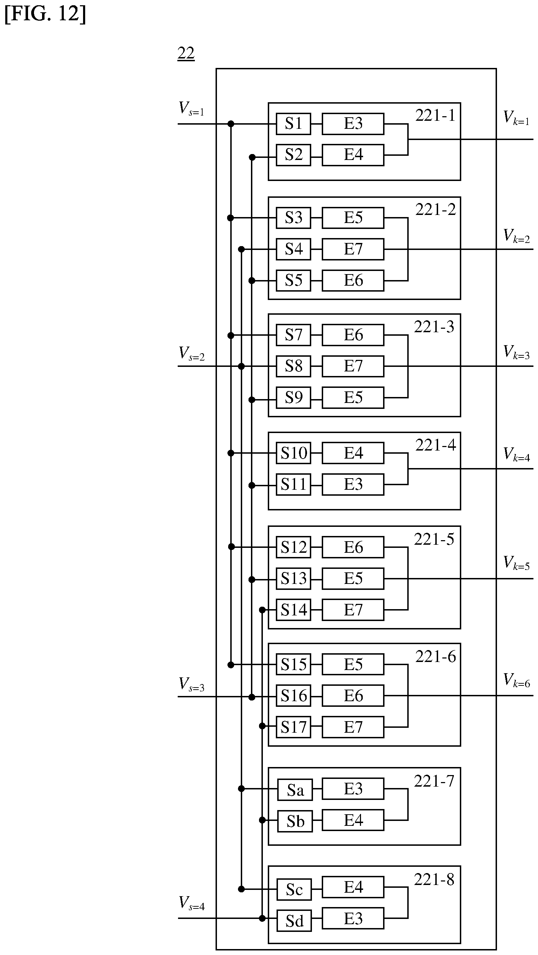

FIG. 12 is a diagram of a structure of a phase processing circuit 22 that receives two pairs of orthogonal baseband signals in a differential form and outputs six analog signals whose phases are respectively 0 degrees, 60 degrees, 120 degrees, 180 degrees, 240 degrees, and 300 degrees by disposing six interpolation networks according to an embodiment of this application, where the six analog signals include three pairs of differential signals. For example, the two pairs of orthogonal baseband signals in the differential form include four baseband transmit signals. A baseband transmit signal $V_{s=1}$ is input from a first input end of the phase processing circuit 22, and a phase of the baseband transmit signal $V_{s=1}$ is 0 degrees. A baseband transmit signal $V_{s=2}$ is input from a second input end of the phase processing circuit 22, and a phase of the baseband transmit signal $V_{s=2}$ is 90 degrees. The baseband transmit signal $V_{s=1}$ and the baseband transmit signal $V_{s=2}$ are a first pair of orthogonal baseband signals. A baseband transmit signal $V_{s=3}$ is input from a third input end of the phase processing circuit 22, and a phase of the baseband transmit signal $V_{s=3}$ is 180 degrees. A baseband transmit signal $V_{s=4}$ is input from a fourth input end of the phase processing circuit 22, and a phase of the baseband transmit signal $V_{s=4}$ is 270 degrees. The baseband transmit signal $V_{s=3}$ and the baseband transmit signal $V_{s=4}$ are a second pair of orthogonal baseband signals. The baseband transmit signal $V_{s=1}$ is also referred to as a first input signal received by any one of the six interpolation networks, the baseband transmit signal $V_{s=2}$ is also referred to as a second input signal received by any one of the six interpolation networks, the baseband transmit signal $V_{s=3}$ is also referred to as a third input signal received by any one of the six interpolation networks, and the baseband transmit signal $V_{s=4}$ is also referred to as a fourth input signal received by any one of the six interpolation networks.

The phase processing circuit 22 includes the six interpolation networks: an interpolation network 221-1, an interpolation network 221-2, an interpolation network 221-3, an interpolation network 221-4, an interpolation network 221-5, and an interpolation network 221-6.

The phase processing circuit 22 further includes six output ends. The interpolation network 221-1 is coupled to a 1st output end in the six output ends, the interpolation network 221-2 is coupled to a 2nd output end in the six output ends, the interpolation network 221-3 is coupled to a 3rd output end in the six output ends, the interpolation network 221-4 is coupled to a 4th output end in the six output ends, the interpolation network 221-5 is coupled to a 5th output end in the six output ends, and the interpolation network 221-6 is coupled to a 6th output end in the six output ends.

The interpolation network 221-1 includes an electronic component E3 coupled between the first input end and the 1st output end, and an electronic component E4 coupled between the third input end and the 1st output end. A ratio of an electrical parameter of the electronic component E3 to an electrical parameter of the electronic component E4 is $\frac{(\sqrt[2]{3}-1)}{2} : \frac{(\sqrt[2]{3}+1)}{2}$ . In this case, the interpolation network 221-1 performs interpolation on the baseband transmit signal $V_{s=1}$ based on an interpolation factor with a value of $\frac{3+\sqrt[2]{3}}{6}$ , and performs interpolation on the baseband transmit signal $V_{s=3}$ based on an interpolation factor with a value of $\frac{3-\sqrt[2]{3}}{6}$ . For an analog signal $V_{k=1} = \frac{3+\sqrt[2]{3}}{6} * V_{s=1} + \frac{3-\sqrt[2]{3}}{6} * V_{s=3}$ obtained by the interpolation network 221-1, a phase of the analog signal $V_{k=1}$ is 0 degrees, and the analog signal is also referred to as a baseband transmit signal.

The interpolation network 221-2 includes an electronic component E5 coupled between the first input end and the 2nd output end, an electronic component E7 coupled between the second input end and the 2nd output end, and an electronic component E6 coupled between the third input end and the 2nd output end. A ratio of an electrical parameter of the electronic component E5 to an electrical parameter of the electronic component E7 to an electrical parameter of the electronic component E6 is $\left(\sqrt[2]{3}-1\right):\left(\frac{1}{\sqrt[2]{3}}\right):\left(\sqrt[2]{3}+1\right)$ . In this case, the interpolation network 221-2 performs interpolation on the baseband transmit signal $V_{s=1}$ based on the interpolation factor with the value of $\frac{3+\sqrt[2]{3}}{12}$ , performs interpolation on the baseband transmit signal $V_{s=2}$ based on an interpolation factor with a value of $\frac{1}{2}$, and performs interpolation on the baseband transmit signal $V_{s=3}$ based on the interpolation factor with the value of $\frac{3-\sqrt[2]{3}}{12}$. For an analog signal

$$V_{k=2} = \frac{3+\sqrt[2]{3}}{12} * V_{s=1} + \frac{1}{2} * V_{s=2} + \frac{3-\sqrt[2]{3}}{12} * V_{s=3}$$

obtained by the interpolation network 221-2, a phase of the analog signal $V_{k=2}$ is 60 degrees, and the analog signal is also referred to as a baseband transmit signal.

The interpolation network 221-3 includes an electronic component E6 coupled between the first input end and the 3rd output end, an electronic component E7 coupled between the second input end and the 3rd output end, and an electronic component E5 coupled between the third input end and the 3rd output end. A ratio of an electrical parameter of the electronic component E5 to an electrical parameter of the electronic component E7 to an electrical parameter of the electronic component E6 is $\left(\sqrt[2]{3} - 1\right) : \left(\frac{1}{\sqrt[2]{3}}\right) : \left(\sqrt[2]{3} + 1\right)$. In this case, the interpolation network 221-3 performs interpolation on the baseband transmit signal $V_{s=1}$ based on the interpolation factor with the value of $\frac{3-\sqrt[2]{3}}{12}$, performs interpolation on the baseband transmit signal $V_{s=2}$ based on the interpolation factor with the value of $\frac{1}{2}$, and performs interpolation on the baseband transmit signal $V_{s=3}$ based on the interpolation factor with the value of $\frac{3+\sqrt[2]{3}}{12}$. For an analog signal

$$V_{k=3} = \frac{3-\sqrt[2]{3}}{12} * V_{s=1} + \frac{1}{2} * V_{s=2} + \frac{3+\sqrt[2]{3}}{12} * V_{s=3}$$

obtained by the interpolation network 221-3, a phase of the analog signal $V_{k=3}$ is 120 degrees, and the analog signal is also referred to as a baseband transmit signal.

The interpolation network 221-4 includes an electronic component E4 coupled between the first input end and the 4th output end, and an electronic component E3 coupled between the third input end and the 4th output end. A ratio of an electrical parameter of the electronic component E3 to an electrical parameter of the electronic component E4 is $\frac{(\sqrt[2]{3}-1)}{2} : \frac{(\sqrt[2]{3}+1)}{2}$. In this case, the interpolation network 221-4 performs interpolation on the baseband transmit signal $V_{s=1}$ based on the interpolation factor with the value of $\frac{3-\sqrt[2]{3}}{6}$, and performs interpolation on the baseband transmit signal $V_{s=3}$ based on the interpolation factor with the value of $\frac{3+\sqrt[2]{3}}{6}$. For an analog signal

$$V_{k=4} = \frac{3-\sqrt[2]{3}}{6} * V_{s=1} + \frac{3+\sqrt[2]{3}}{6} * V_{s=3}$$

obtained by the interpolation network 221-4, a phase of the analog signal $V_{k=4}$ is 180 degrees, and the analog signal is also referred to as a baseband transmit signal.

The interpolation network 221-5 includes an electronic component E6 coupled between the first input end and the 5th output end, an electronic component E5 coupled between the third input end and the 5th output end, and an electronic component E7 coupled between the fourth input end and the 5th output end. A ratio of an electrical parameter of the electronic component E5 to an electrical parameter of the electronic component E7 to an electrical parameter of the electronic component E6 is $\left(\sqrt[2]{3} - 1\right) : \left(\frac{1}{\sqrt[2]{3}}\right) : \left(\sqrt[2]{3} + 1\right)$. In this case, the interpolation network 221-5 performs interpolation on the baseband transmit signal $V_{s=1}$ based on the interpolation factor with the value of $\frac{3-\sqrt[2]{3}}{12}$, performs interpolation on the baseband transmit signal $V_{s=3}$ based on the interpolation factor with the value of $\frac{3+\sqrt[2]{3}}{12}$, and performs interpolation on the baseband transmit signal $V_{s=4}$ based on the interpolation factor with the value of $\frac{1}{2}$. For an analog signal

$$V_{k=5} = \frac{3-\sqrt[2]{3}}{12} * V_{s=1} + \frac{3+\sqrt[2]{3}}{12} * V_{s=3} + \frac{1}{2} * V_{s=4}$$

obtained by the interpolation network 221-5, a phase of the analog signal $V_{k=5}$ is 240 degrees, and the analog signal is also referred to as a baseband transmit signal.

The interpolation network 221-6 includes an electronic component E5 coupled between the first input end and the 6th output end, an electronic component E6 coupled between the third input end and the 6th output end, and an electronic component E7 coupled between the fourth input end and the 6th output end. A ratio of an electrical parameter of the electronic component E5 to an electrical parameter of the electronic component E7 to an electrical parameter of the electronic component E6 is $\left(\sqrt[2]{3} - 1\right) : \left(\frac{1}{\sqrt[2]{3}}\right) : \left(\sqrt[2]{3} + 1\right)$. In this case, the interpolation network 221-6 performs interpolation on the baseband transmit signal $V_{s=1}$ based on the interpolation factor with the value of $\frac{3+\sqrt[2]{3}}{12}$, performs interpolation on the baseband transmit signal $V_{s=3}$ based on the interpolation factor with the value of $\frac{3+\sqrt[2]{3}}{12}$, and performs interpolation on the baseband transmit signal $V_{s=4}$ based on the interpolation factor with the value of $\frac{1}{2}$. For an analog signal

$$V_{k=6} = \frac{3+\sqrt[2]{3}}{12} * V_{s=1} + \frac{3-\sqrt[2]{3}}{12} * V_{s=3} + \frac{1}{2} *$$

$V_{s=4}$ obtained by the interpolation network 221-6, a phase of the analog signal $V_{k=6}$ is 300 degrees, and the analog signal is also referred to as a baseband transmit signal.

For example, as shown in FIG. 12, a quantity of input ends that are of the phase processing circuit and to which the interpolation network 221-1 and the interpolation network 221-4 each are coupled is 2, and two input signals may be received; and a quantity of input ends that are of the phase processing circuit and to which another interpolation network is coupled is 3, and three input signals may be received. In this case, the phase processing circuit shown in FIG. 12 further includes at least one dummy unit dummy, the at least one dummy unit is coupled to any two input ends in 2n input ends, and the dummy unit includes one or more electronic components coupled between any two input ends. The plurality of electronic components are coupled between any two input ends in one or both of the following manners: parallel connection and series connection.

Specifically, as shown in FIG. 12, the phase processing circuit includes a dummy unit 221-7 and a dummy unit 221-8. The dummy unit 221-7 includes an electronic component E3 and an electronic component E4 that are coupled between the second input end and the fourth input end. The electronic component E3 in the dummy unit 221-7 is close to the second input end, the electronic component E3 and the electronic component E4 are connected in series, and a ratio of an electrical parameter of the electronic component E3 to an electrical parameter of the electronic component E4 is

$$\frac{(\sqrt[2]{3}-1)}{2} : \frac{(\sqrt[2]{3}+1)}{2}.$$

The dummy unit 221-8 includes an electronic component E4 and an electronic component E3 that are coupled between the second input end and the fourth input end. The electronic component E4 in the dummy unit 221-8 is close to the second input end, the electronic component E3 and the electronic component E4 are connected in series, and a ratio of an electrical parameter of the electronic component E3 to an electrical parameter of the electronic component E4 is $\frac{(\sqrt[2]{3}-1)}{2} : \frac{(\sqrt[2]{3}+1)}{2}$. However, an output end of the interpolation network 221-7 and an output end of the interpolation network 221-8 do not output an analog signal. The dummy unit 221-7 and the dummy unit 221-8 exist to ensure channel consistency of the phase processing circuit 22.

In some other embodiments, a switch is usually disposed in the interpolation network, to control enabling and disabling of the interpolation network in the phase processing circuit 22. Refer to FIG. 12. For example, in the interpolation network 221-1, a switch S1 is disposed between the first input end and the electronic component E3, and a switch S2 is disposed between the third input end and the electronic component E4; in the interpolation network 221-2, a switch S3 is disposed between the first input end and the electronic component E5, a switch S4 is disposed between the second input end and the electronic component E7, and a switch S5 is disposed between the third input end and the electronic component E6; in the interpolation network 221-3, a switch S7 is disposed between the first input end and the electronic component E6, a switch S8 is disposed between the second input end and the electronic component E7, and a switch S9 is disposed between the third input end and the electronic component E5; in the interpolation network 221-4, a switch S10 is disposed between the first input end and the electronic component E4, and a switch S11 is disposed between the third input end and the electronic component E3; in the interpolation network 221-5, a switch S12 is disposed between the first input end and the electronic component E6, a switch S13 is disposed between the third input end and the electronic component E5, and a switch S14 is disposed between the fourth input end and the electronic component E7; and in the interpolation network 221-6, a switch S15 is disposed between the first input end and the electronic component E5, a switch S16 is disposed between the third input end and the electronic component E6, and a switch S17 is disposed between the fourth input end and the electronic component E7. In this case, one or more of the switches are controlled to be turned on and off. For example, when the switch S1 and the switch S2 are turned off, and other switches are turned on, five signals whose phases are respectively 60 degrees, 120 degrees, 180 degrees, 240 degrees, and 300 degrees are output. For another example, when the switch S17 is turned off, the phase of the analog signal $V_{k=6}$ formed at an output end of the interpolation network 221-6 changes to another phase. In other words, the switch is disposed, so that the phase processing circuit 22 can select one or more of the analog signal $V_{k=1}$, the signal $V_{k=2}$, the signal $V_{k=3}$, the signal $V_{k=4}$, the signal $V_{k=5}$, and the signal $V_{k=6}$ based on an actual requirement, and can also adjust the phase of the formed analog signal. This is not limited in embodiments of this application.

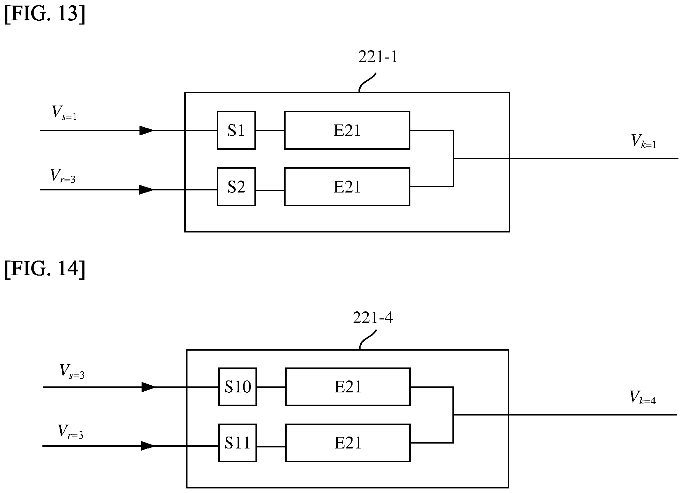

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the six interpolation networks. Therefore, the interpolation network 221-1 shown in FIG. 12 may be replaced with an interpolation network 221-1 shown in FIG. 13, and/or the interpolation network 221-4 shown in FIG. 12 may be replaced with an interpolation network 221-4 shown in FIG. 14.

As shown in FIG. 13, the interpolation network 221-1 includes an electronic component E21 coupled between the first input end and the 1st output end, and an electronic component E21 coupled between the alternating current ground of the radio frequency circuit 20 and the 1st output end. A ratio of an electrical parameter of the electronic component E21 to an electrical parameter of the electronic component E21 is $\left(\frac{1}{\sqrt[2]{3}}\right) : \left(\frac{1}{\sqrt[2]{3}}\right)$. In this case, the interpolation network 221-1 performs interpolation on a baseband transmit signal $V_{s=1}$ based on an interpolation factor with a value of $\frac{1}{2}$, and performs interpolation on the reference signal $V_{r=3}$ based on an interpolation factor with a value of $\frac{1}{2}$.

$$V_{k=1} = \frac{1}{2} * V_{s=1} + \frac{1}{2} * V_{r=3}$$

For an analog signal obtained by the interpolation network 221-1, a phase of the analog signal $V_{k=1}$ is 0 degrees, and the analog signal is also referred to as a baseband transmit signal. The switch S1 is specifically disposed between the first input end of the phase processing circuit 22 and the electronic component E21, and the switch S2 is specifically disposed between the alternating current ground of the radio frequency circuit 20 and the electronic component E21.

As shown in FIG. 14, the interpolation network 221-4 includes an electronic component E21 coupled between the third input end and the 4th output end, and an electronic component E21 coupled between the alternating current ground of the radio frequency circuit 20 and the 4th output end. A ratio of an electrical parameter of the electronic component E21 to an electrical parameter of the electronic component E21 is $\left(\frac{1}{\sqrt[2]{3}}\right) : \left(\frac{1}{\sqrt[2]{3}}\right)$. In this case, the interpolation network 221-4 performs interpolation on a baseband transmit signal $V_{s=1}$ based on an interpolation factor with a value of $\frac{1}{2}$, and performs interpolation on the reference signal $V_{r=3}$ based on an interpolation factor with a value of $\frac{1}{2}$.

$$V_{k=4} = \frac{1}{2} * V_{s=1} + \frac{1}{2} * V_{r=3}$$

For an analog signal obtained by the interpolation network 221-4, a phase of the analog signal $V_{k=4}$ is 180 degrees, and the analog signal is also referred to as a baseband transmit signal. The switch S10 is specifically disposed between the third input end of the phase processing circuit 22 and the electronic component E21, and the switch S11 is specifically disposed between the alternating current ground of the radio frequency circuit 20 and the electronic component E21.

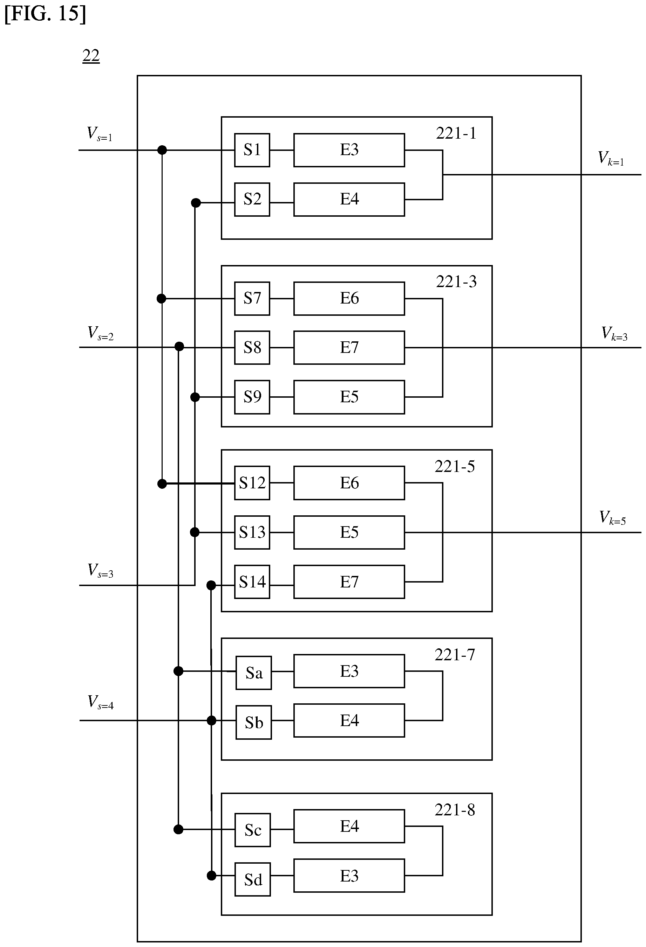

Refer to FIG. 15. Compared with the phase processing circuit 22 shown in FIG. 12, a phase processing circuit shown in FIG. 15 includes three interpolation networks: an interpolation network 221-1, an interpolation network 221-3, and an interpolation network 221-5. The interpolation network 221-1 shown in FIG. 15 is the same as the interpolation network 221-1 shown in FIG. 12, a phase of an analog signal $V_{k=1}$ obtained by the interpolation network 221-1 is 0 degrees, and the analog signal is also referred to as a baseband transmit signal. The interpolation network 221-3 shown in FIG. 15 is the same as the interpolation network 221-3 shown in FIG. 12, a phase of an analog signal $V_{k=3}$ obtained by the interpolation network 221-3 is 120 degrees, and the analog signal is also referred to as a baseband transmit signal. The interpolation network 221-5 shown in FIG. 15 is the same as the interpolation network 221-5 shown in FIG. 12, a phase of an analog signal $V_{k=5}$ obtained by the interpolation network 221-5 is 240 degrees, and the analog signal is also referred to as a baseband transmit signal.

For example, as shown in FIG. 15, the phase processing circuit further includes at least one dummy unit dummy, to ensure channel consistency of the phase processing circuit 22, the at least one dummy unit is coupled to any two input ends in 2n input ends, and the dummy unit includes one or more electronic components coupled between any two input ends. The plurality of electronic components are coupled between any two input ends in one or both of the following manners: parallel connection and series connection.

Specifically, as shown in FIG. 15, the phase processing circuit includes a dummy unit 221-7 and a dummy unit 221-8. For details about the dummy unit 221-7 and the dummy unit 221-8, refer to the dummy unit 221-7 and the dummy unit 221-8 shown in FIG. 12. The dummy unit 221-7 and the dummy unit 221-8 exist to ensure the channel consistency of the phase processing circuit 22.

For example, specifically, in the phase processing circuit shown in FIG. 15 compared with the phase processing circuit shown in FIG. 12, the interpolation network 221-2, the interpolation network 221-4, and the interpolation network 221-6 are deleted, and the interpolation network 221-1, the interpolation network 221-3, and the interpolation network 221-5 are reserved, so that the three interpolation networks respectively output three analog signals whose phases are respectively 0 degrees, 120 degrees, and 240 degrees. In some embodiments, in the phase processing circuit compared with the phase processing circuit 22 shown in FIG. 12, the interpolation network 221-4, the interpolation network 221-5, and the interpolation network 221-6 may be deleted, and the interpolation network 221-1, the interpolation network 221-2, and the interpolation network 221-3 are reserved, so that the three interpolation networks respectively output three analog signals whose phases are respectively 0 degrees, 60 degrees, and 120 degrees. In some other embodiments, in the phase processing circuit compared with the phase processing circuit 22 shown in FIG. 12, the interpolation network 221-1, the interpolation network 221-2, and the interpolation network 221-3 may be deleted, and the interpolation network 221-4, the interpolation network 221-5, and the interpolation network 221-6 are reserved, so that the three interpolation networks respectively output three analog signals whose phases are respectively 180 degrees, 240 degrees, and 300 degrees.

In some other embodiments, a switch is usually disposed in the interpolation network, to control enabling and disabling of the interpolation network in the phase processing circuit 22 shown in FIG. 15. For a position at which the switch is disposed, refer to FIG. 12. Details are not described herein again.

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the six interpolation networks. Therefore, the interpolation network 221-1 shown in FIG. 15 may be replaced with the interpolation network 221-1 shown in FIG. 13.

As shown in FIG. 12 or FIG. 15, a switch may also be disposed in the dummy unit. Specifically, in the dummy unit 221-7, a switch Sa is disposed between the second input end and the electronic component E3, and a switch Sb is disposed between the fourth input end and the electronic component E4; and in the dummy unit 221-8, a switch Sc is disposed between the second input end and the electronic component E4, and a switch Sd is disposed between the fourth input end and the electronic component E3. This is not limited in embodiments of this application.

In another embodiment, the switch in FIG. 12 or FIG. 15 may be alternatively disposed between the electronic component in the interpolation network and the output end of the phase processing circuit 22. This is not limited in embodiments of this application.

It should be noted that any switch in FIG. 12 or FIG. 15 may be implemented via any one of the following: a diode, a triode, and a transistor. Selection of the switch is not limited in embodiments of this application. In addition, more or fewer switches may be disposed. This is not limited in embodiments of this application.

For example, refer to FIG. 12 or FIG. 15. For example, in the interpolation network 221-2, when the ratio of the electrical parameter of the electronic component E5 to the electrical parameter of the electronic component E7 to the electrical parameter of the electronic component E6 does not satisfy

$$\left(\sqrt[2]{3} - 1\right) : \left(\frac{1}{\sqrt[2]{3}}\right) : \left(\sqrt[2]{3} + 1\right)$$

, another electronic component, for example, an electronic component with an adjustable electrical parameter, may be connected in parallel to two ends of one or more of the electronic component E5, the electronic component E6, and the electronic component E7, or another electronic component is connected in series between an output end and one or more of the electronic component E5, the electronic component E6, and the electronic component E7, so that the ratio of the electrical parameter of the electronic component E5 to the electrical parameter of the electronic component E7 to the electrical parameter of the electronic component E6 is

$$\left(\sqrt[2]{3} - 1\right) : \left(\frac{1}{\sqrt[2]{3}}\right) : \left(\sqrt[2]{3} + 1\right)$$

. A quantity of electronic components in the interpolation network and a relationship of connection between the electronic components are not limited in embodiments of this application.

Another electronic component connected in parallel or in series may be disposed in the interpolation network 221-1, the interpolation network 221-3, the interpolation network 221-4, the interpolation network 221-5, the interpolation network 221-6, the interpolation network 221-7, and the interpolation network 221-8 shown in FIG. 12, and another electronic component connected in parallel or in series may also be disposed in the interpolation network 221-1 and the interpolation network 221-3 shown in FIG. 15. This is not limited in embodiments of this application.

For example, the electronic component shown in FIG. 12 or FIG. 15 includes one or more of the following: a capacitor, a resistor, and an inductor. When the electronic component is a resistor, an electrical parameter is a resistance value; when the electronic component is a capacitor, an electrical parameter is a capacitance value; or when the electronic component is an inductor, an electrical parameter is an inductance value.

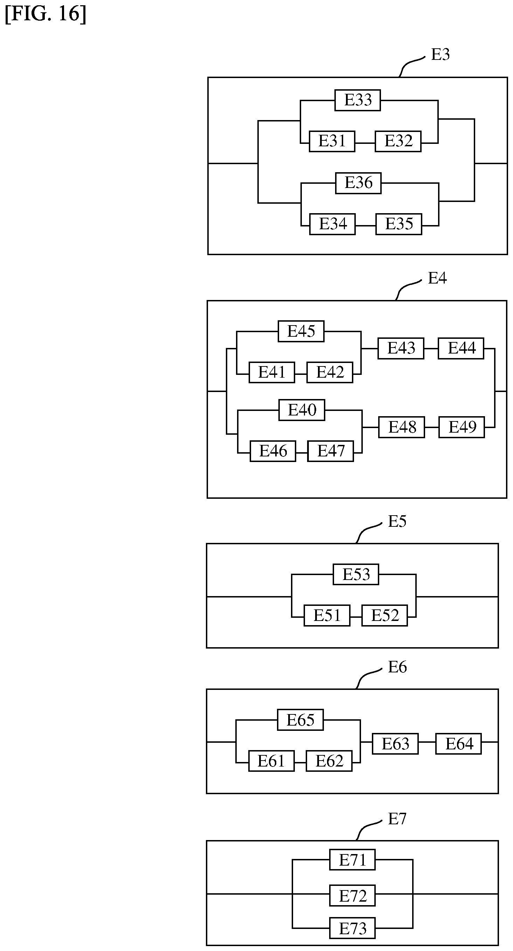

Refer to FIG. 16. The electronic component E3 shown in FIG. 12 or FIG. 15 includes an electronic sub-component E31 and an electronic sub-component E32 that are connected in series between a first end and a second end of the electronic component E3, and an electronic sub-component E33 that is connected in parallel to a series structure of the electronic sub-component E31 and the electronic sub-component E32. The electronic component E3 further includes an electronic sub-component E34 and an electronic sub-component E35 that are connected in series between the first end and the second end of the electronic component E3, and an electronic sub-component E36 that is connected in parallel to a series structure of the electronic sub-component E34 and the electronic sub-component E35. A ratio of an electrical parameter of the electronic sub-component E31 to an electrical parameter of the electronic sub-component E32 to an electrical parameter of the electronic sub-component E33 is $\sqrt[2]{3} : 1 : 1$. The electrical parameter of the electronic sub-component E31 is the same as an electrical parameter of the electronic sub-component E34, the electrical parameter of the electronic sub-component E32 is the same as an electrical parameter of the electronic sub-component E35, and the electrical parameter of the electronic sub-component E33 is the same as an electrical parameter of the electronic sub-component E36.

The electronic component E4 shown in FIG. 12 or FIG. 15 includes an electronic sub-component E41, an electronic sub-component E42, an electronic sub-component E43, and an electronic sub-component E44 that are connected in series between a first end and a second end of the electronic component E4, and an electronic sub-component E45 that is connected in parallel to a series structure of the electronic sub-component E41 and the electronic sub-component E42. The electronic component E4 further includes an electronic sub-component E46, an electronic sub-component E47, an electronic sub-component E48, and an electronic sub-component E49 that are connected in series between the first end and the second end of the electronic component E4, and an electronic sub-component E40 that is connected in parallel to a series structure of the electronic sub-component E46 and the electronic sub-component E47. A ratio of an electrical parameter of the electronic sub-component E41 to an electrical parameter of the electronic sub-component E42 to an electrical parameter of the electronic sub-component E43 to an electrical parameter of the electronic sub-component E44 to an electrical parameter of the electronic sub-component E45 is $\sqrt[2]{3} : 1 : 1 : 1 : 1$. The electrical parameter of the electronic sub-component E41 is the same as an electrical parameter of the electronic sub-component E46, the electrical parameter of the electronic sub-component E42 is the same as an electrical parameter of the electronic sub-component E47, the electrical parameter of the electronic sub-component E43 is the same as an electrical parameter of the electronic sub-component E48, the electrical parameter of the electronic sub-component E44 is the same as an electrical parameter of the electronic sub-component E49, and the electrical parameter of the electronic sub-component E45 is the same as an electrical parameter of the electronic sub-component E40.

The electronic component E5 shown in FIG. 12 or FIG. 15 includes an electronic sub-component E51 and an electronic sub-component E52 that are connected in series between a first end and a second end of the electronic component E5, and an electronic sub-component E53 that is connected in parallel to a series structure of the electronic sub-component E51 and the electronic sub-component E52. A ratio of an electrical parameter of the electronic sub-component E51 to an electrical parameter of the electronic sub-component E52 to an electrical parameter of the electronic sub-component E53 is $\sqrt[2]{3} : 1 : 1$.

The electronic component E6 shown in FIG. 12 or FIG. 15 includes an electronic sub-component E61, an electronic sub-component E62, an electronic sub-component E63, and an electronic sub-component E64 that are connected in series between a first end and a second end of the electronic component E6, and an electronic sub-component E65 that is connected in parallel to a series structure of the electronic sub-component E61 and the electronic sub-component E62. A ratio of an electrical parameter of the electronic sub-component E61 to an electrical parameter of the electronic sub-component E62 to an electrical parameter of the electronic sub-component E63 to an electrical parameter of the electronic sub-component E64 to an electrical parameter of the electronic sub-component E65 is

$$\sqrt[2]{3} : 1 : 1 : 1 : 1$$

The electronic component E7 shown in FIG. 12 or FIG. 15 includes an electronic sub-component E71, an electronic sub-component E72, and an electronic sub-component E73 that are connected in parallel between a first end and a second end of the electronic component E7. A ratio of an electrical parameter of the electronic sub-component E71 to an electrical parameter of the electronic sub-component E72 to an electrical parameter of the electronic sub-component E73 is

$$\sqrt[2]{3} : \sqrt[2]{3} : \sqrt[2]{3}$$

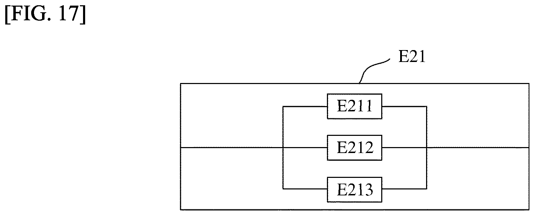

Refer to FIG. 17, the electronic component E21 shown in FIG. 13 or FIG. 14 includes an electronic sub-component E211, an electronic sub-component E212, and an electronic sub-component E213 that are connected in parallel between a first end and a second end of the electronic component E21. A ratio of an electrical parameter of the electronic sub-component E211 to an electrical parameter of the electronic sub-component E212 to an electrical parameter of the electronic sub-component E213 is $\sqrt[4]{3} : \sqrt[2]{3} : \sqrt[2]{3}$.

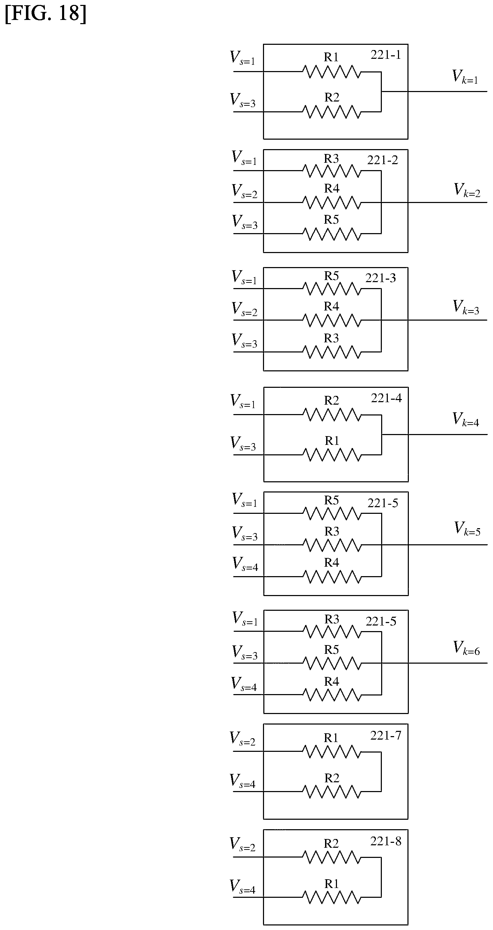

Specifically, as shown in FIG. 18, the phase processing circuit 22 shown in FIG. 12 is analyzed by using an example in which the electronic component is a resistor. The interpolation network 221-1 includes a resistor R1 coupled between the first input end and the 1st output end, and a resistor R2 coupled between the third input end and the 1st output end. A ratio of a resistance value of the resistor R1 to a resistance value of the

resistor R2 is $\dfrac{(\sqrt[2]{3}-1)}{2}:\dfrac{(\sqrt[2]{3}+1)}{2}$ .

The interpolation network 221-2 includes a resistor R3 coupled between the first input end and the 2nd output end, a resistor R4 coupled between the second input end and the 2nd output end, and a resistor R5 coupled between the third input end and the 2nd output end. A ratio of an electrical parameter of the resistor R3 to an electrical parameter of the resistor R4 to an electrical parameter of the resistor R5 is

$$\left(\sqrt[2]{3}-1\right):\left(\frac{1}{\sqrt[2]{3}}\right):\left(\sqrt[2]{3}+1\right)$$ .

The interpolation network 221-3 includes a resistor R5 coupled between the first input end and the 3rd output end, a resistor R4 coupled between the second input end and the 3rd output end, and a resistor R3 coupled between the third input end and the 3rd output end. A ratio of an electrical parameter of the resistor R3 to an electrical parameter of the resistor R4 to an electrical parameter of the resistor R5 is

$$\left(\sqrt[2]{3}-1\right):\left(\frac{1}{\sqrt[2]{3}}\right):\left(\sqrt[2]{3}+1\right)$$ .

The interpolation network 221-4 includes a resistor R2 coupled between the first input end and the 4th output end, and a resistor R1 coupled between the third input end and the 4th output end. A ratio of a resistance value of the resistor R1 to a resistance value of the resistor R2 is $\dfrac{(\sqrt[2]{3}-1)}{2}:\dfrac{(\sqrt[2]{3}+1)}{2}$ .

The interpolation network 221-5 includes a resistor R5 coupled between the first input end and the 5th output end, a resistor R3 coupled between the third input end and the 5th output end, and a resistor R4 coupled between the fourth input end and the 5th output end. A ratio of an electrical parameter of the resistor R3 to an electrical parameter of the resistor R4 to an electrical parameter of the resistor R5 is

$$\left(\sqrt[2]{3}-1\right):\left(\frac{1}{\sqrt[2]{3}}\right):\left(\sqrt[2]{3}+1\right)$$ .

The interpolation network 221-6 includes a resistor R3 coupled between the first input end and the 6th output end, a resistor R5 coupled between the third input end and the 6th output end, and a resistor R4 coupled between the fourth input end and the 6th output end. A ratio of an electrical parameter of the resistor R3 to an electrical parameter of the resistor R4 to an electrical parameter of the resistor R5 is

$$\left(\sqrt[2]{3}-1\right):\left(\frac{1}{\sqrt[2]{3}}\right):\left(\sqrt[2]{3}+1\right)$$ .

The dummy unit 221-7 includes a resistor R1 and a resistor R2 that are coupled between the second input end and the fourth input end, the resistor R1 is close to the second input end, and the resistor R1 is connected in series to the resistor R2. A ratio of a resistance value of the resistor R1 to a resistance value of the resistor R2 is

$\dfrac{(\sqrt[2]{3}-1)}{2}:\dfrac{(\sqrt[2]{3}+1)}{2}$ . The dummy unit 221-8 includes a resistor R2 and a resistor R1 that are coupled between the second input end and the fourth input end, the resistor R2 is close to the second input end, and the resistor R1 is connected in series to the resistor R2. A ratio of a resistance value of the resistor R1 to a resistance value of the

resistor R2 is $\dfrac{(\sqrt[2]{3}-1)}{2}:\dfrac{(\sqrt[2]{3}+1)}{2}$ . The dummy unit 221-7 and the dummy unit 221-8 exist to ensure channel consistency of the phase processing circuit 22, for example, ensure equivalent impedance consistency of the phase processing circuit.

Therefore, when the interpolation network 221-1, the interpolation network 221-2, the interpolation network 221-3, the interpolation network 221-4, the interpolation network 221-5, and the interpolation network 221-6 that are provided with resistors respectively obtain the analog signal $V_{k=1}$ with the phase of 0 degrees, the analog signal $V_{k=2}$ with the phase of 60 degrees, the analog signal $V_{k=3}$ with the phase of 120 degrees, the analog signal $V_{k=4}$ with the phase of 180 degrees, the analog signal $V_{k=5}$ with the phase of 240 degrees, and the analog signal $V_{k=6}$ with the phase of 300 degrees based on the baseband transmit signal $V_{s=1}$ with the phase of 0 degrees, the baseband transmit signal $V_{s=2}$ with the phase of 90 degrees, the baseband transmit signal $V_{s=3}$ with the phase of 180 degrees, and the baseband transmit signal $V_{s=4}$ with the phase of 270 degrees, the formed analog signal $V_k$ usually has fixed amplitude attenuation close to 4.8 decibels (dB) compared with the input baseband transmit signal $V_s$. In this case, an amplitude of the input baseband transmit signal may be increased, for example, an amplifier is disposed before the phase processing circuit 22 to increase the amplitude of the input baseband transmit signal; and/or an amplitude of the analog signal is increased, for example, an amplifier is disposed after the phase processing circuit 22 to increase the amplitude of the analog signal, so that the amplitude of the input baseband transmit signal is the same as the amplitude of the analog signal, to ensure that amplitudes of the six analog signals are the same.

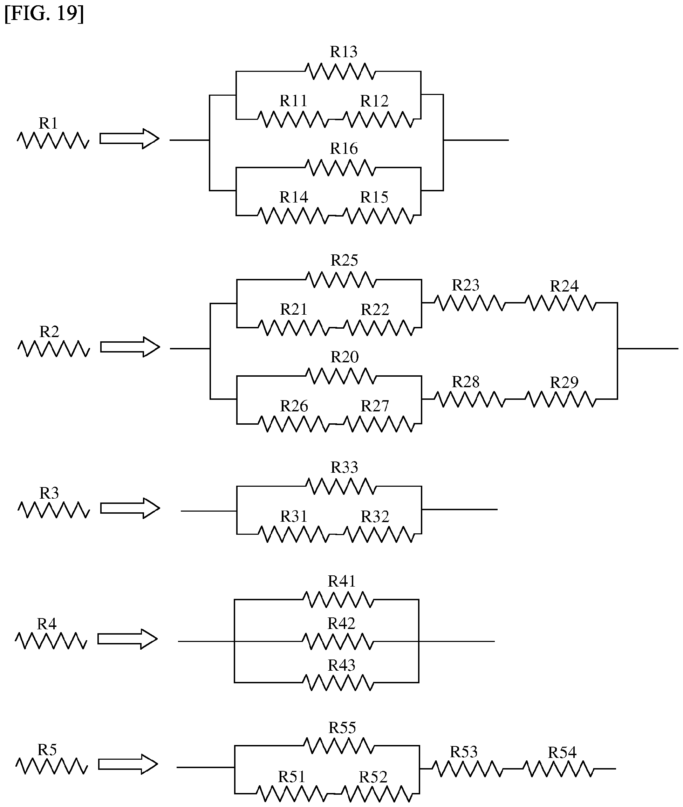

For example, when the phase processing circuit 22 is disposed between a frequency mixer and an analog baseband processing circuit, because an equivalent impedance of the frequency mixer is extremely low, it is required that an equivalent impedance of the phase processing circuit 22 implemented via a resistor cannot be excessively large. In addition, because the phase processing circuit 22 implemented via the resistor is usually driven by an operational amplifier, the equivalent impedance of the phase processing circuit 22 implemented via the resistor cannot be excessively small in view of a power consumption problem. Therefore, a resistance value of any resistor in the phase processing circuit 22 shown in FIG. 18 may be set to predetermined times a predetermined resistance value Ra, and the predetermined resistance value Ra may not exceed hundreds of $\Omega$. For example, as shown in FIG. 19, a resistor R1 includes a sub-resistor R11 and a sub-resistor R12 that are connected in series between a first end and a second end of the resistor R1, a sub-resistor R13 that is connected in parallel to a series structure of the sub-resistor R11 and the sub-resistor R12, a sub-resistor R14 and a sub-resistor R15 that are connected in series between the first end and the second end of the resistor R1, and a sub-resistor R16 that is connected in parallel to a series structure of the sub-resistor R14 and the sub-resistor R15. Resistance values of the sub-resistor R11 and the sub-resistor R14 each are $\sqrt[2]{3}$ times the predetermined resistance value Ra, and are denoted as $\sqrt[2]{3}\mathrm{Ra}$, and resistance values of the sub-resistor R12, the sub-resistor R13, the sub-resistor R15, and the sub-resistor R16 each are the predetermined resistance value Ra, and are denoted as Ra. Therefore, a resistance value of the resistor R1 is $\dfrac{(\sqrt[2]{3}-1)}{2}\mathrm{Ra}$.

A resistor R2 includes a sub-resistor R21, a sub-resistor R22, a sub-resistor R23, and a sub-resistor R24 that are connected in series between a first end and a second end of the resistor R2, a sub-resistor R25 that is connected in parallel to a series structure of the sub-resistor R21 and the sub-resistor R22, a sub-resistor R26, a sub-resistor R27, a sub-resistor R28, and a sub-resistor R29 that are connected in series between the first end and the second end of the resistor R2, and a sub-resistor R20 that is connected in parallel to a series structure of the sub-resistor R26 and the sub-resistor R27. Resistance values of the sub-resistor R21 and the sub-resistor R26 each are $\sqrt[2]{3}$ times the predetermined resistance value Ra, and are denoted as $\sqrt[2]{3}\mathrm{Ra}$, and resistance values of the sub-resistor R22, the sub-resistor R23, the sub-resistor R24, the sub-resistor R25, the sub-resistor R27, the sub-resistor R28, the sub-resistor R29, and the sub-resistor R20 each are the predetermined resistance value Ra, and are denoted as Ra. Therefore, a resistance value of the resistor R2 is $\dfrac{(\sqrt[2]{3}+1)}{2}\mathrm{Ra}$.

A resistor R3 includes a sub-resistor R31 and a sub-resistor R32 that are connected in series between a first end and a second end of the resistor R3, and a sub-resistor R33 that is connected in parallel to a series structure of the sub-resistor R31 and the sub-resistor R32. A resistance value of the sub-resistor R31 is $\sqrt[2]{3}$ times the predetermined resistance value Ra, and is denoted as $\sqrt[2]{3}\mathrm{Ra}$, and resistance values of the sub-resistor R32 and the sub-resistor R33 each are the predetermined resistance value Ra, and are denoted as Ra. Therefore, a resistance value of the resistor R2 is

$$\left(\sqrt[2]{3}-1\right)\mathrm{Ra}$$
.

A resistor R4 includes a sub-resistor R41, a sub-resistor R42, and a sub-resistor R43 that are connected in parallel between a first end and a second end of the resistor R4. Resistance values of the sub-resistor R41, the sub-resistor R42, and the sub-resistor R43 each are $\sqrt[2]{3}$ times the predetermined resistance value Ra, and are denoted as $\sqrt[2]{3}\mathrm{Ra}$. Therefore, a resistance value of the resistor R4 is $\dfrac{1}{\sqrt[2]{3}}\mathrm{Ra}$.

A resistor R5 includes a sub-resistor R51, a sub-resistor R52, a sub-resistor R53, and a sub-resistor R54 that are connected in series between a first end and a second end of the resistor R5, and a sub-resistor R55 that is connected in parallel to a series structure of the sub-resistor R51 and the sub-resistor R52. A resistance value of the sub-resistor R51 is $\sqrt[2]{3}$ times the predetermined resistance value Ra, and is denoted as $\sqrt[2]{3}\mathrm{Ra}$, and resistance values of the sub-resistor R52, the sub-resistor R53, the sub-resistor R54, and the sub-resistor R55 each are the predetermined resistance value Ra, and are denoted as Ra. Therefore, a resistance value of the resistor R5 is $\left(\sqrt[2]{3}+1\right)\mathrm{Ra}$.

For example, when a layout of the phase processing circuit 22 is drawn, resistors with a same resistance value need to be placed together as much as possible, to ensure consistent ambient environments of the resistors. In addition, an input baseband transmit signal enters from the middle and is as close as possible to a resistor with a smallest value, and an analog signal is output from both sides.

For example, when the electronic component E21 shown in FIG. 13 or FIG. 14 is implemented via a resistor, the electronic sub-component E211, the electronic sub-component E212, and the electronic sub-component E213 are specifically resistors, where a resistance value of the electronic sub-component E211 is $\sqrt[2]{3}$ times the predetermined resistance value Ra, and is denoted as $\sqrt[2]{3}\mathrm{Ra}$, a resistance value of the electronic sub-component E212 is $\sqrt[2]{3}$ times the predetermined resistance value Ra, and is denoted as $\mathrm{Ra}\sqrt[2]{3}$, and a resistance value of the electronic sub-component E213 is $\sqrt[2]{3}$ times the predetermined resistance value Ra, and is denoted as $\sqrt[2]{3}\text{Ra}$. Therefore, a resistance value of the electronic component E21 formed by the resistors is $\dfrac{1}{\sqrt[2]{3}}\text{Ra}$.

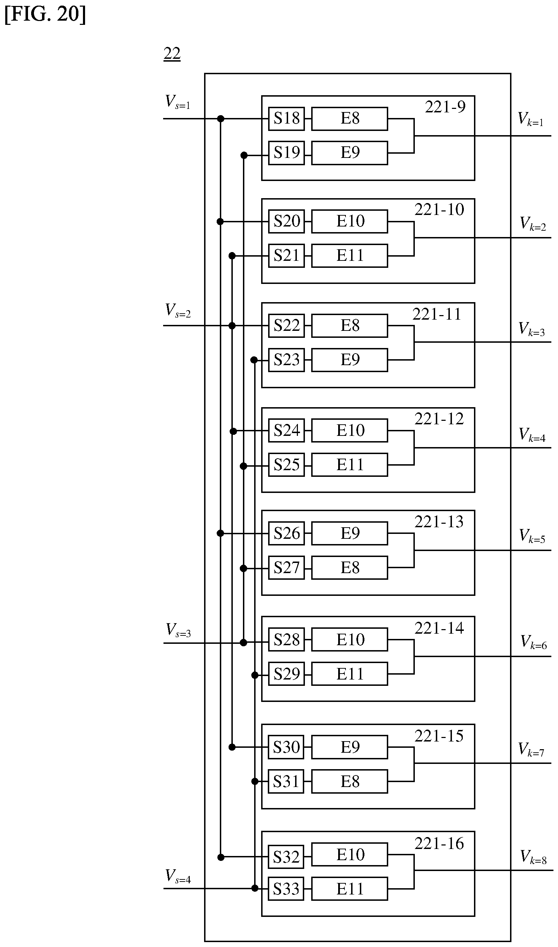

FIG. 20 is a diagram of a structure of a phase processing circuit 22 that receives two pairs of orthogonal baseband transmit signals in a differential form and outputs a multi-phase signal by disposing eight interpolation networks according to an embodiment of this application. The multi-phase signal includes eight analog signals whose phases are respectively 0 degrees, 45 degrees, 90 degrees, 135 degrees, 180 degrees, 225 degrees, 270 degrees, and 315 degrees, where the eight analog signals include four pairs of differential signals. For example, the two pairs of orthogonal baseband signals in the differential form include four baseband transmit signals. A baseband transmit signal $V_{s=1}$ is input from a first input end of the phase processing circuit 22, and a phase of the baseband transmit signal $V_{s=1}$ is 0 degrees. A baseband transmit signal $V_{s=2}$ is input from a second input end of the phase processing circuit 22, and a phase of the baseband transmit signal $V_{s=2}$ is 90 degrees. The baseband transmit signal $V_{s=1}$ and the baseband transmit signal $V_{s=2}$ are a first pair of orthogonal baseband signals. A baseband transmit signal $V_{s=3}$ is input from a third input end of the phase processing circuit 22, and a phase of the baseband transmit signal $V_{s=3}$ is 180 degrees. A baseband transmit signal $V_{s=4}$ is input from a fourth input end of the phase processing circuit 22, and a phase of the baseband transmit signal $V_{s=4}$ is 270 degrees. The baseband transmit signal $V_{s=3}$ and the baseband transmit signal $V_{s=4}$ are a second pair of orthogonal baseband signals. The baseband transmit signal $V_{s=1}$ is also referred to as a first input signal received by any one of the six interpolation networks, the baseband transmit signal $V_{s=2}$ is also referred to as a second input signal received by any one of the six interpolation networks, the baseband transmit signal $V_{s=3}$ is also referred to as a third input signal received by any one of the six interpolation networks, and the baseband transmit signal $V_{s=4}$ is also referred to as a fourth input signal received by any one of the six interpolation networks.

The phase processing circuit 22 includes the eight interpolation networks: an interpolation network 221-9, an interpolation network 221-10, an interpolation network 221-11, an interpolation network 221-12, an interpolation network 221-13, an interpolation network 221-14, an interpolation network 221-15, and an interpolation network 221-16.

The phase processing circuit 22 further includes eight output ends. The interpolation network 221-9 is coupled to a 1st output end in the eight output ends, the interpolation network 221-10 is coupled to a 2nd output end in the eight output ends, the interpolation network 221-11 is coupled to a 3rd output end in the eight output ends, the interpolation network 221-12 is coupled to a 4th output end in the eight output ends, the interpolation network 221-13 is coupled to a 5th output end in the eight output ends, the interpolation network 221-14 is coupled to a 6th output end in the eight output ends, the interpolation network 221-15 is coupled to a 7th output end in the eight output ends, and the interpolation network 221-16 is coupled to an 8th output end in the eight output ends.

The interpolation network 221-9 includes an electronic component E8 coupled between the first input end and the 1st output end, and an electronic component E9 coupled between the third input end and the 1st output end. A ratio of an electrical parameter of the electronic component E8 to an electrical parameter of the electronic component E9 is $\left(2 - \sqrt[2]{2}\right) : \left(2 + \sqrt[2]{2}\right)$. In this case, the interpolation network 221-9 performs interpolation on the baseband transmit signal $V_{s=1}$ based on an interpolation factor with a value of $\dfrac{\left(2+\sqrt[2]{2}\right)}{4}$, and performs interpolation on the baseband transmit signal $V_{s=3}$ based on an interpolation factor with a value of $\dfrac{\left(2-\sqrt[2]{2}\right)}{4}$. For an analog signal $V_{k=1} = \dfrac{\left(2+\sqrt[2]{2}\right)}{4} * V_{s=1} + \dfrac{\left(2-\sqrt[2]{2}\right)}{4} * V_{s=3}$ obtained by the interpolation network 221-9, a phase of the analog signal $V_{k=1}$ is 0 degrees, and the analog signal is also referred to as a baseband transmit signal.

The interpolation network 221-10 includes an electronic component E10 coupled between the first input end and the 2nd output end, and an electronic component E11 coupled between the second input end and the 2nd output end. A ratio of an electrical parameter of the electronic component E10 to an electrical parameter of the electronic component E11 is 1: 1. In this case, the interpolation network 221-10 performs interpolation on the baseband transmit signal $V_{s=1}$ based on an interpolation factor with a value of $\dfrac{1}{2}$, and performs interpolation on the baseband transmit signal $V_{s=2}$ based on an interpolation factor with a value of $\dfrac{1}{2}$. For an analog signal $V_{k=2} = \dfrac{1}{2} * V_{s=1} + \dfrac{1}{2} * V_{s=2}$ obtained by the interpolation network 221-10, a phase of the analog signal $V_{k=2}$ is 45 degrees, and the analog signal is also referred to as a baseband transmit signal.

The interpolation network 221-11 includes an electronic component E8 coupled between the second input end and the 3rd output end, and an electronic component E9 coupled between the fourth input end and the 3rd output end. A ratio of an electrical parameter of the electronic component E8 to an electrical parameter of the electronic component E9 is $\left(2 - \sqrt[2]{2}\right):\left(2 + \sqrt[2]{2}\right)$ . In this case, the interpolation network 221-11 performs interpolation on the baseband transmit signal $V_{s=2}$ based on an interpolation factor with a value of $\frac{\left(2 + \sqrt[2]{2}\right)}{4}$ , and performs interpolation on the baseband transmit signal $V_{s=4}$ based on an interpolation factor with a value of $\frac{\left(2 - \sqrt[2]{2}\right)}{4}$ . For an analog signal $V_{k=3}$ = $\frac{\left(2 + \sqrt[2]{2}\right)}{4} * V_{s=2} + \frac{\left(2 - \sqrt[2]{2}\right)}{4} * V_{s=4}$ obtained by the interpolation network 221-11, a phase of the analog signal $V_{k=3}$ is 90 degrees, and the analog signal is also referred to as a baseband transmit signal.

The interpolation network 221-12 includes an electronic component E10 coupled between the second input end and the 4th output end, and an electronic component E11 coupled between the third input end and the 4th output end. A ratio of an electrical parameter of the electronic component E10 to an electrical parameter of the electronic component E11 is 1: 1. In this case, the interpolation network 221-12 performs interpolation on the baseband transmit signal $V_{s=2}$ based on an interpolation factor with a value of $\frac{1}{2}$ , and performs interpolation on the baseband transmit signal $V_{s=3}$ based on an interpolation factor with a value of $\frac{1}{2}$ . For an analog signal $V_{k=4} = \frac{1}{2} * V_{s=2} + \frac{1}{2} * V_{s=3}$ obtained by the interpolation network 221-12, a phase of the analog signal $V_{k=4}$ is 135 degrees, and the analog signal is also referred to as a baseband transmit signal.

The interpolation network 221-13 includes an electronic component E9 coupled between the first input end and the 5th output end, and an electronic component E8 coupled between the third input end and the 5th output end. A ratio of an electrical parameter of the electronic component E8 to an electrical parameter of the electronic component E9 is $\left(2 - \sqrt[2]{2}\right):\left(2 + \sqrt[2]{2}\right)$ . In this case, the interpolation network 221-13 performs interpolation on the baseband transmit signal $V_{s=1}$ based on an interpolation factor with a value of $\frac{\left(2 - \sqrt[2]{2}\right)}{4}$ , and performs interpolation on the baseband transmit signal $V_{s=3}$ based on an interpolation factor with a value of $\frac{\left(2 + \sqrt[2]{2}\right)}{4}$ . For an analog signal

$V_{k=5} = \frac{\left(2 - \sqrt[2]{2}\right)}{4} * V_{s=1} + \frac{\left(2 + \sqrt[2]{2}\right)}{4} * V_{s=3}$ obtained by the interpolation network 221-13, a phase of the analog signal $V_{k=5}$ is 180 degrees, and the analog signal is also referred to as a baseband transmit signal.

The interpolation network 221-14 includes an electronic component E10 coupled between the third input end and the 6th output end, and an electronic component E11 coupled between the fourth input end and the 6th output end. A ratio of an electrical parameter of the electronic component E10 to an electrical parameter of the electronic component E11 is 1: 1 . In this case, the interpolation network 221-14 performs interpolation on the baseband transmit signal $V_{s=3}$ based on an interpolation factor with a value of $\frac{1}{2}$ , and performs interpolation on the baseband transmit signal $V_{s=4}$ based on an interpolation factor with a value of $\frac{1}{2}$ . For an analog signal $V_{k=6} = \frac{1}{2} * V_{s=3} + \frac{1}{2} * V_{s=4}$ obtained by the interpolation network 221-14, a phase of the analog signal $V_{k=6}$ is 225 degrees, and the analog signal is also referred to as a baseband transmit signal.

The interpolation network 221-15 includes an electronic component E9 coupled between the second input end and the 7th output end, and an electronic component E8 coupled between the fourth input end and the 7th output end. A ratio of an electrical parameter of the electronic component E8 to an electrical parameter of the electronic component E9 is $\left(2 - \sqrt[2]{2}\right):\left(2 + \sqrt[2]{2}\right)$ . In this case, the interpolation network 221-15 performs interpolation on the baseband transmit signal $V_{s=2}$ based on an interpolation factor with a value of $\frac{\left(2 - \sqrt[2]{2}\right)}{4}$ , and performs interpolation on the baseband transmit signal $V_{s=4}$ based on an interpolation factor with a value of $\frac{\left(2 + \sqrt[2]{2}\right)}{4}$ . For an analog signal

$V_{k=7} = \frac{\left(2 - \sqrt[2]{2}\right)}{4} * V_{s=2} + \frac{\left(2 + \sqrt[2]{2}\right)}{4} * V_{s=4}$ obtained by the interpolation network 221-15, a phase of the analog signal $V_{k=7}$ is 270 degrees, and the analog signal is also referred to as a baseband transmit signal.

The interpolation network 221-16 includes an electronic component E10 coupled between the first input end and the 8th output end, and an electronic component E11 coupled between the fourth input end and the 8th output end. A ratio of an electrical parameter of the electronic component E10 to an electrical parameter of the electronic component E11 is 1: 1. In this case, the interpolation network 221-16 performs interpolation on the baseband transmit signal $V_{s=1}$ based on an interpolation factor with a value of $\frac{1}{2}$, and performs interpolation on the baseband transmit signal $V_{s=4}$ based on an interpolation factor with a value of $\frac{1}{2}$. For an analog signal $V_{k=8} = \frac{1}{2} * V_{s=1} + \frac{1}{2} * V_{s=4}$ formed at the output end of the interpolation network 221-16, a phase of the analog signal $V_{k=8}$ is 315 degrees, and the analog signal is also referred to as a baseband transmit signal. In some other embodiments, a switch is usually disposed in the interpolation network, to control enabling and disabling of the interpolation network in the phase processing circuit 22. Refer to FIG. 20. For example, in the interpolation network 221-9, a switch S 18 is disposed between the first input end and the electronic component E8, and a switch S19 is disposed between the third input end and the electronic component E9; in the interpolation network 221-10, a switch S20 is disposed between the first input end and the electronic component E10, and a switch S21 is disposed between the second input end and the electronic component E11; in the interpolation network 221-11, a switch S22 is disposed between the second input end and the electronic component E8, and a switch S23 is disposed between the fourth input end and the electronic component E9; in the interpolation network 221-12, a switch S24 is disposed between the second input end and the electronic component E10, and a switch S25 is disposed between the third input end and the electronic component E11; in the interpolation network 221-13, a switch S26 is disposed between the first input end and the electronic component E9, and a switch S27 is disposed between the third input end and the electronic component E8; in the interpolation network 221-14, a switch S28 is disposed between the third input end and the electronic component E10, and a switch S29 is disposed between the fourth input end and the electronic component E11; in the interpolation network 221-15, a switch S30 is disposed between the second input end and the electronic component E9, and a switch S31 is disposed between the fourth input end and the electronic component E8; and in the interpolation network 221-16, a switch S32 is disposed between the first input end and the electronic component E10, and a switch S33 is disposed between the fourth input end and the electronic component E11. In this case, one or more of the switches are controlled to be turned on and off. For example, when the switch S32 and the switch S33 are turned off, and other switches are turned on, seven analog signals whose phases are respectively 0 degrees, 45 degrees, 90 degrees, 135 degrees, 180 degrees, 225 degrees, and 270 degrees are output. For another example, when the switch S30 is turned off, the phase of the analog signal $V_{k=7}$ formed at an output end of the interpolation network 221-15 changes to another phase. In other words, the switch is disposed, so that the phase processing circuit 22 can select one or more of the analog signal $V_{k=1}$, the analog signal $V_{k=2}$, the analog signal $V_{k=3}$, the analog signal $V_{k=4}$, the analog signal $V_{k=5}$, the analog signal $V_{k=6}$, the analog signal $V_{k=7}$, and the analog signal $V_{k=8}$ based on an actual requirement, and can also adjust the phase of the analog signal. This is not limited in embodiments of this application.

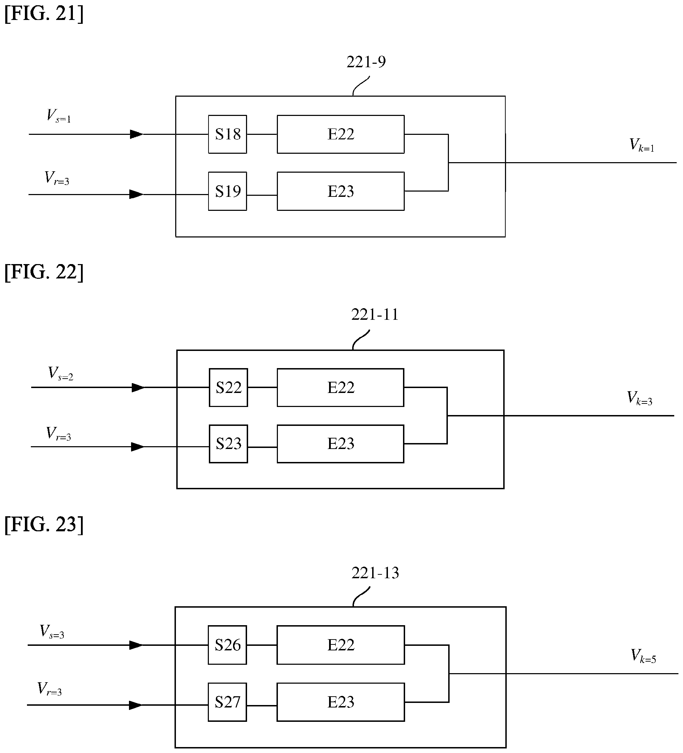

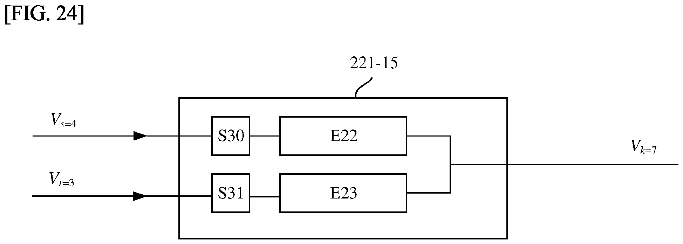

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the eight interpolation networks. Therefore, the interpolation network 221-9 shown in FIG. 20 may be replaced with an interpolation network 221-9 shown in FIG. 21, and/or the interpolation network 221-11 shown in FIG. 20 may be replaced with an interpolation network 221-11 shown in FIG. 22, and/or the interpolation network 221-13 shown in FIG. 20 may be replaced with an interpolation network 221-13 shown in FIG. 23, and/or the interpolation network 221-15 shown in FIG. 20 may be replaced with an interpolation network 221-15 shown in FIG. 24.

As shown in FIG. 21, the interpolation network 221-9 includes an electronic component E22 coupled between the first input end and the 1st output end, and an electronic component E23 coupled between the alternating current ground of the radio frequency circuit 20 and the 1st output end. A ratio of an electrical parameter of the electronic component E22 to an electrical parameter of the electronic component E23 is $\left(\frac{\sqrt[2]{2}}{2}\right) : \left(1 + \frac{\sqrt[2]{2}}{2}\right)$. In this case, the interpolation network 221-9 performs interpolation on a baseband transmit signal $V_{s=1}$ based on an interpolation factor with a value of $\frac{\sqrt[2]{2}}{2}$, and performs interpolation on the reference signal $V_{r=3}$ based on an interpolation factor with a value of $\frac{(2-\sqrt[2]{2})}{2}$. For an analog signal $V_{k=1} = \frac{\sqrt[2]{2}}{2} * V_{s=1} + \frac{(2-\sqrt[2]{2})}{2} * V_{r=3}$ obtained by the interpolation network 221-9, a phase of the analog signal $V_{k=1}$ is 0 degrees, and the analog signal is also referred to as a baseband transmit signal. The switch S18 is specifically disposed between the first input end of the phase processing circuit 22 and the electronic component E22, and the switch S19 is specifically disposed between the alternating current ground of the radio frequency circuit 20 and the electronic component E23.

As shown in FIG. 22, the interpolation network 221-11 includes an electronic component E22 coupled between the second input end and the 3rd output end, and an electronic component E23 coupled between the alternating current ground of the radio frequency circuit 20 and the 3rd output end. A ratio of an electrical parameter of the electronic component E22 to an electrical parameter of the electronic component E23 is $\left(\frac{\sqrt[2]{2}}{2}\right):(1+\frac{\sqrt[2]{2}}{2})$. In this case, the interpolation network 221-11 performs interpolation on a baseband transmit signal $V_{s=2}$ based on an interpolation factor with a value of $\frac{\sqrt[2]{2}}{2}$, and performs interpolation on the reference signal $V_{r=3}$ based on an interpolation factor with a value of $\frac{(2-\sqrt[2]{2})}{2}$. For an analog signal

$$V_{k=3} = \frac{\sqrt[2]{2}}{2} * V_{s=2} + \frac{(2-\sqrt[2]{2})}{2} * V_{r=3}$$ obtained by the interpolation network 221-11, a phase of the analog signal $V_{k=3}$ is 90 degrees, and the analog signal is also referred to as a baseband transmit signal. The switch S22 is specifically disposed between the second input end of the phase processing circuit 22 and the electronic component E22, and the switch S23 is specifically disposed between the alternating current ground of the radio frequency circuit 20 and the electronic component E23.

As shown in FIG. 23, the interpolation network 221-13 includes an electronic component E22 coupled between the third input end and the 5th output end, and an electronic component E23 coupled between the alternating current ground of the radio frequency circuit 20 and the 5th output end. A ratio of an electrical parameter of the electronic component E22 to an electrical parameter of the electronic component E23 is $\left(\frac{\sqrt[2]{2}}{2}\right):(1+\frac{\sqrt[2]{2}}{2})$. In this case, the interpolation network 221-13 performs interpolation on a baseband transmit signal $V_{s=3}$ based on an interpolation factor with a value of $\frac{\sqrt[2]{2}}{2}$, and performs interpolation on the reference signal $V_{r=3}$ based on an interpolation factor with a value of $\frac{(2-\sqrt[2]{2})}{2}$. For an analog signal

$$V_{k=5} = \frac{\sqrt[2]{2}}{2} * V_{s=3} + \frac{(2-\sqrt[2]{2})}{2} * V_{r=3}$$ obtained by the interpolation network 221-13, a phase of the analog signal $V_{k=5}$ is 180 degrees, and the analog signal is also referred to as a baseband transmit signal. The switch S26 is specifically disposed between the third input end of the phase processing circuit 22 and the electronic component E22, and the switch S27 is specifically disposed between the alternating current ground of the radio frequency circuit 20 and the electronic component E23.

As shown in FIG. 24, the interpolation network 221-15 includes an electronic component E22 coupled between the fourth input end and the 7th output end, and an electronic component E23 coupled between the alternating current ground of the radio frequency circuit 20 and the 7th output end. A ratio of an electrical parameter of the electronic component E22 to an electrical parameter of the electronic component E23 is $\left(\frac{\sqrt[2]{2}}{2}\right):(1+\frac{\sqrt[2]{2}}{2})$. In this case, the interpolation network 221-15 performs interpolation on a baseband transmit signal $V_{s=4}$ based on an interpolation factor with a value of $\frac{\sqrt[2]{2}}{2}$, and performs interpolation on the reference signal $V_{r=3}$ based on an interpolation factor with a value of $\frac{(2-\sqrt[2]{2})}{2}$. For an analog signal

$$V_{k=7} = \frac{\sqrt[2]{2}}{2} * V_{s=4} + \frac{(2-\sqrt[2]{2})}{2} * V_{r=3}$$ obtained by the interpolation network 221-15, a phase of the analog signal $V_{k=7}$ is 270 degrees, and the analog signal is also referred to as a baseband transmit signal. The switch S30 is specifically disposed between the fourth input end of the phase processing circuit 22 and the electronic component E22, and the switch S31 is specifically disposed between the alternating current ground of the radio frequency circuit 20 and the electronic component E23.

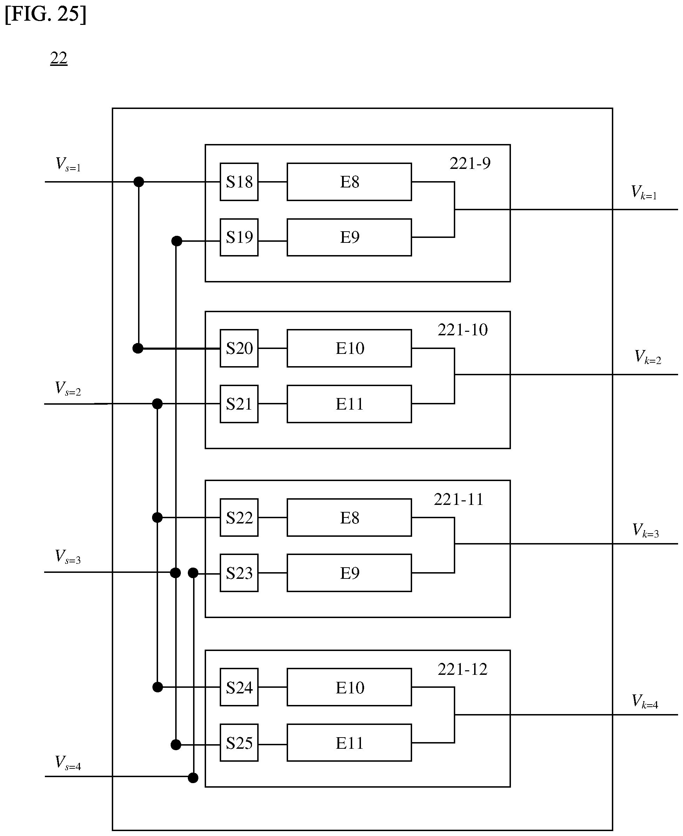

Refer to FIG. 25. Compared with the phase processing circuit 22 shown in FIG. 20, a phase processing circuit 22 shown in FIG. 25 includes four interpolation networks: an interpolation network 221-9, an interpolation network 221-10, an interpolation network 221-11, and an interpolation network 221-12. The interpolation network 221-9 shown in FIG. 25 is the same as the interpolation network 221-9 shown in FIG. 20, a phase of an analog signal $V_{k=1}$ obtained by the interpolation network 221-9 is 0 degrees, and the analog signal is also referred to as a baseband transmit signal. The interpolation network 221-10 shown in FIG. 25 is the same as the interpolation network 221-10 shown in FIG. 20, a phase of an analog signal $V_{k=2}$ obtained by the interpolation network 221-10 is 45 degrees, and the analog signal is also referred to as a baseband transmit signal. The interpolation network 221-11 shown in FIG. 25 is the same as the interpolation network 221-11 shown in FIG. 20, a phase of an analog signal $V_{k=3}$ obtained by the interpolation network 221-11 is 90 degrees, and the analog signal is also referred to as a baseband transmit signal. The interpolation network 221-12 shown in FIG. 25 is the same as the interpolation network 221-12 shown in FIG. 20, a phase of an analog signal $V_{k=4}$ obtained by the interpolation network 221-12 is 135 degrees, and the analog signal is also referred to as a baseband transmit signal.

For example, specifically, in the phase processing circuit shown in FIG. 25 compared with the phase processing circuit shown in FIG. 20, the interpolation network 221-13, the interpolation network 221-14, the interpolation network 221-15, and the interpolation network 221-16 are deleted, and the interpolation network 221-9, the interpolation network 221-10, the interpolation network 221-11, and the interpolation network 221-12 are reserved, so that the four interpolation networks respectively output four analog signals whose phases are respectively 0 degrees, 45 degrees, 90 degrees, and 135 degrees. In some other embodiments, in the phase processing circuit compared with the phase processing circuit 22 shown in FIG. 20, the interpolation network 221-9, the interpolation network 221-10, the interpolation network 221-11, and the interpolation network 221-12 may be deleted, and the interpolation network 221-13, the interpolation network 221-14, the interpolation network 221-15, and the interpolation network 221-16 are reserved, so that the four interpolation networks respectively output four analog signals whose phases are respectively 180 degrees, 225 degrees, 270 degrees, and 315 degrees.

In some other embodiments, a switch is usually disposed in the interpolation network, to control enabling and disabling of the interpolation network in the phase processing circuit 22 shown in FIG. 25. For a position at which the switch is disposed, refer to FIG. 20. Details are not described herein again.

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the eight interpolation networks. Therefore, the interpolation network 221-9 shown in FIG. 25 may be replaced with the interpolation network 221-9 shown in FIG. 21, and/or the interpolation network 221-11 shown in FIG. 25 may be replaced with the interpolation network 221-11 shown in FIG. 22.

In another embodiment, the switch in FIG. 20 or FIG. 25 may be alternatively disposed between an electronic component in the interpolation network and the output end of the phase processing circuit 22. This is not limited in embodiments of this application.

It should be noted that any switch in FIG. 20 or FIG. 25 may be implemented via any one of the following: a diode, a triode, and a transistor. Selection of the switch is not limited in embodiments of this application. In addition, more or fewer switches may be disposed. This is not limited in embodiments of this application.

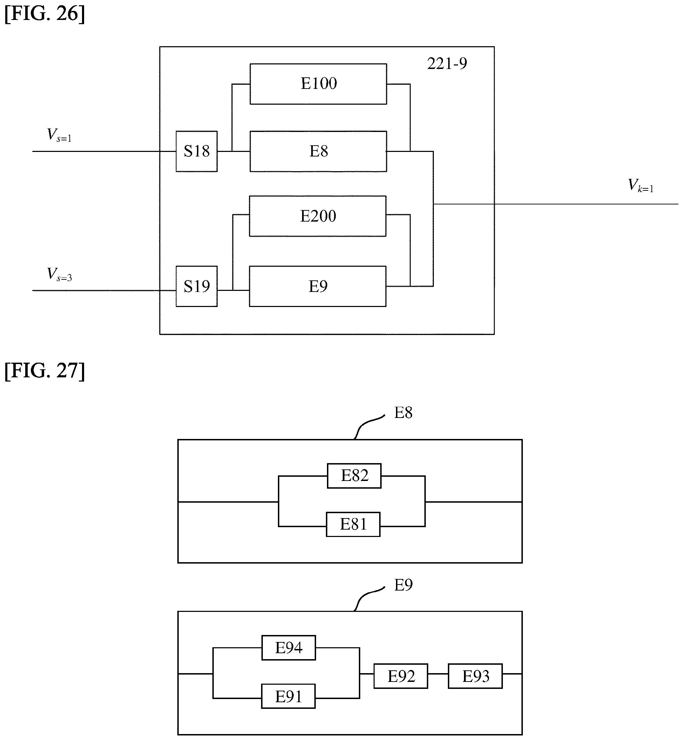

For example, refer to FIG. 20 or FIG. 25. For example, in the interpolation network 221-9, when the ratio of the electrical parameter of the electronic component E8 to the electrical parameter of the electronic component E9 does not satisfy $\left(2 - \sqrt[2]{2}\right):\left(2 + \sqrt[2]{2}\right)$, another electronic component may be connected in parallel to two ends of one or both of the electronic component E8 and the electronic component E9, for example, as shown in FIG. 26, one electronic component E100 may be connected in parallel to two ends of the electronic component E8, one electronic component E200 may be connected in parallel to two ends of the electronic component E9, and electrical parameters of the electronic component E100 and the electronic component E200 are adjustable, so that the interpolation network 221-9 adjusts a ratio of an overall electrical parameter of the electronic component E8 and the electronic component E100 to an overall electrical parameter of the electronic component E9 and the electronic component E200 to be $\left(2 - \sqrt[2]{2}\right):\left(2 + \sqrt[2]{2}\right)$. Alternatively, another electronic component is connected in series between an output end and one or both of the electronic component E8 and the electronic component E9, so that the ratio of the electrical parameter of the electronic component E8 to the electrical parameter of the electronic component E9 satisfies $\left(2 - \sqrt[2]{2}\right):\left(2 + \sqrt[2]{2}\right)$. A quantity of electronic components in the interpolation network and a relationship of connection between the electronic components are not limited in embodiments of this application.

Another electronic component connected in parallel or in series may be disposed in the interpolation network 221-10, the interpolation network 221-11, the interpolation network 221-12, the interpolation network 221-13, the interpolation network 221-14, the interpolation network 221-15, and the interpolation network 221-16 shown in FIG. 20, and another electronic component connected in parallel or in series may also be disposed in the interpolation network 221-10, the interpolation network 221-11, and the interpolation network 221-12 shown in FIG. 25. This is not limited in embodiments of this application.

For example, the electronic component shown in FIG. 20, FIG. 25, or FIG. 26 includes one or more of the following: a capacitor, a resistor, and an inductor. When the electronic component is a resistor, an electrical parameter is a resistance value; when the electronic component is a capacitor, an electrical parameter is a capacitance value; or when the electronic component is an inductor, an electrical parameter is an inductance value.

Refer to FIG. 27. The electronic component E8 shown in FIG. 20, FIG. 25, or FIG. 26 includes an electronic sub-component E81 and an electronic sub-component E82 that are connected in parallel between a first end and a second end of the electronic component E8. A ratio of an electrical parameter of the electronic sub-component E81 to an electrical parameter of the electronic sub-component E82 is $1 : \sqrt[2]{2}$.

The electronic component E9 shown in FIG. 20, FIG. 25, or FIG. 26 includes an electronic sub-component E91, an electronic sub-component E92, and an electronic sub-component E93 that are connected in series between a first end and a second end of the electronic component E9, and an electronic sub-component E94 that is connected in parallel to the electronic sub-component E91. A ratio of an electrical parameter of the electronic sub-component E91 to an electrical parameter of the electronic sub-component E92 to an electrical parameter of the electronic sub-component E93 to an electrical parameter of the electronic sub-component E94 is

$$1 : \sqrt[2]{2} : \sqrt[2]{2} : \sqrt[2]{2} .$$

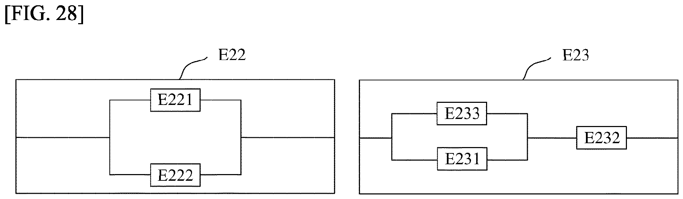

For the electronic component E22 and the electronic component E23 shown in FIG. 21, FIG. 22, FIG. 23, or FIG. 24, refer to FIG. 28. As shown in FIG. 28, the electronic component E22 shown in FIG. 21, FIG. 22, FIG. 23, or FIG. 24 includes an electronic sub-component E221 and an electronic sub-component E222 that are connected in parallel between a first end and a second end of the electronic component E22. A ratio of an electrical parameter of the electronic sub-component E221 to an electrical parameter of the electronic sub-component E222 is $\sqrt[2]{2} : \sqrt[2]{2}$ .

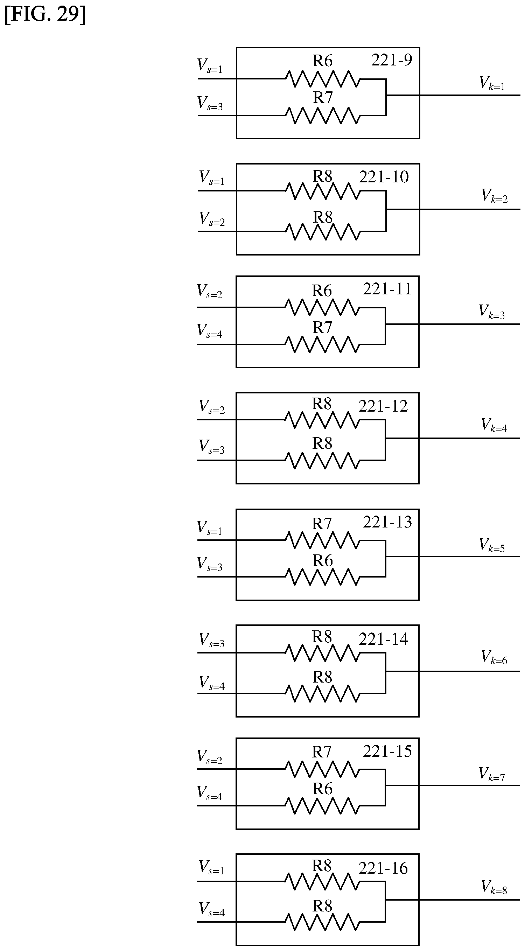

The electronic component E23 shown in FIG. 21, FIG. 22, FIG. 23, or FIG. 24 includes an electronic sub-component E231 and an electronic sub-component E232 that are connected in series between a first end and a second end of the electronic component E23, and an electronic sub-component E233 that is connected in parallel to the electronic sub-component E231. A ratio of an electrical parameter of the electronic sub-component E231 to an electrical parameter of the electronic sub-component E232 to an electrical parameter of the electronic sub-component E233 is $\sqrt[2]{2} : 1 : \sqrt[2]{2}$ . Specifically, as shown in FIG. 29, the phase processing circuit 22 shown in FIG. 20 is analyzed by using an example in which the electronic component is a resistor. The interpolation network 221-9 includes a resistor R6 coupled between the first input end and the 1st output end, and a resistor R7 coupled between the third input end and the 1st output end. A ratio of a resistance value of the resistor R6 to a resistance value of the resistor R7 is

$$\left(2 - \sqrt[2]{2}\right) : \left(2 + \sqrt[2]{2}\right) .$$

The interpolation network 221-10 includes a resistor R8 coupled between the first input end and the 2nd output end, and a resistor R8 coupled between the second input end and the 2nd output end.

The interpolation network 221-11 includes a resistor R6 coupled between the second input end and the 3rd output end, and a resistor R7 coupled between the fourth input end and the 3rd output end. A ratio of a resistance value of the resistor R6 to a resistance value of the resistor R7 is $\left(2 - \sqrt[2]{2}\right) : \left(2 + \sqrt[2]{2}\right)$ .

The interpolation network 221-12 includes a resistor R8 coupled between the second input end and the 4th output end, and an electronic component E8 coupled between the third input end and the 4th output end.

The interpolation network 221-13 includes a resistor R7 coupled between the first input end and the 5th output end, and a resistor R6 coupled between the third input end and the 5th output end. A ratio of a resistance value of the resistor R6 to a resistance value of the resistor R7 is $\left(2 - \sqrt[2]{2}\right) : \left(2 + \sqrt[2]{2}\right)$ .

The interpolation network 221-14 includes a resistor R8 coupled between the third input end and the 6th output end, and a resistor R8 coupled between the fourth input end and the 6th output end.

The interpolation network 221-15 includes a resistor R7 coupled between the second input end and the 7th output end, and a resistor R6 coupled between the fourth input end and the 7th output end. A ratio of an electrical parameter of the resistor R6 to an electrical parameter of the resistor R7 is

$$\left(2 - \sqrt[2]{2}\right) : \left(2 + \sqrt[2]{2}\right) .$$

The interpolation network 221-16 includes a resistor R8 coupled between the first input end and the 8th output end, and a resistor R8 coupled between the fourth input end and the 8th output end.

Therefore, when the interpolation network 221-9, the interpolation network 221-10, the interpolation network 221-11, the interpolation network 221-12, the interpolation network 221-13, the interpolation network 221-14, the interpolation network 221-15, and the interpolation network 221-16 that are provided with resistors respectively output the analog signal $V_{k=1}$ with the phase of 0 degrees, the analog signal $V_{k=2}$ with the phase of 45 degrees, the analog signal $V_{k=3}$ with the phase of 90 degrees, the analog signal $V_{k=4}$ with the phase of 135 degrees, the analog signal $V_{k=5}$ with the phase of 180 degrees, the analog signal $V_{k=6}$ with the phase of 225 degrees, the analog signal $V_{k=7}$ with the phase of 270 degrees, and the analog signal $V_{k=8}$ with the phase of 315 degrees based on the baseband transmit signal $V_{s=1}$ with the phase of 0 degrees, the baseband transmit signal $V_{s=2}$ with the phase of 90 degrees, the baseband transmit signal $V_{s=3}$ with the phase of 180 degrees, and the baseband transmit signal $V_{s=4}$ with the phase of 270 degrees, the analog signal $V_k$ usually has fixed amplitude attenuation close to 3 dB compared with the input baseband transmit signal $V_s$. In this case, an amplitude of the input baseband transmit signal may be increased, for example, an amplifier is disposed before the phase processing circuit 22 to increase the amplitude of the input baseband transmit signal; and/or an amplitude of the analog signal is increased, for example, an amplifier is disposed after the phase processing circuit 22 to increase the amplitude of the analog signal, so that the amplitude of the input baseband transmit signal is the same as the amplitude of the analog signal, to ensure that amplitudes of the eight analog signals are the same.

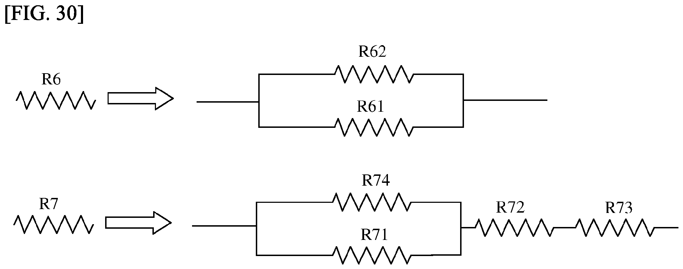

For example, when the phase processing circuit 22 is disposed between a frequency mixer and an analog baseband processing circuit, because an equivalent impedance of the frequency mixer is extremely low, it is required that an equivalent impedance of the phase processing circuit 22 implemented via a resistor cannot be excessively large. In addition, because the phase processing circuit 22 implemented via the resistor is usually driven by an operational amplifier, the equivalent impedance of the phase processing circuit 22 implemented via the resistor cannot be excessively small in view of a power consumption problem. Therefore, a resistance value of any resistor in the phase processing circuit 22 shown in FIG. 29 may be set to predetermined times a predetermined resistance value Ra, and the predetermined resistance value Ra may be tens of $\Omega$. For example, refer to FIG. 30. A resistor R6 includes a sub-resistor R61 and a sub-resistor R62 that are connected in parallel between a first end and a second end of the resistor R6. A resistance value of the sub-resistor R61 is the predetermined resistance value Ra, and is denoted as Ra, and a resistance value of the sub-resistor R62 is $\sqrt[2]{2}$ times the predetermined resistance value Ra, and is denoted as $\sqrt[2]{2}\mathrm{Ra}$. Therefore, a resistance value of the resistor R6 is $(2-\sqrt[2]{2})\mathrm{Ra}$.

A resistor R7 includes a sub-resistor R71, a sub-resistor R72, and a sub-resistor R73 that are connected in series between a first end and a second end of the resistor R7, and a sub-resistor R74 that is connected in parallel to the sub-resistor R71. A resistance value of the sub-resistor R71 is the predetermined resistance value Ra, and is denoted as Ra, and resistance values of the sub-resistor R72, the sub-resistor R73, and the sub-resistor R74 each are $\sqrt[2]{2}$ times the predetermined resistance value Ra, and are denoted as $\sqrt[2]{2}\mathrm{Ra}$. Therefore, a resistance value of the resistor R7 is $(2+\sqrt[2]{2})\mathrm{Ra}$.

A resistance value of a resistor R8 is the predetermined resistance value Ra, and is denoted as Ra.

For example, when a layout of the phase processing circuit 22 is drawn, resistors with a same resistance value need to be placed together as much as possible, to ensure consistent ambient environments of the resistors. In addition, an input baseband transmit signal enters from the middle and is as close as possible to a resistor with a smallest value, and an analog signal is output from both sides.

For example, when the electronic component E22 shown in FIG. 21, FIG. 22, FIG. 23, or FIG. 24 is implemented via a resistor, the electronic sub-component E221 and the electronic sub-component E222 are specifically resistors, where a resistance value of the electronic sub-component E221 is $\sqrt[2]{2}$ times the predetermined resistance value Ra, and is denoted as $\sqrt[2]{2}\mathrm{Ra}$, and a resistance value of the electronic sub-component E222 is $\sqrt[2]{2}$ times the predetermined resistance value Ra, and is denoted as $\sqrt[2]{2}$ Ra. Therefore, a resistance value of the electronic component E22 formed by the resistors is $\frac{\sqrt[2]{2}}{2}\mathrm{Ra}$. When the electronic component E23 shown in FIG. 21, FIG. 22, FIG. 23, or FIG. 24 is implemented via a resistor, the electronic sub-component E231, the electronic sub-component E232, and the electronic sub-component E233 are specifically resistors, where a resistance value of the electronic sub-component E231 is $\sqrt[2]{2}$ times the predetermined resistance value Ra, and is denoted as $\sqrt[2]{2}\mathrm{Ra}$, a resistance value of the electronic sub-component E232 is the predetermined resistance value Ra, and is denoted as Ra, and a resistance value of the electronic sub-component E233 is $\sqrt[2]{2}$ times the predetermined resistance value Ra, and is denoted as $\sqrt[2]{2}\mathrm{Ra}$. Therefore, a resistance value of the electronic component E23 formed by the resistors is $(1+\frac{\sqrt[2]{2}}{2})\mathrm{Ra}$.

For example, in a signal transmission process, the baseband processing circuit may alternatively input one pair of orthogonal baseband signals to the input end of the phase processing circuit 22. Specifically, the one pair of orthogonal baseband signals is a baseband transmit signal $V_{s=1}$ with a phase of 0 degrees and a baseband transmit signal $V_{s=2}$ with a phase of 90 degrees. In addition, the baseband transmit signal $V_{s=1}$ is input from a first input end of the phase processing circuit 22, and the baseband transmit signal $V_{s=2}$ is input from a second input end of the phase processing circuit 22. In this case, the phase processing circuit 22 may output a multi-phase signal by disposing six interpolation networks, and the multi-phase signal includes six analog signals whose phases are respectively 0 degrees, 60 degrees, 120 degrees, 180 degrees, 240 degrees, and 300 degrees, where the six analog signals include three pairs of differential signals; or the phase processing circuit 22 may output a multi-phase signal by disposing eight interpolation networks, and the multi-phase signal includes eight analog signals whose phases are respectively 0 degrees, 45 degrees, 90 degrees, 135 degrees, 180 degrees, 225 degrees, 270 degrees, and 315 degrees, where the eight analog signals include four pairs of differential signals; or the phase processing circuit 22 may output a multi-phase signal by disposing three interpolation networks, and the multi-phase signal includes three analog signals whose phases are respectively 0 degrees, 60 degrees, and 120 degrees, where all the three analog signals are single-ended signals; or the phase processing circuit 22 may output a multi-phase signal by disposing four interpolation networks, and the multi-phase signal includes four analog signals whose phases are respectively 0 degrees, 45 degrees, 90 degrees, and 135 degrees, where all the four analog signals are single-ended signals. This is not limited in embodiments of this application.

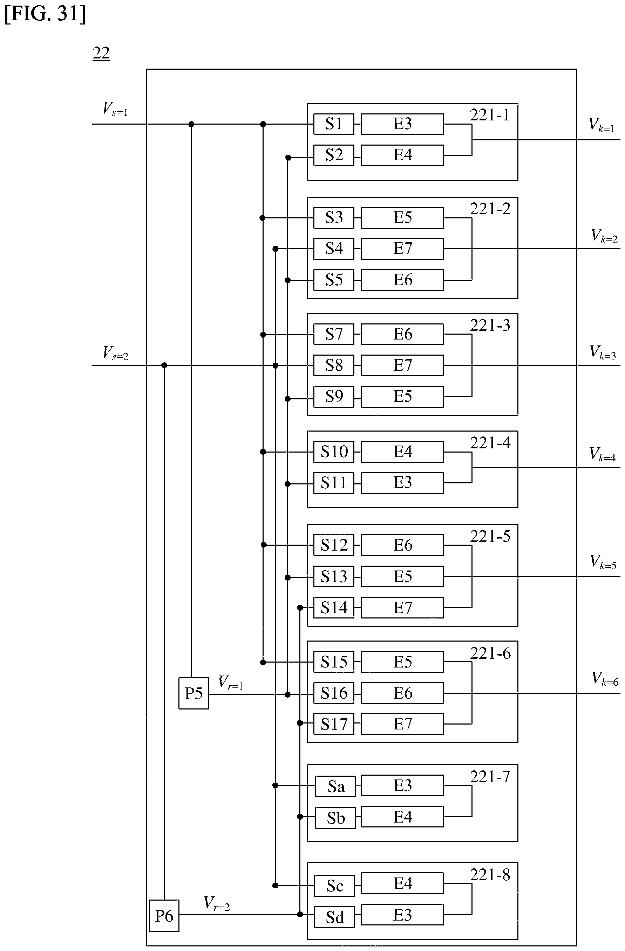

FIG. 31 is a diagram of a structure of a phase processing circuit 22 that receives one pair of orthogonal baseband signals and outputs six analog signals whose phases are respectively 0 degrees, 60 degrees, 120 degrees, 180 degrees, 240 degrees, and 300 degrees by disposing six interpolation networks according to an embodiment of this application, where the six analog signals include three pairs of differential signals. For example, in the one pair of orthogonal baseband signals, a baseband transmit signal $V_{s=1}$ is input from a first input end of the phase processing circuit 22, and a phase of the baseband transmit signal $V_{s=1}$ is 0 degrees; and a baseband transmit signal $V_{s=2}$ is input from a second input end of the phase processing circuit 22, and a phase of the baseband transmit signal $V_{s=2}$ is 90 degrees.

For example, refer to FIG. 31. The phase processing circuit 22 shown in FIG. 31 further includes a phase converter P5 and a phase converter P6. An input end of the phase converter P5 is coupled to the first input end, the phase converter P5 may receive a baseband transmit signal $V_{s=1}$ from the first input end, and the phase converter P5 is configured to generate a reference signal $V_{r=1}$ based on the baseband transmit signal $V_{s=1}$, where the baseband transmit signal $V_{s=1}$ and the reference signal $V_{r=1}$ are in a differential form, a phase of the baseband transmit signal $V_{s=1}$ is 0 degrees, and a phase of the reference signal $V_{r=1}$ is 180 degrees. An input end of the phase converter P6 is coupled to the second input end, the phase converter P6 may receive a baseband transmit signal $V_{s=2}$ from the second input end, and the phase converter P6 is configured to generate a reference signal $V_{r=2}$ based on the baseband transmit signal $V_{s=2}$, where the baseband transmit signal $V_{s=2}$ and the reference signal $V_{r=2}$ are in a differential form, a phase of the baseband transmit signal $V_{s=2}$ is 90 degrees, and a phase of the reference signal $V_{r=2}$ is 270 degrees.

For example, the baseband transmit signal $V_{s=1}$ is also referred to as a first input signal received by any one of the six interpolation networks, the baseband transmit signal $V_{s=2}$ is also referred to as a second input signal received by any one of the six interpolation networks, the reference signal $V_{r=1}$ is also referred to as a third input signal received by any one of the six interpolation networks, and the reference signal $V_{r=2}$ is also referred to as a fourth input signal received by any one of the six interpolation networks.

The phase processing circuit 22 includes the six interpolation networks: an interpolation network 221-1, an interpolation network 221-2, an interpolation network 221-3, an interpolation network 221-4, an interpolation network 221-5, and an interpolation network 221-6.

The phase processing circuit 22 further includes six output ends. The interpolation network 221-1 is coupled to a 1st output end in the six output ends, the interpolation network 221-2 is coupled to a 2nd output end in the six output ends, the interpolation network 221-3 is coupled to a 3rd output end in the six output ends, the interpolation network 221-4 is coupled to a 4th output end in the six output ends, the interpolation network 221-5 is coupled to a 5th output end in the six output ends, and the interpolation network 221-6 is coupled to a 6th output end in the six output ends.

The interpolation network 221-1 includes an electronic component E3 coupled between the first input end and the 1st output end, and an electronic component E4 coupled between an output end of the phase converter P5 and the 1st output end. A ratio of an electrical parameter of the electronic component E3 to an electrical parameter of the electronic component E4 is $\frac{\left(\sqrt[2]{3}-1\right)}{2} : \frac{\left(\sqrt[2]{3}+1\right)}{2}$. In this case, the interpolation network 221-1 performs interpolation on the baseband transmit signal $V_{s=1}$ based on an interpolation factor with a value of $\frac{3+\sqrt[2]{3}}{6}$, and performs interpolation on the reference signal $V_{r=1}$ based on an interpolation factor with a value of $\frac{3-\sqrt[2]{3}}{6}$. For an analog signal

$$V_{k=1} = \frac{3+\sqrt[2]{3}}{6} * V_{s=1} + \frac{3-\sqrt[2]{3}}{6} * V_{r=1}$$

obtained by the interpolation network 221-1, a phase of the analog signal $V_{k=1}$ is 0 degrees, and the analog signal is also referred to as a baseband transmit signal.

The interpolation network 221-2 includes an electronic component E5 coupled between the first input end and the 2nd output end, an electronic component E7 coupled between the second input end and the 2nd output end, and an electronic component E6 coupled between the output end of the phase converter P5 and the 2nd output end. A ratio of an electrical parameter of the electronic component E5 to an electrical parameter of the electronic component E7 to an electrical parameter of the electronic component E6 is $\left(\sqrt[2]{3}-1\right) : \left(\frac{1}{\sqrt[2]{3}}\right) : \left(\sqrt[2]{3}+1\right)$. In this case, the interpolation network 221-2 performs interpolation on the baseband transmit signal $V_{s=1}$ based on an interpolation factor with a value of $\frac{3+\sqrt[2]{3}}{12}$, performs interpolation on the baseband transmit signal $V_{s=2}$ based on an interpolation factor with a value of $\frac{1}{2}$, and performs interpolation on the reference signal $V_{r=1}$ based on an interpolation factor with a value of $\frac{3-\sqrt[2]{3}}{12}$. For an analog signal

$$V_{k=2} = \frac{3+\sqrt[2]{3}}{12} * V_{s=1} +$$

$\frac{1}{2} * V_{s=2} + \frac{3-\sqrt[2]{3}}{12} * V_{r=1}$ obtained by the interpolation network 221-2, a phase of the analog signal $V_{k=2}$ is 60 degrees, and the analog signal is also referred to as a baseband transmit signal.

The interpolation network 221-3 includes an electronic component E6 coupled between the first input end and the 3rd output end, an electronic component E7 coupled between the second input end and the 3rd output end, and an electronic component E5 coupled between the output end of the phase converter P5 and the 3rd output end. A ratio of an electrical parameter of the electronic component E5 to an electrical parameter of the electronic component E7 to an electrical parameter of the electronic component E6 is $\left(\sqrt[2]{3} - 1\right) : \left(\frac{1}{\sqrt[2]{3}}\right) : \left(\sqrt[2]{3} + 1\right)$. In this case, the interpolation network 221-3 performs interpolation on the baseband transmit signal $V_{s=1}$ based on an interpolation factor with a value of $\frac{3-\sqrt[2]{3}}{12}$, performs interpolation on the baseband transmit signal $V_{s=2}$ based on an interpolation factor with a value of $\frac{1}{2}$, and performs interpolation on the reference signal $V_{r=1}$ based on an interpolation factor with a value of $\frac{3+\sqrt[2]{3}}{12}$. For an analog signal

$$V_{k=3} = \frac{3-\sqrt[2]{3}}{12} * V_{s=1} +$$

$\frac{1}{2} * V_{s=2} + \frac{3+\sqrt[2]{3}}{12} * V_{r=1}$ obtained by the interpolation network 221-3, a phase of the analog signal $V_{k=3}$ is 120 degrees, and the analog signal is also referred to as a baseband transmit signal.

The interpolation network 221-4 includes an electronic component E4 coupled between the first input end and the 4th output end, and an electronic component E3 coupled between the output end of the phase converter P5 and the 4th output end. A ratio of an electrical parameter of the electronic component E3 to an electrical parameter of the electronic component E4 is $\frac{\left(\sqrt[2]{3}-1\right)}{2} : \frac{\left(\sqrt[2]{3}+1\right)}{2}$. In this case, the interpolation network 221-4 performs interpolation on the baseband transmit signal $V_{s=1}$ based on an interpolation factor with a value of $\frac{3-\sqrt[2]{3}}{6}$, and performs interpolation on the reference signal $V_{r=1}$ based on an interpolation factor with a value of $\frac{3+\sqrt[2]{3}}{6}$. For an analog signal

$$V_{k=4} = \frac{3-\sqrt[2]{3}}{6} * V_{s=1} + \frac{3+\sqrt[2]{3}}{6} * V_{r=1}$$ obtained by the interpolation network 221-4, a phase of the analog signal $V_{k=4}$ is 180 degrees, and the analog signal is also referred to as a baseband transmit signal.

The interpolation network 221-5 includes an electronic component E6 coupled between the first input end and the 5th output end, an electronic component E5 coupled between the output end of the phase converter P5 and the 5th output end, and an electronic component E7 coupled between an output end of the phase converter P6 and the 5th output end. A ratio of an electrical parameter of the electronic component E5 to an electrical parameter of the electronic component E7 to an electrical parameter of the electronic component E6 is $\left(\sqrt[2]{3} - 1\right) : \left(\frac{1}{\sqrt[2]{3}}\right) : \left(\sqrt[2]{3} + 1\right)$. In this case, the interpolation network 221-5 performs interpolation on the baseband transmit signal $V_{s=1}$ based on an interpolation factor with a value of $\frac{3-\sqrt[2]{3}}{12}$, performs interpolation on the reference signal $V_{r=1}$ based on an interpolation factor with a value of $\frac{3+\sqrt[2]{3}}{12}$, and performs interpolation on the reference signal $V_{r=2}$ based on an interpolation factor with a value of $\frac{1}{2}$. For an analog signal

$$V_{k=5} = \frac{3-\sqrt[2]{3}}{12} *$$

$V_{s=1} + \frac{3+\sqrt[2]{3}}{12} * V_{r=1} + \frac{1}{2} * V_{r=2}$ obtained by the interpolation network 221-5, a phase of the analog signal $V_{k=5}$ is 240 degrees, and the analog signal is also referred to as a baseband transmit signal.

The interpolation network 221-6 includes an electronic component E5 coupled between the first input end and the 6th output end, an electronic component E6 coupled between the output end of the phase converter P5 and the 6th output end, and an electronic component E7 coupled between the output end of the phase converter P6 and the 6th output end. A ratio of an electrical parameter of the electronic component E5 to an electrical parameter of the electronic component E7 to an electrical parameter of the electronic component E6 is

$$\left(\sqrt[2]{3} - 1\right) : \left(\frac{1}{\sqrt[2]{3}}\right) : \left(\sqrt[2]{3} + 1\right)$$ . In this case, the interpolation network 221-6 performs interpolation on the baseband transmit signal $V_{s=1}$ based on an interpolation factor with a value of $\dfrac{3 + \sqrt[2]{3}}{12}$ , performs interpolation on the reference signal $V_{r=1}$ based on an interpolation factor with a value of $\dfrac{3 + \sqrt[2]{3}}{12}$ , and performs interpolation on the reference signal $V_{r=2}$ based on an interpolation factor with a value of $\dfrac{1}{2}$ . For an analog signal

$$V_{k=6} = \frac{3 + \sqrt[2]{3}}{12} * V_{s=1} + \frac{3 - \sqrt[2]{3}}{12} * V_{r=1} + \frac{1}{2} * V_{r=2}$$ obtained by the interpolation network 221-6, a phase of the analog signal $V_{k=6}$ is 300 degrees, and the analog signal is also referred to as a baseband transmit signal.

For example, as shown in FIG. 31, the phase processing circuit further includes at least one dummy unit dummy, to ensure channel consistency of the phase processing circuit 22. The at least one dummy unit includes a dummy unit 221-7 and a dummy unit 221-8. The dummy unit 221-7 includes an electronic component E3 and an electronic component E4 that are coupled between the second input end and the output end of the phase converter P6. The electronic component E3 in the dummy unit 221-7 is close to the second input end, the electronic component E3 and the electronic component E4 are connected in series, and a ratio of an electrical parameter of the electronic component E3 to an electrical parameter of the electronic component E4 is $\dfrac{\left(\sqrt[2]{3} - 1\right)}{2} : \dfrac{\left(\sqrt[2]{3} + 1\right)}{2}$ . The dummy unit 221-8 includes an electronic component E4 and an electronic component E3 that are coupled between the second input end and the output end of the phase converter P6. The electronic component E4 in the dummy unit 221-8 is close to the second input end, the electronic component E3 and the electronic component E4 are connected in series, and a ratio of an electrical parameter of the electronic component E3 to an electrical parameter of the electronic component E4 is $\dfrac{\left(\sqrt[2]{3} - 1\right)}{2} : \dfrac{\left(\sqrt[2]{3} + 1\right)}{2}$ .

In some other embodiments, a switch is usually disposed in the interpolation network, to control enabling and disabling of the interpolation network in the phase processing circuit 22 shown in FIG. 31. For a position at which the switch is disposed, refer to FIG. 12. In addition, a switch coupled to the third input end in FIG. 12 is coupled to the output end of the phase converter P5 in FIG. 31, a switch coupled to the fourth input end in FIG. 12 is coupled to the output end of the phase converter P6 in FIG. 31, and the others remain unchanged. Details are not described herein.

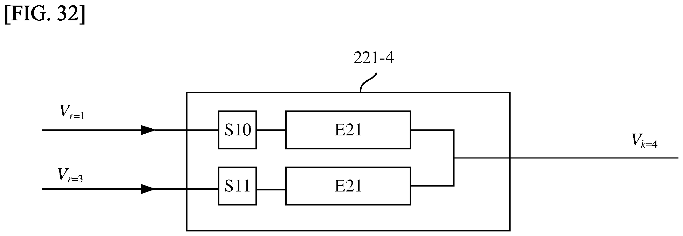

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the six interpolation networks. Therefore, the interpolation network 221-1 shown in FIG. 31 may be replaced with the interpolation network 221-1 shown in FIG. 13, and/or the interpolation network 221-4 shown in FIG. 31 may be replaced with an interpolation network 221-4 shown in FIG. 32.

As shown in FIG. 32, the interpolation network 221-4 includes an electronic component E21 coupled between the output end of the phase converter P5 and the 4th output end, and an electronic component E21 coupled between the alternating current ground of the radio frequency circuit 20 and the 4th output end. A ratio of an electrical parameter of the electronic component E21 to an electrical parameter of the electronic component E21 is $\left(\dfrac{1}{\sqrt[2]{3}}\right) : \left(\dfrac{1}{\sqrt[2]{3}}\right)$ . In this case, the interpolation network 221-4 performs interpolation on the reference signal $V_{r=1}$ based on an interpolation factor with a value of $\dfrac{1}{2}$ , and performs interpolation on the reference signal $V_{r=3}$ based on an interpolation factor with a value of $\dfrac{1}{2}$ .

$$V_{k=4} = \frac{1}{2} * V_{r=1} + \frac{1}{2} * V_{r=3}$$

For an analog signal obtained by the interpolation network 221-4, it indicates that a phase of the analog signal $V_{k=4}$ output by the output end of the interpolation network 221-4 is 180 degrees, and the analog signal is also referred to as a baseband transmit signal. A switch S10 is specifically disposed between the phase converter P5 and the electronic component E21, and a switch S11 is specifically disposed between the alternating current ground of the radio frequency circuit 20 and the electronic component E21.

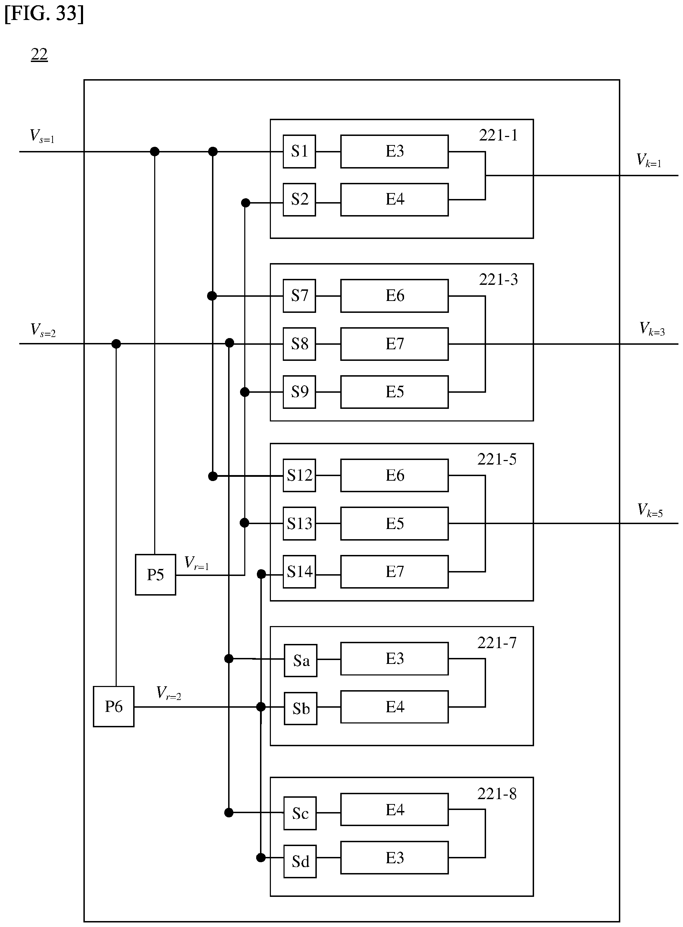

Refer to FIG. 33. Compared with the phase processing circuit 22 shown in FIG. 31, a phase processing circuit shown in FIG. 33 includes three interpolation networks: an interpolation network 221-1, an interpolation network 221-3, and an interpolation network 221-5. The interpolation network 221-1 shown in FIG. 33 is the same as the interpolation network 221-1 shown in FIG. 31, a phase of an analog signal $V_{k=1}$ output by an output end of the interpolation network 221-1 is 0 degrees, and the analog signal is also referred to as a baseband transmit signal. The interpolation network 221-3 shown in FIG. 33 is the same as the interpolation network 221-3 shown in FIG. 31, a phase of an analog signal $V_{k=3}$ output by an output end of the interpolation network 221-3 is 120 degrees, and the analog signal is also referred to as a baseband transmit signal. The interpolation network 221-5 shown in FIG. 33 is the same as the interpolation network 221-5 shown in FIG. 31, a phase of an analog signal $V_{k=5}$ output by the output end of the interpolation network 221-5 is 240 degrees, and the analog signal is also referred to as a baseband transmit signal.

For example, as shown in FIG. 33, the phase processing circuit further includes at least one dummy unit dummy, to ensure channel consistency of the phase processing circuit 22. The at least one dummy unit is coupled to any two of an input end of the phase processing circuit and an output end of a phase converter, and the dummy unit includes one or more electronic components coupled between at least two of the input end of the phase processing circuit and the output end of the phase converter. The plurality of electronic components are coupled in one or both of the following manners: parallel connection and series connection.

Specifically, as shown in FIG. 33, the phase processing circuit includes a dummy unit 221-7 and a dummy unit 221-8. For details about the dummy unit 221-7 and the dummy unit 221-8, refer to the dummy unit 221-7 and the dummy unit 221-8 shown in FIG. 31. The dummy unit 221-7 and the dummy unit 221-8 exist to ensure the channel consistency of the phase processing circuit 22.

For example, specifically, in the phase processing circuit shown in FIG. 33 compared with the phase processing circuit shown in FIG. 31, the interpolation network 221-2, the interpolation network 221-4, and the interpolation network 221-6 are deleted, and the interpolation network 221-1, the interpolation network 221-3, and the interpolation network 221-5 are reserved, so that the three interpolation networks respectively output three analog signals whose phases are respectively 0 degrees, 120 degrees, and 240 degrees. In some embodiments, in the phase processing circuit compared with the phase processing circuit 22 shown in FIG. 31, the interpolation network 221-4, the interpolation network 221-5, and the interpolation network 221-6 may be deleted, and the interpolation network 221-1, the interpolation network 221-2, and the interpolation network 221-3 are reserved, so that the three interpolation networks respectively output three analog signals whose phases are respectively 0 degrees, 60 degrees, and 120 degrees. In some other embodiments, in the phase processing circuit compared with the phase processing circuit 22 shown in FIG. 31, the interpolation network 221-1, the interpolation network 221-2, and the interpolation network 221-3 may be deleted, and the interpolation network 221-4, the interpolation network 221-5, and the interpolation network 221-6 are reserved, so that the three interpolation networks respectively output three analog signals whose phases are respectively 180 degrees, 240 degrees, and 300 degrees.

In some other embodiments, a switch is usually disposed in the interpolation network, to control enabling and disabling of the interpolation network in the phase processing circuit 22 shown in FIG. 33. For a position at which the switch is disposed, refer to FIG. 33. Details are not described herein again.

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the six interpolation networks. Therefore, the interpolation network 221-1 shown in FIG. 33 may be replaced with the interpolation network 221-1 shown in FIG. 13.

As shown in FIG. 31 or FIG. 33, a switch may also be disposed in the dummy unit. Specifically, in the dummy unit 221-7, a switch Sa is disposed between the second input end and the electronic component E3, and a switch Sb is disposed between the output end of the phase converter P6 and the electronic component E4; and in the dummy unit 221-8, a switch Sc is disposed between the second input end and the electronic component E4, and a switch Sd is disposed between the output end of the phase converter P6 and the electronic component E3. This is not limited in embodiments of this application.

In another embodiment, the switch in FIG. 31 or FIG. 33 may be alternatively disposed between the electronic component in the interpolation network and the output end of the phase processing circuit 22. This is not limited in embodiments of this application.

It should be noted that any switch in FIG. 31 or FIG. 33 may be implemented via any one of the following: a diode, a triode, and a transistor. Selection of the switch is not limited in embodiments of this application. In addition, more or fewer switches may be disposed. This is not limited in embodiments of this application.

For example, for a specific implementation of each electronic component in FIG. 31 or FIG. 33, refer to FIG. 17 and FIG. 18. Details are not described herein again. For implementation of the electronic component in FIG. 31 or FIG. 33 via a resistor, refer to FIG. 19 and FIG. 20. In addition, a resistor coupled to the third input end in FIG. 19 is coupled to the output end of the phase converter P5 in FIG. 31 or FIG. 33, to receive the reference signal $V_{r=1}$, a switch coupled to the fourth input end in FIG. 19 is coupled to the output end of the phase converter P6 in FIG. 31 or FIG. 33, to receive the reference signal $V_{r=2}$, and the others are not changed. Details are not described herein.

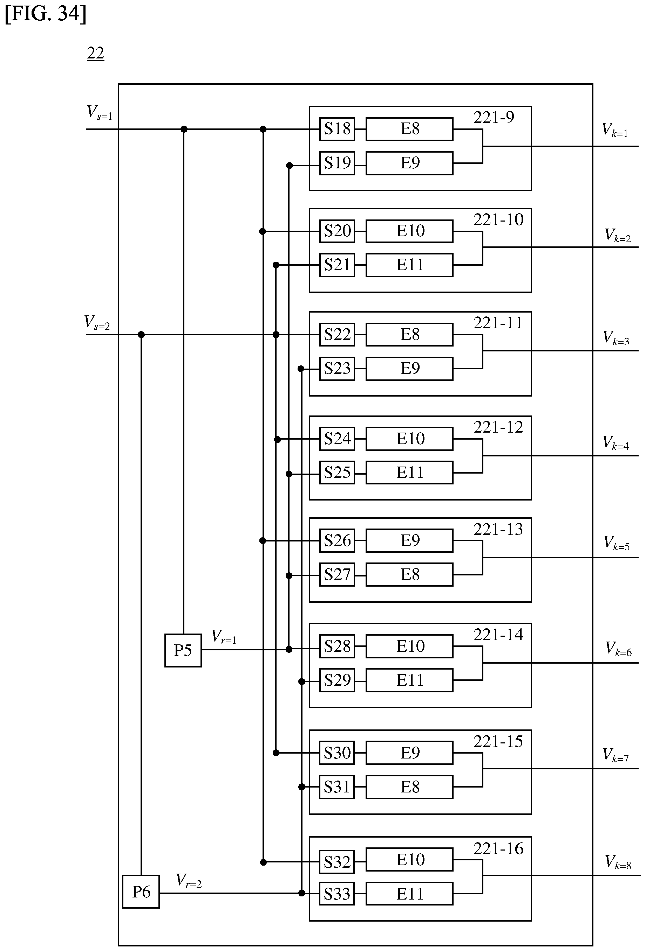

FIG. 34 is a diagram of a structure of a phase processing circuit 22 that receives one pair of orthogonal baseband signals and outputs eight analog signals whose phases are respectively 0 degrees, 45 degrees, 90 degrees, 135 degrees, 180 degrees, 225 degrees, 270 degrees, and 315 degrees by disposing eight interpolation networks according to an embodiment of this application, where the eight analog signals include four pairs of differential signals. For example, in the one pair of orthogonal baseband signals, a baseband transmit signal $V_{s=1}$ is input from a first input end of the phase processing circuit 22, and a phase of the baseband transmit signal $V_{s=1}$ is 0 degrees; and a baseband transmit signal $V_{s=2}$ is input from a second input end of the phase processing circuit 22, and a phase of the baseband transmit signal $V_{s=2}$ is 90 degrees.

For example, refer to FIG. 34. The phase processing circuit 22 shown in FIG. 34 further includes a phase converter P5 and a phase converter P6. An input end of the phase converter P5 is coupled to the first input end, the phase converter P5 may receive a baseband transmit signal $V_{s=1}$ from the first input end, and the phase converter P5 is configured to generate a reference signal $V_{r=1}$ based on the baseband transmit signal $V_{s=1}$, where the baseband transmit signal $V_{s=1}$ and the reference signal $V_{r=1}$ are in a differential form, a phase of the baseband transmit signal $V_{s=1}$ is 0 degrees, and a phase of the reference signal $V_{r=1}$ is 180 degrees. An input end of the phase converter P6 is coupled to the second input end, the phase converter P6 may receive a baseband transmit signal $V_{s=2}$ from the second input end, and the phase converter P6 is configured to generate a reference signal $V_{r=2}$ based on the baseband transmit signal $V_{s=2}$, where the baseband transmit signal $V_{s=2}$ and the reference signal $V_{r=2}$ are in a differential form. A phase of the baseband transmit signal $V_{s=2}$ is 90 degrees, and a phase of the reference signal $V_{r=2}$ is 270 degrees.

For example, the baseband transmit signal $V_{s=1}$ is also referred to as a first input signal received by any one of the eight interpolation networks, the baseband transmit signal $V_{s=2}$ is also referred to as a second input signal received by any one of the eight interpolation networks, the reference signal $V_{r=1}$ is also referred to as a third input signal received by any one of the eight interpolation networks, and the reference signal $V_{r=2}$ is also referred to as a fourth input signal received by any one of the eight interpolation networks.

The phase processing circuit 22 includes the eight interpolation networks: an interpolation network 221-9, an interpolation network 221-10, an interpolation network 221-11, an interpolation network 221-12, an interpolation network 221-13, an interpolation network 221-14, an interpolation network 221-15, and an interpolation network 221-16.

The phase processing circuit 22 further includes eight output ends. The interpolation network 221-9 is coupled to a 1st output end in the eight output ends, the interpolation network 221-10 is coupled to a 2nd output end in the eight output ends, the interpolation network 221-11 is coupled to a 3rd output end in the eight output ends, the interpolation network 221-12 is coupled to a 4th output end in the eight output ends, the interpolation network 221-13 is coupled to a 5th output end in the eight output ends, the interpolation network 221-14 is coupled to a 6th output end in the eight output ends, the interpolation network 221-15 is coupled to a 7th output end in the eight output ends, and the interpolation network 221-16 is coupled to an 8th output end in the eight output ends.

The interpolation network 221-9 includes an electronic component E8 coupled between the first input end and the 1st output end, and an electronic component E9 coupled between an output end of the phase converter P5 and the 1st output end. A ratio of an electrical parameter of the electronic component E8 to an electrical parameter of the electronic component E9 is $\left(2-\sqrt[2]{2}\right):\left(2+\sqrt[2]{2}\right)$. In this case, the interpolation network 221-9 performs interpolation on the baseband transmit signal $V_{s=1}$ based on an interpolation factor with a value of $\dfrac{\left(2+\sqrt[2]{2}\right)}{4}$, and performs interpolation on the reference signal $V_{r=1}$ based on an interpolation factor with a value of $\dfrac{\left(2-\sqrt[2]{2}\right)}{4}$. For an analog signal $V_{k=1}=\dfrac{\left(2+\sqrt[2]{2}\right)}{4}*V_{s=1}+\dfrac{\left(2-\sqrt[2]{2}\right)}{4}*V_{r=1}$ obtained by the interpolation network 221-9, a phase of the analog signal $V_{k=1}$ is 0 degrees, and the analog signal is also referred to as a baseband transmit signal.

The interpolation network 221-10 includes an electronic component E10 coupled between the first input end and the 2nd output end, and an electronic component E11 coupled between the second input end and the 2nd output end. A ratio of an electrical parameter of the electronic component E10 to an electrical parameter of the electronic component E11 is 1: 1. In this case, the interpolation network 221-10 performs interpolation on the baseband transmit signal $V_{s=1}$ based on an interpolation factor with a value of $\dfrac{1}{2}$, and performs interpolation on the baseband transmit signal $V_{s=2}$ based on an interpolation factor with a value of $\dfrac{1}{2}$. For an analog signal $V_{k=2}=\dfrac{1}{2}*V_{s=1}+\dfrac{1}{2}*V_{s=2}$ obtained by the interpolation network 221-10, a phase of the analog signal $V_{k=2}$ is 45 degrees, and the analog signal is also referred to as a baseband transmit signal.

The interpolation network 221-11 includes an electronic component E8 coupled between the second input end and the 3rd output end, and an electronic component E9 coupled between an output end of the phase converter P6 and the 3rd output end. A ratio of an electrical parameter of the electronic component E8 to an electrical parameter of the electronic component E9 is $\left(2-\sqrt[2]{2}\right):\left(2+\sqrt[2]{2}\right)$. In this case, the interpolation network 221-11 performs interpolation on the baseband transmit signal $V_{s=2}$ based on an interpolation factor with a value of $\dfrac{\left(2+\sqrt[2]{2}\right)}{4}$, and performs interpolation on the reference signal $V_{r=2}$ based on an interpolation factor with a value of $\dfrac{\left(2+\sqrt[2]{2}\right)}{4}$. For an analog signal

$$V_{k=3} = \frac{\left(2+\sqrt[2]{2}\right)}{4} * V_{s=2} + \frac{\left(2-\sqrt[2]{2}\right)}{4} * V_{r=2}$$

obtained by the interpolation network 221-11, a phase of the analog signal $V_{k=3}$ is 90 degrees, and the analog signal is also referred to as a baseband transmit signal.

The interpolation network 221-12 includes an electronic component E10 coupled between the second input end and the 4th output end, and an electronic component E11 coupled between the output end of the phase converter P5 and the 4th output end. A ratio of an electrical parameter of the electronic component E10 to an electrical parameter of the electronic component E11 is 1: 1. In this case, the interpolation network 221-12 performs interpolation on the baseband transmit signal $V_{s=2}$ based on an interpolation factor with a value of $\dfrac{1}{2}$, and performs interpolation on the reference signal $V_{r=1}$ based on an interpolation factor with a value of $\dfrac{1}{2}$. For an analog signal $V_{k=4} = \dfrac{1}{2} * V_{s=2} + \dfrac{1}{2} * V_{r=1}$ obtained by the interpolation network 221-12, a phase of the analog signal $V_{k=4}$ is 135 degrees, and the analog signal is also referred to as a baseband transmit signal.
The interpolation network 221-13 includes an electronic component E9 coupled between the first input end and the 5th output end, and an electronic component E8 coupled between the output end of the phase converter P5 and the 5th output end. A ratio of an electrical parameter of the electronic component E8 to an electrical parameter of the electronic component E9 is $\left(2 - \sqrt[2]{2}\right):\left(2 + \sqrt[2]{2}\right)$. In this case, the interpolation network 221-13 performs interpolation on the baseband transmit signal $V_{s=1}$ based on an interpolation factor with a value of $\dfrac{\left(2-\sqrt[2]{2}\right)}{4}$, and performs interpolation on the reference signal $V_{r=1}$ based on an interpolation factor with a value of $\dfrac{\left(2+\sqrt[2]{2}\right)}{4}$. For an analog signal

$$V_{k=5} = \frac{\left(2-\sqrt[2]{2}\right)}{4} * V_{s=1} + \frac{\left(2+\sqrt[2]{2}\right)}{4} * V_{r=1}$$

obtained by the interpolation network 221-13, a phase of the analog signal $V_{k=5}$ is 180 degrees, and the analog signal is also referred to as a baseband transmit signal.
The interpolation network 221-14 includes an electronic component E10 coupled between the output end of the phase converter P5 and the 6th output end, and an electronic component E11 coupled between the output end of the phase converter P6 and the 6th output end. A ratio of an electrical parameter of the electronic component E10 to an electrical parameter of the electronic component E11 is 1: 1. In this case, the interpolation network 221-14 performs interpolation on the reference signal $V_{r=1}$ based on an interpolation factor with a value of $\dfrac{1}{2}$, and performs interpolation on the reference signal $V_{r=2}$ based on an interpolation factor with a value of $\dfrac{1}{2}$.

For an analog signal $V_{k=6} = \dfrac{1}{2} * V_{r=1} + \dfrac{1}{2} * V_{r=2}$
obtained by the interpolation network 221-14, a phase of the analog signal $V_{k=6}$ is 225 degrees, and the analog signal is also referred to as a baseband transmit signal.
The interpolation network 221-15 includes an electronic component E9 coupled between the second input end and the 7th output end, and an electronic component E8 coupled between the output end of the phase converter P6 and the 7th output end. A ratio of an electrical parameter of the electronic component E8 to an electrical parameter of the electronic component E9 is $\left(2 - \sqrt[2]{2}\right):\left(2 + \sqrt[2]{2}\right)$. In this case, the interpolation network 221-15 performs interpolation on the baseband transmit signal $V_{s=2}$ based on an interpolation factor with a value of $\dfrac{\left(2-\sqrt[2]{2}\right)}{4}$, and performs interpolation on the reference signal $V_{r=2}$ based on an interpolation factor with a value of $\dfrac{\left(2+\sqrt[2]{2}\right)}{4}$. For an analog signal

$$V_{k=7} = \frac{\left(2-\sqrt[2]{2}\right)}{4} * V_{s=2} + \frac{\left(2+\sqrt[2]{2}\right)}{4} * V_{r=2}$$

obtained by the interpolation network 221-15, a phase of the analog signal $V_{k=7}$ is 270 degrees, and the analog signal is also referred to as a baseband transmit signal.
The interpolation network 221-16 includes an electronic component E10 coupled between the first input end and the 8th output end, and an electronic component E11 coupled between the output end of the phase converter P6 and the 8th output end. A ratio of an electrical parameter of the electronic component E10 to an electrical parameter of the electronic component E11 is 1: 1. In this case, the interpolation network 221-16 performs interpolation on the baseband transmit signal $V_{s=1}$ based on an interpolation factor with a value of $\dfrac{1}{2}$, and performs interpolation on the reference signal $V_{r=2}$

based on an interpolation factor with a value of $\frac{1}{2}$. For an analog signal

$$V_{k=8} = \frac{1}{2} * V_{s=1} + \frac{1}{2} * V_{r=2}$$

formed at an output end of the interpolation network 221-16, a phase of the analog signal $V_{k=8}$ is 315 degrees, and the analog signal is also referred to as a baseband transmit signal.

In some other embodiments, a switch is usually disposed in the interpolation network, to control enabling and disabling of the interpolation network in the phase processing circuit 22 shown in FIG. 34. For a position at which the switch is disposed, refer to FIG. 21. In addition, a switch coupled to the third input end in FIG. 21 is coupled to the output end of the phase converter P5 in FIG. 34, a switch coupled to the fourth input end in FIG. 21 is coupled to the output end of the phase converter P6 in FIG. 34, and the others remain unchanged. Details are not described herein.

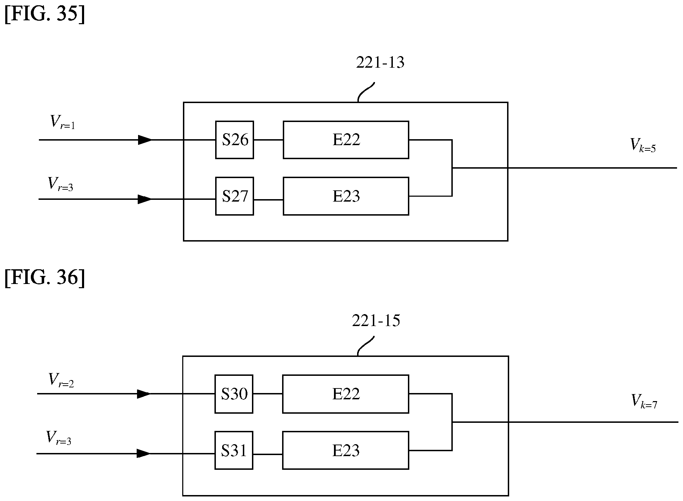

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the eight interpolation networks. Therefore, the interpolation network 221-9 shown in FIG. 34 may be replaced with the interpolation network 221-9 shown in FIG. 21, and/or the interpolation network 221-11 shown in FIG. 34 may be replaced with the interpolation network 221-11 shown in FIG. 22, and/or the interpolation network 221-13 shown in FIG. 34 may be replaced with an interpolation network 221-13 shown in FIG. 35, and/or the interpolation network 221-15 shown in FIG. 34 may be replaced with an interpolation network 221-15 shown in FIG. 36.

As shown in FIG. 35, the interpolation network 221-13 includes an electronic component E22 coupled between the output end of the phase converter P5 and the 5th output end, and an electronic component E23 coupled between the alternating current ground of the radio frequency circuit 20 and the 5th output end. A ratio of an electrical parameter of the electronic component E22 to an electrical parameter of the electronic component E23 is $\left(\frac{\sqrt[2]{2}}{2}\right) : \left(1 + \frac{\sqrt[2]{2}}{2}\right)$. In this case, the interpolation network 221-13 performs interpolation on the reference signal $V_{r=1}$ based on an interpolation factor with a value of $\frac{\sqrt[2]{2}}{2}$, and performs interpolation on the reference signal $V_{r=3}$ based on an interpolation factor with a value of $\frac{(2-\sqrt[2]{2})}{2}$. For an analog signal

$$V_{k=5} = \frac{\sqrt[2]{2}}{2} * V_{r=1} + \frac{(2-\sqrt[2]{2})}{2} * V_{r=3}$$

obtained by the interpolation network 221-13, a phase of the analog signal $V_{k=5}$ is 180 degrees, and the analog signal is also referred to as a baseband transmit signal. A switch S26 is specifically disposed between the output end of the phase converter P5 and the electronic component E22, and a switch S27 is specifically disposed between the alternating current ground of the radio frequency circuit 20 and the electronic component E23.

As shown in FIG. 36, the interpolation network 221-15 includes an electronic component E22 coupled between the output end of the phase converter P6 and the 7th output end, and an electronic component E23 coupled between the alternating current ground of the radio frequency circuit 20 and the 7th output end. A ratio of an electrical parameter of the electronic component E22 to an electrical parameter of the electronic component E23 is $\left(\frac{\sqrt[2]{2}}{2}\right) : \left(1 + \frac{\sqrt[2]{2}}{2}\right)$. In this case, the interpolation network 221-15 performs interpolation on the reference signal $V_{r=2}$ based on an interpolation factor with a value of $\frac{\sqrt[2]{2}}{2}$, and performs interpolation on the reference signal $V_{r=3}$ based on an interpolation factor with a value of $\frac{(2-\sqrt[2]{2})}{2}$. For an analog signal

$$V_{k=7} = \frac{\sqrt[2]{2}}{2} * V_{r=2} + \frac{(2-\sqrt[2]{2})}{2} * V_{r=3}$$

obtained by the interpolation network 221-15, a phase of the analog signal $V_{k=7}$ is 270 degrees, and the analog signal is also referred to as a baseband transmit signal. A switch S30 is specifically disposed between the output end of the phase converter P6 and the electronic component E22, and a switch S31 is specifically disposed between the alternating current ground of the radio frequency circuit 20 and the electronic component E23.

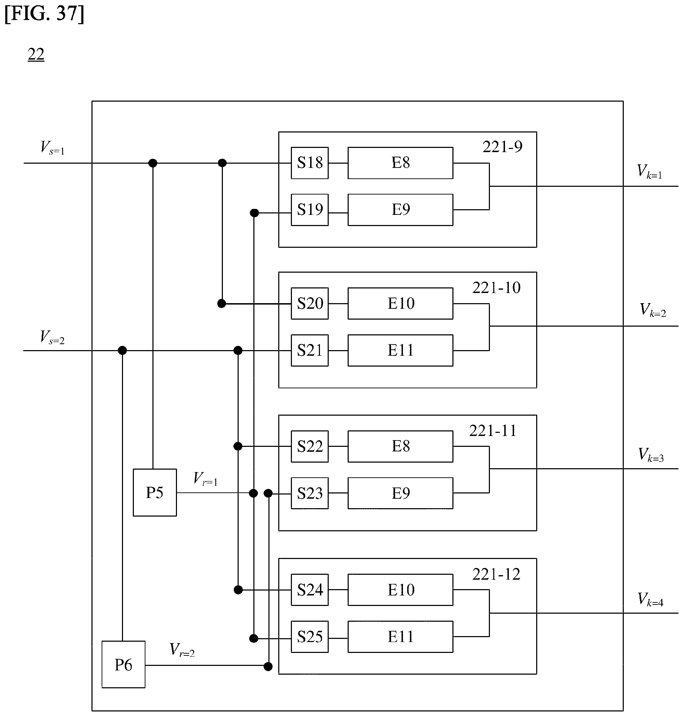

Refer to FIG. 37. Compared with the phase processing circuit 22 shown in FIG. 34, a phase processing circuit 22 shown in FIG. 37 includes four interpolation networks: an interpolation network 221-9, an interpolation network 221-10, an interpolation network 221-11, and an interpolation network 221-12. The interpolation network 221-9 shown in FIG. 37 is the same as the interpolation network 221-9 shown in FIG. 34, a phase of an analog signal $V_{k=1}$ obtained by the interpolation network 221-9 is 0 degrees, and the analog signal is also referred to as a baseband transmit signal. The interpolation network 221-10 shown in FIG. 37 is the same as the interpolation network 221-10 shown in FIG. 34, a phase of an analog signal $V_{k=2}$ obtained by the interpolation network 221-10 is 45 degrees, and the analog signal is also referred to as a baseband transmit signal. The interpolation network 221-11 shown in FIG. 37 is the same as the interpolation network 221-11 shown in FIG. 34, a phase of an analog signal $V_{k=3}$ obtained by the interpolation network 221-11 is 90 degrees, and the analog signal is also referred to as a baseband transmit signal. The interpolation network 221-12 shown in FIG. 37 is the same as the interpolation network 221-12 shown in FIG. 34, a phase of an analog signal $V_{k=4}$ obtained by the interpolation network 221-12 is 135 degrees, and the analog signal is also referred to as a baseband transmit signal.

For example, specifically, in the phase processing circuit shown in FIG. 37 compared with the phase processing circuit shown in FIG. 34, the interpolation network 221-13, the interpolation network 221-14, the interpolation network 221-15, and the interpolation network 221-16 are deleted, and the interpolation network 221-9, the interpolation network 221-10, the interpolation network 221-11, and the interpolation network 221-12 are reserved, so that the four interpolation networks respectively output four analog signals whose phases are respectively 0 degrees, 45 degrees, 90 degrees, and 135 degrees. In some other embodiments, in the phase processing circuit compared with the phase processing circuit 22 shown in FIG. 34, the interpolation network 221-9, the interpolation network 221-10, the interpolation network 221-11, and the interpolation network 221-12 may be deleted, and the interpolation network 221-13, the interpolation network 221-14, the interpolation network 221-15, and the interpolation network 221-16 are reserved, so that the four interpolation networks respectively output four analog signals whose phases are respectively 180 degrees, 225 degrees, 270 degrees, and 315 degrees.

In some other embodiments, a switch is usually disposed in the interpolation network, to control enabling and disabling of the interpolation network in the phase processing circuit 22 shown in FIG. 37. For a position at which the switch is disposed, refer to FIG. 34. Details are not described herein again.

In another embodiment, the switch in FIG. 17 or FIG. 18 may be alternatively disposed between an electronic component in the interpolation network and the output end of the phase processing circuit 22. This is not limited in embodiments of this application.

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the eight interpolation networks. Therefore, the interpolation network 221-9 shown in FIG. 37 may be replaced with the interpolation network 221-9 shown in FIG. 21, and/or the interpolation network 221-11 shown in FIG. 37 may be replaced with the interpolation network 221-11 shown in FIG. 22.

In another embodiment, the switch in FIG. 34 or FIG. 37 may be alternatively disposed between the electronic component in the interpolation network and the output end of the phase processing circuit 22. This is not limited in embodiments of this application.

It should be noted that any switch in FIG. 34 or FIG. 37 may be implemented via any one of the following: a diode, a triode, and a transistor. Selection of the switch is not limited in embodiments of this application. In addition, more or fewer switches may be disposed. This is not limited in embodiments of this application.

For example, for a specific implementation of each electronic component in FIG. 34 or FIG. 37, refer to FIG. 27 and FIG. 28. Details are not described herein again. For implementation of the electronic component in FIG. 34 or FIG. 37 via a resistor, refer to FIG. 29 and FIG. 30. In addition, a resistor coupled to the third input end in FIG. 29 is coupled to the output end of the phase converter P5 in FIG. 34 or FIG. 37, to receive the reference signal $V_{r=1}$, a switch coupled to the fourth input end in FIG. 29 is coupled to the output end of the phase converter P6 in FIG. 34 or FIG. 37, to receive the reference signal $V_{r=2}$, and the others are not changed. Details are not described herein.

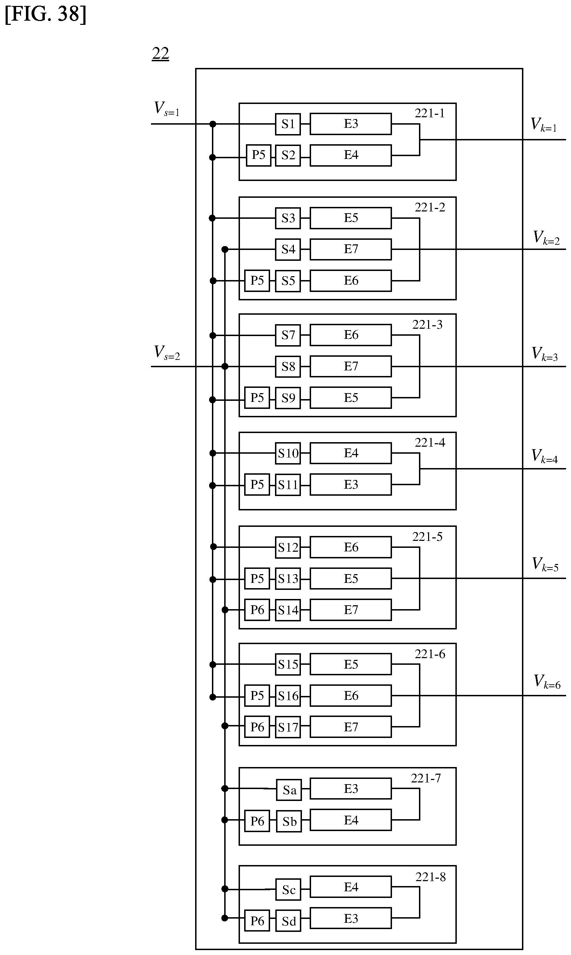

Refer to FIG. 38. Compared with the phase processing circuit 22 shown in FIG. 31, in a phase processing circuit 22 shown in FIG. 38, a phase converter P5 and a phase converter P6 are disposed in an interpolation network, so that any interpolation network can generate one reference signal based on one baseband transmit signal, where the baseband transmit signal and the reference signal are in a differential form. Specifically, the phase processing circuit 22 shown in FIG. 38 includes a plurality of phase converters P5 and a plurality of phase converters P6. Any interpolation network in the phase processing circuit 22 shown in FIG. 38 needs to receive a reference signal $V_{r=1}$, to be specific, one phase converter P5 is disposed in the interpolation network, and an input end of the phase converter P5 is coupled to a first input end of the phase processing circuit 22, so that the reference signal $V_{r=1}$ is transmitted to one output end of the phase processing circuit via one electronic component; and/or any interpolation network needs to receive a reference signal $V_{r=2}$, to be specific, one phase converter P6 is disposed in the interpolation network, and an input end of the phase converter P6 is coupled to a second input end of the phase processing circuit 22, so that the reference signal $V_{r=2}$ is transmitted to one output end of the phase processing circuit via one electronic component.

For a specific implementation in which the phase processing circuit 22 shown in FIG. 38 outputs six analog signals whose phases are respectively 0 degrees, 60 degrees, 120 degrees, 180 degrees, 240 degrees, and 300 degrees, refer to FIG. 31. Details are not described herein again.

For example, as shown in FIG. 38, the phase processing circuit further includes at least one dummy unit dummy, to ensure channel consistency of the phase processing circuit 22. The at least one dummy unit includes a dummy unit 221-7 and a dummy unit 221-8. For details about the dummy unit 221-7 and the dummy unit 221-8, refer to the dummy unit 221-7 and the dummy unit 221-8 shown in FIG. 31. Details are not described herein again.

In some other embodiments, a switch is usually disposed in the interpolation network, to control enabling and disabling of the interpolation network in the phase processing circuit 22 shown in FIG. 38. For a position at which the switch is disposed, refer to FIG. 31. Details are not described herein again.

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the six interpolation networks. Therefore, an interpolation network 221-1 shown in FIG. 38 may be replaced with the interpolation network 221-1 shown in FIG. 13, and/or an interpolation network 221-4 shown in FIG. 38 may be replaced with the interpolation network 221-4 shown in FIG. 32.

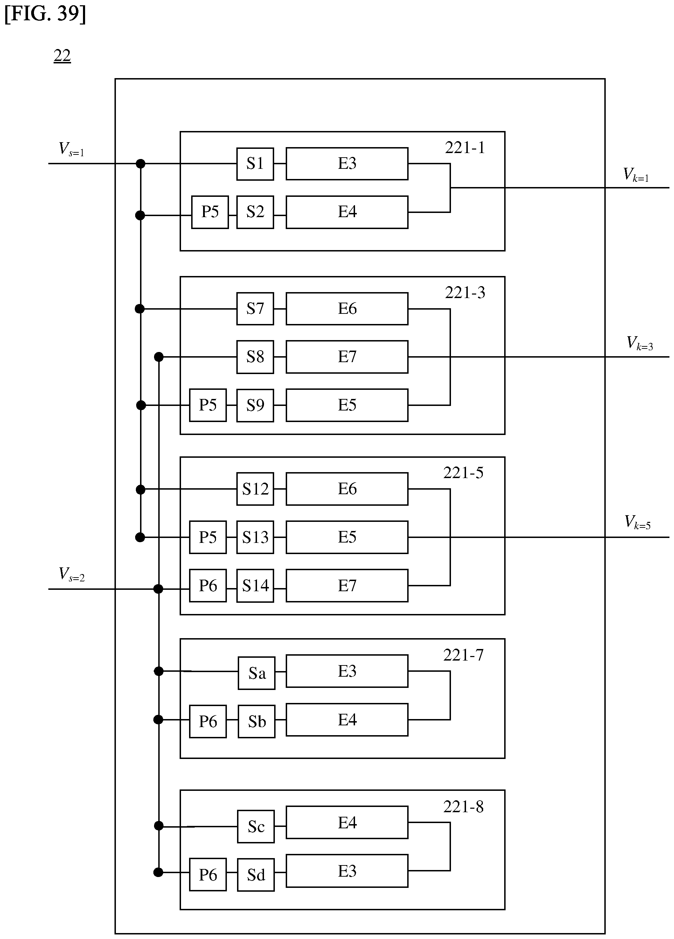

Refer to FIG. 39. Compared with the phase processing circuit 22 shown in FIG. 38, a phase processing circuit shown in FIG. 39 includes three interpolation networks: an interpolation network 221-1, an interpolation network 221-3, and an interpolation network 221-5. The interpolation network 221-1 shown in FIG. 39 is the same as the interpolation network 221-1 shown in FIG. 38, a phase of an analog signal $V_{k=1}$ output by an output end of the interpolation network 221-1 is 0 degrees, and the analog signal is also referred to as a baseband transmit signal. The interpolation network 221-3 shown in FIG. 39 is the same as the interpolation network 221-3 shown in FIG. 38, a phase of an analog signal $V_{k=3}$ output by an output end of the interpolation network 221-3 is 120 degrees, and the analog signal is also referred to as a baseband transmit signal. The interpolation network 221-5 shown in FIG. 39 is the same as the interpolation network 221-5 shown in FIG. 38, a phase of an analog signal $V_{k=5}$ output by an output end of the interpolation network 221-5 is 240 degrees, and the analog signal is also referred to as a baseband transmit signal.

For example, as shown in FIG. 39, the phase processing circuit further includes at least one dummy unit dummy, to ensure channel consistency of the phase processing circuit 22. The at least one dummy unit is coupled to any two of an input end of the phase processing circuit and an output end of a phase converter, and the dummy unit includes one or more electronic components coupled between at least two of the input end of the phase processing circuit and the output end of the phase converter. The plurality of electronic components are coupled in one or both of the following manners: parallel connection and series connection.

Specifically, as shown in FIG. 39, the phase processing circuit includes a dummy unit 221-7 and a dummy unit 221-8. For details about the dummy unit 221-7 and the dummy unit 221-8, refer to the dummy unit 221-7 and the dummy unit 221-8 shown in FIG. 38. The dummy unit 221-7 and the dummy unit 221-8 exist to ensure the channel consistency of the phase processing circuit 22.

For example, specifically, in the phase processing circuit compared with the phase processing circuit shown in FIG. 39 compared with the phase processing circuit shown in FIG. 38, the interpolation network 221-2, the interpolation network 221-4, and the interpolation network 221-6 are deleted, and the interpolation network 221-1, the interpolation network 221-3, and the interpolation network 221-5 are reserved, so that the three interpolation networks respectively output three analog signals whose phases are respectively 0 degrees, 120 degrees, and 240 degrees. In some embodiments, in the phase processing circuit compared with the phase processing circuit 22 shown in FIG. 38, the interpolation network 221-4, the interpolation network 221-5, and the interpolation network 221-6 may be deleted, and the interpolation network 221-1, the interpolation network 221-2, and the interpolation network 221-3 are reserved, so that the three interpolation networks respectively output three analog signals whose phases are respectively 0 degrees, 60 degrees, and 120 degrees. In some other embodiments, in the phase processing circuit compared with the phase processing circuit 22 shown in FIG. 38, the interpolation network 221-1, the interpolation network 221-2, and the interpolation network 221-3 may be deleted, and the interpolation network 221-4, the interpolation network 221-5, and the interpolation network 221-6 are reserved, so that the three interpolation networks respectively output three analog signals whose phases are respectively 180 degrees, 240 degrees, and 300 degrees.

In some other embodiments, a switch is usually disposed in the interpolation network, to control enabling and disabling of the interpolation network in the phase processing circuit 22 shown in FIG. 39. For a position at which the switch is disposed, refer to FIG. 38. Details are not described herein again.

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the six interpolation networks. Therefore, the interpolation network 221-1 shown in FIG. 39 may be replaced with the interpolation network 221-1 shown in FIG. 13.

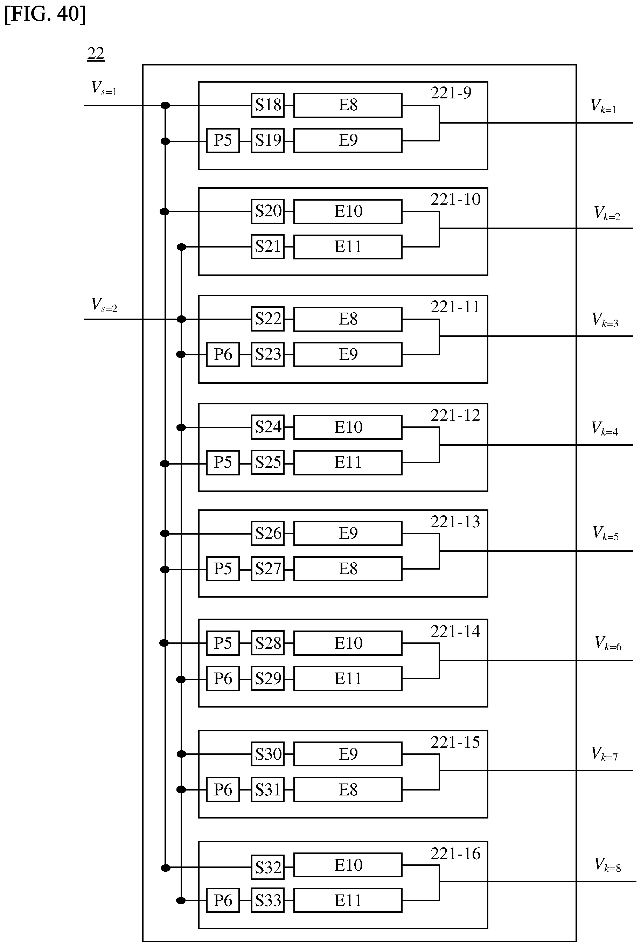

Refer to FIG. 40. Compared with the phase processing circuit 22 shown in FIG. 34, in a phase processing circuit 22 shown in FIG. 40, a phase converter P5 and a phase converter P6 are disposed in an interpolation network, so that any interpolation network can generate one reference signal based on one baseband transmit signal, where the baseband transmit signal and the reference signal are in a differential form. Specifically, the phase processing circuit 22 shown in FIG. 40 includes a plurality of phase converters P5 and a plurality of phase converters P6. Any interpolation network in the phase processing circuit 22 shown in FIG. 40 needs to receive a reference signal $V_{r=1}$, to be specific, one phase converter P5 is disposed in the interpolation network, and an input end of the phase converter P5 is coupled to a first input end of the phase processing circuit 22, so that the reference signal $V_{r=1}$ is transmitted to one output end of the phase processing circuit via one electronic component; and/or any interpolation network needs to receive a reference signal $V_{r=2}$, to be specific, one phase converter P6 is disposed in the interpolation network, and an input end of the phase converter P6 is coupled to a second input end of the phase processing circuit 22, so that the reference signal $V_{r=2}$ is transmitted to one output end of the phase processing circuit via one electronic component.

For a specific implementation in which the phase processing circuit 22 shown in FIG. 40 outputs eight analog signals whose phases are respectively 0 degrees, 45 degrees, 90 degrees, 135 degrees, 180 degrees, 225 degrees, 270 degrees, and 315 degrees, refer to FIG. 34. Details are not described herein again.

In some other embodiments, a switch is usually disposed in the interpolation network, to control enabling and disabling of the interpolation network in the phase processing circuit 22 shown in FIG. 40. For a position at which the switch is disposed, refer to FIG. 34. Details are not described herein again.

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the eight interpolation networks. Therefore, an interpolation network 221-9 shown in FIG. 40 may be replaced with the interpolation network 221-9 shown in FIG. 21, and/or an interpolation network 221-11 shown in FIG. 40 may be replaced with the interpolation network 221-11 shown in FIG. 22, and/or an interpolation network 221-13 shown in FIG. 40 may be replaced with the interpolation network 221-13 shown in FIG. 35, and/or an interpolation network 221-15 shown in FIG. 40 may be replaced with the interpolation network 221-15 shown in FIG. 36.

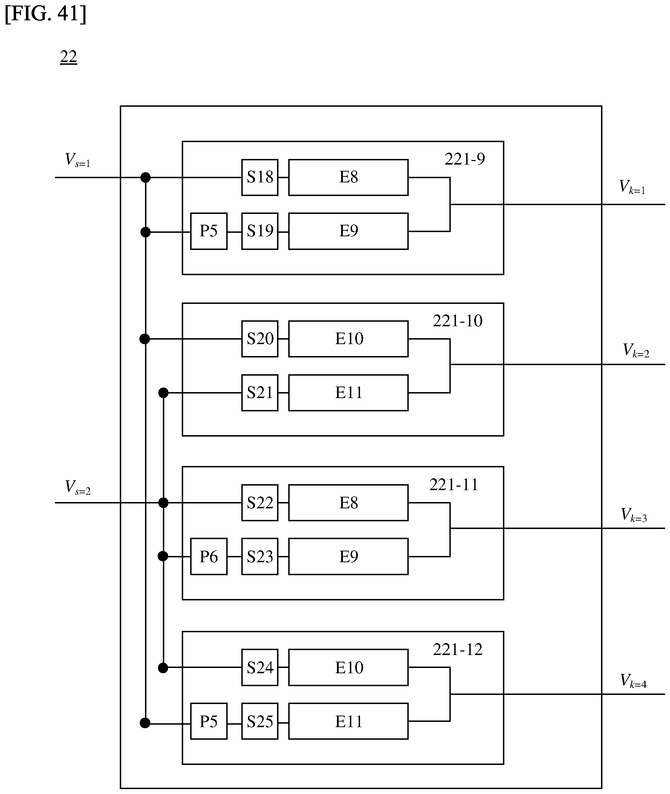

Refer to FIG. 41. Compared with the phase processing circuit 22 shown in FIG. 40, a phase processing circuit 22 shown in FIG. 41 includes four interpolation networks: an interpolation network 221-9, an interpolation network 221-10, an interpolation network 221-11, and an interpolation network 221-12. The interpolation network 221-9 shown in FIG. 41 is the same as the interpolation network 221-9 shown in FIG. 40, a phase of an analog signal $V_{k=1}$ obtained by the interpolation network 221-9 is 0 degrees, and the analog signal is also referred to as a baseband transmit signal. The interpolation network 221-10 shown in FIG. 41 is the same as the interpolation network 221-10 shown in FIG. 40, a phase of an analog signal $V_{k=2}$ obtained by the interpolation network 221-10 is 45 degrees, and the analog signal is also referred to as a baseband transmit signal. The interpolation network 221-11 shown in FIG. 41 is the same as the interpolation network 221-11 shown in FIG. 40, a phase of an analog signal $V_{k=3}$ obtained by the interpolation network 221-11 is 90 degrees, and the analog signal is also referred to as a baseband transmit signal. The interpolation network 221-12 shown in FIG. 41 is the same as the interpolation network 221-12 shown in FIG. 40, a phase of an analog signal $V_{k=4}$ obtained by the interpolation network 221-12 is 135 degrees, and the analog signal is also referred to as a baseband transmit signal.

For example, specifically, in the phase processing circuit shown in FIG. 41 compared with the phase processing circuit shown in FIG. 40, the interpolation network 221-13, the interpolation network 221-14, the interpolation network 221-15, and the interpolation network 221-16 are deleted, and the interpolation network 221-9, the interpolation network 221-10, the interpolation network 221-11, and the interpolation network 221-12 are reserved, so that the four interpolation networks respectively output four analog signals whose phases are respectively 0 degrees, 45 degrees, 90 degrees, and 135 degrees. In some other embodiments, in the phase processing circuit compared with the phase processing circuit 22 shown in FIG. 40, the interpolation network 221-9, the interpolation network 221-10, the interpolation network 221-11, and the interpolation network 221-12 may be deleted, and the interpolation network 221-13, the interpolation network 221-14, the interpolation network 221-15, and the interpolation network 221-16 are reserved, so that the four interpolation networks respectively output four analog signals whose phases are respectively 180 degrees, 225 degrees, 270 degrees, and 315 degrees.

In some other embodiments, a switch is usually disposed in the interpolation network, to control enabling and disabling of the interpolation network in the phase processing circuit 22 shown in FIG. 41. For a position at which the switch is disposed, refer to FIG. 40. Details are not described herein again.

In another embodiment, the switch in FIG. 17 or FIG. 18 may be alternatively disposed between an electronic component in the interpolation network and the output end of the phase processing circuit 22. This is not limited in embodiments of this application.

In some embodiments, there is an alternating current ground in the radio frequency circuit 20, and any interpolation network may receive a reference signal $V_{r=3}$ obtained by the phase processing circuit 22 from the alternating current ground of the radio frequency circuit 20. The reference signal $V_{r=3}$ is also referred to as a fifth input signal received by any one of the eight interpolation networks. Therefore, the interpolation network 221-9 shown in FIG. 41 may be replaced with the interpolation network 221-9 shown in FIG. 21, and/or the interpolation network 221-11 shown in FIG. 41 may be replaced with the interpolation network 221-11 shown in FIG. 22.

For example, the phase converter may be specifically a phase delayer.

For example, when the radio frequency circuit 20 is disposed in the communication device shown in FIG. 1, it indicates that the phase processing circuit 22 in the radio frequency circuit 20 is located between the analog baseband processing circuit 113 in the baseband processing circuit 11 and the frequency mixer 21. Specifically, when a signal is transmitted, an input end of the phase processing circuit 22 is coupled to the analog baseband processing circuit 113, and an output end of the phase processing circuit 22 is coupled to the frequency mixer 21.

In some other embodiments, the phase processing circuit 22 in the radio frequency circuit 20 is located between the analog baseband processing circuit 113 and the converter 112 in the baseband processing circuit 11. Specifically, when a signal is transmitted, an input end of the phase processing circuit 22 is coupled to the converter 112, and an output end of the phase processing circuit 22 is coupled to the frequency mixer 21 via the analog baseband processing circuit 113. The baseband processing circuit 11 is configured to generate an orthogonal baseband signal based on transmit information.

In still some other embodiments, an amplifier may also be disposed in the radio frequency circuit 20. Specifically, the amplifier may be disposed between the frequency mixer 21 in the radio frequency circuit 20 and the antenna 13, and the amplifier amplifies a radio frequency transmit signal generated by the radio frequency circuit, so that a frequency of the radio frequency transmit signal meets a transmit requirement.

It should be noted that another functional circuit may be disposed between the frequency mixer 21 and the phase processing circuit 22, and more functional circuits may also be disposed in the radio frequency circuit 20. This is not limited in embodiments of this application.

It may be understood that, in the foregoing embodiments, although only the electrical parameter of the electronic component in the interpolation network and the phases of the input signals corresponding to different output analog signals whose phase are respectively 0 degrees, 60 degrees, 120 degrees, 180 degrees, 240 degrees, 300 degrees, 45 degrees, 90 degrees, 135 degrees, 225 degrees, 270 degrees, and 315 degrees are described, a person skilled in the art can make various modifications and variations to this application based on the content disclosed in embodiments of this application without departing from the spirit and scope of this application. For example, any one or more of the foregoing interpolation networks may be selected to output an analog signal with a predetermined phase, or a quantity of baseband signals input to one or more of the foregoing interpolation networks and an interpolation factor may be adjusted to output an analog signal with a predetermined phase. This application is also intended to cover these modifications and variations.

In addition, an embodiment of this application also provides a baseband signal processing method. The baseband signal processing method includes: receiving an orthogonal baseband signal, and generating a multi-phase signal based on the orthogonal baseband signal, where the multi-phase signal includes m analog signals, a phase difference between any two of the analog signals having adjacent phases is fixed, and m is a positive integer greater than or equal to 3; and performing frequency mixing on the multi-phase signal to generate a radio frequency transmit signal.

The receiving an orthogonal baseband signal, and generating a multi-phase signal based on the orthogonal baseband signal specifically includes: receiving at least two input signals, and performing interpolation on the at least two input signals based on an interpolation factor of each input signal in the at least two input signals, to obtain one analog signal, where the input signal is one of a baseband transmit signal in the orthogonal baseband signal and a reference signal.

For example, the baseband signal processing method further includes: generating one reference signal based on one baseband transmit signal in the orthogonal baseband signal, where the baseband transmit signal and the reference signal are in a differential form; or obtaining one reference signal from an alternating current ground.

Specifically, the analog signal $V_k$ satisfies the following formula: $V_k = \sum_{i=1}^{j} \alpha(i) * \theta_i$, where $V_k$ indicates a kth analog signal in the m analog signals, j indicates a total quantity of input signals received when the kth analog signal is generated, $\theta_i$ indicates an ith input signal in the at least two input signals, and $\alpha(i)$ indicates an interpolation factor corresponding to the ith input signal.

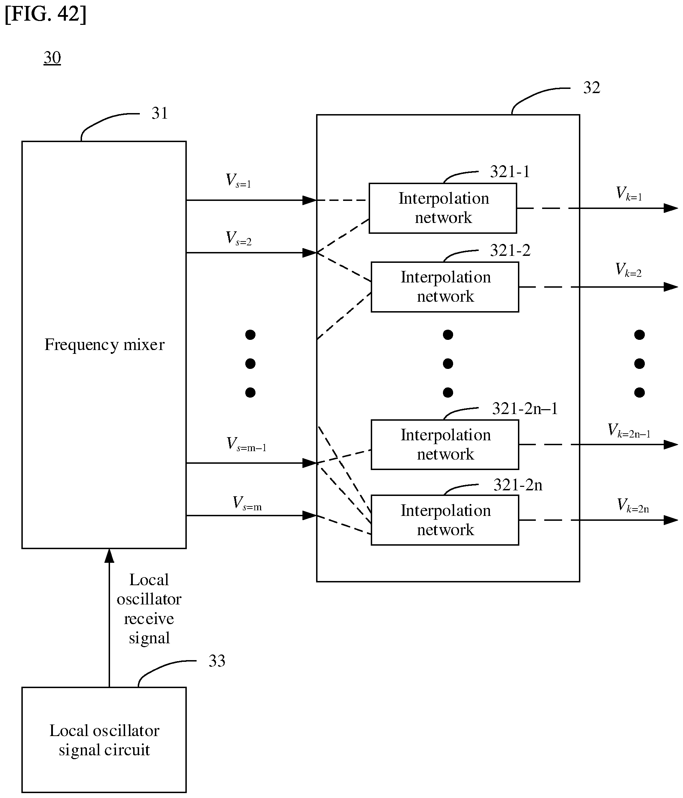

For example, an embodiment of this application also provides another radio frequency circuit. As shown in FIG. 42, the radio frequency circuit 30 includes a frequency mixer 31 and a phase processing circuit 32 coupled to the frequency mixer 31. The frequency mixer 31 is configured to perform frequency mixing on a radio frequency receive signal to generate m baseband receive signals, where a phase difference between any two baseband receive signals that have adjacent phases is fixed, and m is a positive integer greater than or equal to 3. The phase processing circuit 32 is configured to receive the m baseband receive signals, and generate an orthogonal analog signal based on the m baseband receive signals.

Specifically, the frequency mixer 31 may perform frequency mixing on six radio frequency receive signals to generate six baseband receive signals, where the six baseband receive signals include three pairs of differential signals; or the frequency mixer 31 may perform frequency mixing on eight radio frequency receive signals to generate eight baseband receive signals, where the eight baseband receive signals include four pairs of differential signals; or the frequency mixer 31 may perform frequency mixing on three radio frequency receive signals to generate three baseband receive signals, where all the three baseband receive signals are single-ended signals; or the frequency mixer 31 may perform frequency mixing on four radio frequency receive signals to generate four baseband receive signals, where all the three baseband receive signals are single-ended signals. The frequency mixer 31 transmits the m baseband receive signals to the phase processing circuit 32.

For example, the m baseband receive signals received by the phase processing circuit 32 include a baseband receive signal $V_{s=1}$ with a phase of 0, a baseband receive signal $V_{s=2}$ with a phase of 60, a baseband receive signal $V_{s=3}$ with a phase of 120, a baseband receive signal $V_{s=4}$ with a phase of 180, a baseband receive signal $V_{s=5}$ with a phase of 240, and a baseband receive signal $V_{s=6}$ with a phase of 300. The phase processing circuit 32 is specifically configured to perform interpolation on at least two of the baseband receive signal and a reference signal based on different interpolation factors, to generate n pairs of orthogonal analog signals, where one pair of orthogonal analog signals includes two mutually orthogonal analog signals, and n is a positive integer greater than or equal to 1. For example, the phase processing circuit 22 may receive four baseband receive signals whose phases are respectively 0 degrees, 45 degrees, 90 degrees, and 135 degrees. There are also two reference signals in the phase processing circuit 22. The two reference signals include a reference signal $V_{r=1}$, a reference signal $V_{r=2}$, and a reference signal $V_{r=3}$, a phase of the reference signal $V_{r=1}$ is 180 degrees, a phase of the reference signal $V_{r=2}$ is 270 degrees, and the reference signal $V_{r=3}$ is output from an alternating current ground of the radio frequency circuit 30. The phase processing circuit 22 performs interpolation on the baseband receive signal with the phase of 0 degrees based on an interpolation factor with a value of $\frac{\left(2+\sqrt[2]{2}\right)}{4}$, and performs interpolation on the reference signal $V_{r=1}$ with the phase of 180 degrees based on an interpolation factor with a value of $\frac{\left(2-\sqrt[2]{2}\right)}{4}$, to generate one analog signal with a phase of 0 degrees; or the phase processing circuit 22 performs interpolation on the baseband receive signal with the phase of 90 degrees based on an interpolation factor with a value of $\frac{\sqrt[2]{2}}{2}$, performs interpolation on the reference signal $V_{r=3}$ based on an interpolation factor with a value of $\frac{\left(2-\sqrt[2]{2}\right)}{2}$, and performs interpolation on the reference signal $V_{r=1}$ based on an interpolation factor $\alpha 5$, to generate one analog signal with a phase of 90 degrees, where the analog signal with the phase of 0 degrees and the analog signal with the phase of 90 degrees are one pair of orthogonal analog signals.

For example, there may be one or more reference signals in the phase processing circuit 32. Specifically, the phase processing circuit 32 may be configured to generate one reference signal based on one baseband receive signal, where the baseband receive signal and the reference signal are in a differential form. For example, the phase processing circuit 32 is configured to generate a reference signal $V_{r=1}$ based on a baseband receive signal with a phase of 0 degrees, where the baseband receive signal with the phase of 0 degrees and the reference signal $V_{r=1}$ are in a differential form, and a phase of the reference signal $V_{r=1}$ is 180 degrees. For another example, the phase processing circuit 32 is configured to generate a reference signal $V_{r=2}$ based on a baseband receive signal with a phase of 90 degrees, where the baseband receive signal with the phase of 0 degrees and the reference signal $V_{r=2}$ are in a differential form, and a phase of the reference signal $V_{r=2}$ is 180 degrees.

Alternatively, the phase processing circuit 32 may be configured to obtain one reference signal from an alternating current ground of the radio frequency circuit 30. For example, the phase processing circuit 32 obtains a reference signal $V_{r=3}$ from the alternating current ground of the radio frequency circuit 30.

Specifically, an input end of the phase processing circuit 32 is coupled to the frequency mixer 31. It indicates that the present radio frequency circuit 30 is configured to receive the radio frequency receive signal. The phase processing circuit 32 includes 2n interpolation networks. Any interpolation network is configured to receive at least two input signals, and perform interpolation on the at least two input signals based on an interpolation factor of each input signal in the at least two input signals, to obtain one analog signal. The input signal is one of the baseband receive signal and the reference signal.

For example, the phase processing circuit 32 shown in FIG. 42 further includes 2n output ends, and one interpolation network is coupled to one output end in the 2n output ends.

The phase processing circuit 22 shown in FIG. 42 further includes m input ends. The m input ends are configured to receive the m baseband receive signals. Specifically, one input end receives one baseband receive signal in the m baseband receive signals. The m input ends are configured to receive the m baseband receive signals, each input end is configured to receive one baseband receive signal, and phases of any two baseband receive signals in the m baseband receive signals are different. As shown in FIG. 31, the m baseband receive signals may be six baseband receive signals whose phases are respectively 0 degrees, 60 degrees, 120 degrees, 180 degrees, 240 degrees, and 300 degrees, or eight baseband receive signals whose phases are respectively 0 degrees, 45 degrees, 90 degrees, 135 degrees, 180 degrees, 225 degrees, 270 degrees, and 315 degrees, or three baseband receive signals whose phases are respectively 0 degrees, 60 degrees, and 120 degrees, or four baseband receive signals whose phases are respectively 0 degrees, 45 degrees, 90 degrees, and 135 degrees, or another combination. This is not limited in embodiments of this application.

Refer to FIG. 42. The 2n interpolation networks include an interpolation network 321-1, an interpolation network 321-2, ..., an interpolation network 321-2n-1, and an interpolation network 321-2n. The interpolation network 321-1 is coupled to a 1st output end in the 2n output ends, and the interpolation network 221-1 receives two input signals and outputs an analog signal $V_{k=1}$. The interpolation network 321-2 is coupled to a 2nd output end in the 2n output ends, and the interpolation network 221-2 receives two input signals and outputs an analog signal $V_{k=2}$. The interpolation network 321-2n-1 couples three input ends to a (2n-1)th output end in the 2n output ends, and the interpolation network 221-2n-1 receives two input signals and outputs an analog signal $V_{k=2n-1}$. The interpolation network 321-2n couples three input ends to a (2n)th output end in the 2n output ends, and the interpolation network 221-2n receives two input signals and outputs an analog signal $V_{k=2n}$. Herein, n is a positive integer greater than or equal to 1, and m is a positive integer greater than or equal to 3.

The interpolation network is configured to receive at least two input signals, and perform interpolation on the at least two input signals based on an interpolation factor of each input signal in the at least two input signals, to obtain one analog signal. For example, when at least two input signals received by different interpolation networks are different, and/or interpolation factors of input signals in the at least two input signals are different, analog signals with different phases may be obtained. In this case, it may be considered that the 2n interpolation networks can obtain 2n analog signals $V_k$, where k E [1,2n], n is greater than or equal to 1, and the 2n analog signals $V_k$ form n pairs of orthogonal analog signals.

For example, when signal processing of a baseband processing circuit in a communication device is processing two pairs of differential orthogonal baseband signals, the phase processing circuit 32 in the radio frequency circuit 30 in the present communication device may convert n received baseband receive signals into two pairs of differential orthogonal analog signals. The two pairs of differential orthogonal analog signals include a first pair of orthogonal analog signals and a second pair of orthogonal analog signals. The first pair of orthogonal analog signals includes an analog signal $V_{k=1}$ with a phase of 0 degrees and an analog signal $V_{k=2}$ with a phase of 90 degrees. The second pair of orthogonal analog signals is an analog signal $V_{k=3}$ with a phase of 180 degrees and an analog signal $V_{k=4}$ with a phase of 270 degrees. In addition, the first pair of orthogonal baseband signals and the second pair of orthogonal baseband signals are in a differential form. Therefore, sequentially transmitting the baseband receive signals to the baseband processing circuit by the radio frequency circuit 30 matches signal processing of the baseband processing circuit. This improves quality of the received signal, and improves communication quality.

More specifically, as shown in FIG. 42, the frequency mixer 31 is coupled to the input end of the phase processing circuit 32. The radio frequency circuit 30 further includes a local oscillator circuit 33, and the local oscillator circuit 33 is coupled to the frequency mixer 21. The local oscillator circuit 33 is configured to generate a local oscillator receive signal. For example, if the frequency mixer 31 may receive m radio frequency receive signals, the local oscillator circuit 33 generates m local oscillator receive signals, a phase of any one of m local oscillator transmit signals one-to-one corresponds to a phase of each radio frequency receive signal in the m radio frequency receive signals. The frequency mixer 31 is configured to perform frequency mixing on the m radio frequency receive signals based on the m local oscillator transmit signals respectively, to generate m baseband receive signals.

For example, the frequency mixer 31 may perform frequency mixing on the local oscillator receive signal and the radio frequency receive signal to generate eight baseband receive signals whose phases are respectively 0 degrees, 45 degrees, 90 degrees, 135 degrees, 180 degrees, 225 degrees, 270 degrees, and 315 degrees. In four interpolation networks in the phase processing circuit 32, a first interpolation network in the four interpolation networks is configured to perform interpolation on a baseband receive signal $V_{s=1}$ with a phase of 0 degrees based on an interpolation factor with a value

of $\dfrac{\left(2+\sqrt[2]{2}\right)}{4}$, and perform interpolation on a baseband receive signal $V_{s=5}$ with a phase of 180 degrees based on an interpolation factor with a value of $\dfrac{\left(2-\sqrt[2]{2}\right)}{4}$, to obtain an analog signal

$$V_{k=1} = \dfrac{\left(2+\sqrt[2]{2}\right)}{4} * V_{s=1} + \dfrac{\left(2-\sqrt[2]{2}\right)}{4} * V_{s=5},$$

where a phase of the analog signal $V_{k=1}$ is 0 degrees. A second interpolation network in the four interpolation networks is configured to perform interpolation on a baseband receive signal $V_{s=1}$ with a phase of 0 degrees based on an interpolation factor with a value of $\frac{\left(2-\sqrt[2]{2}\right)}{4}$, and perform interpolation on a baseband receive signal $V_{s=5}$ with a phase of 180 degrees based on an interpolation factor with a value of $\frac{\left(2+\sqrt[2]{2}\right)}{4}$, to obtain an analog signal

$$V_{k=2} = \frac{\left(2-\sqrt[2]{2}\right)}{4} * V_{s=1} + \frac{\left(2+\sqrt[2]{2}\right)}{4} * V_{s=5},$$

where a phase of the analog signal $V_{k=2}$ is 180 degrees. A third interpolation network in the four interpolation networks is configured to perform interpolation on a baseband receive signal $V_{s=3}$ with a phase of 90 degrees based on an interpolation factor with a value of $\frac{\left(2+\sqrt[2]{2}\right)}{4}$, and perform interpolation on a baseband receive signal $V_{s=7}$ with a phase of 270 degrees based on an interpolation factor with a value of $\frac{\left(2-\sqrt[2]{2}\right)}{4}$, to obtain an analog signal $V_{k=3} = \frac{\left(2+\sqrt[2]{2}\right)}{4} * V_{s=3} + \frac{\left(2-\sqrt[2]{2}\right)}{4} * V_{s=7}$,

where a phase of the analog signal $V_{k=3}$ is 90 degrees. A fourth interpolation network in the four interpolation networks is configured to perform interpolation on a baseband receive signal $V_{s=3}$ with a phase of 90 degrees based on an interpolation factor with a value of $\frac{\left(2-\sqrt[2]{2}\right)}{4}$, and perform interpolation on a baseband receive signal $V_{s=7}$ with a phase of 270 degrees based on an interpolation factor with a value of $\frac{\left(2+\sqrt[2]{2}\right)}{4}$, to obtain an analog signal

$$V_{k=4} = \frac{\left(2-\sqrt[2]{2}\right)}{4} * V_{s=3} + \frac{\left(2+\sqrt[2]{2}\right)}{4} * V_{s=7},$$

where a phase of the analog signal $V_{k=4}$ is 270 degrees.

For example, the frequency mixer 31 may perform frequency mixing on the local oscillator receive signal and the radio frequency receive signal to generate four baseband receive signals whose phases are respectively 0 degrees, 45 degrees, 90 degrees, and 135 degrees. The phase processing circuit 32 is configured to generate a reference signal $V_{r=1}$ based on the baseband receive signal with the phase of 0 degrees, where the baseband receive signal with the phase of 0 degrees and the reference signal $V_{r=1}$ are in a differential form, and a phase of the reference signal $V_{r=1}$ is 180 degrees. The phase processing circuit 32 is configured to generate a reference signal $V_{r=2}$ based on a baseband receive signal with the phase of 90 degrees, where the baseband receive signal with the phase of 0 degrees and the reference signal $V_{r=2}$ are in a differential form, and a phase of the reference signal $V_{r=2}$ is 180 degrees. The phase processing circuit 32 obtains the reference signal $V_{r=3}$ from the alternating current ground of the radio frequency circuit 30. In four interpolation networks in the phase processing circuit 32, a first interpolation network in the four interpolation networks is configured to perform interpolation on the baseband receive signal $V_{s=1}$ with the phase of 0 degrees based on an interpolation factor with a value of $\frac{\sqrt[2]{2}}{2}$, and perform interpolation on the reference signal $V_{r=3}$ based on an interpolation factor with a value of $\frac{\left(2-\sqrt[2]{2}\right)}{2}$, to obtain an analog signal $V_{k=1} = \frac{\sqrt[2]{2}}{2} * V_{s=1} + \frac{\left(2-\sqrt[2]{2}\right)}{2} * V_{r=3}$, where a phase of the analog signal $V_{k=1}$ is 0 degrees. A second interpolation network in the four interpolation networks is configured to perform interpolation on the baseband receive signal $V_{s=3}$ with the phase of 90 degrees based on an interpolation factor with a value of $\frac{\sqrt[2]{2}}{2}$, and perform interpolation on the reference signal $V_{r=3}$ based on an interpolation factor with a value of $\frac{\left(2-\sqrt[2]{2}\right)}{2}$, to obtain an analog signal $V_{k=2} = \frac{\sqrt[2]{2}}{2} * V_{s=3} + \frac{\left(2-\sqrt[2]{2}\right)}{2} * V_{r=3}$, where a phase of the analog signal $V_{k=2}$ is 90 degrees. A third interpolation network in the four interpolation networks is configured to generate a baseband receive signal $V_{s=5}$ based on the baseband receive signal $V_{s=1}$ with the phase of 0 degrees, where the baseband receive signal $V_{s=1}$ and the baseband receive signal $V_{s=5}$ are in a differential form, and a phase of the baseband receive signal $V_{s=5}$ is 180 degrees. The third interpolation network performs interpolation on the reference signal $V_{r=1}$ with the phase of 180 degrees based on an interpolation factor with a value of $\frac{\sqrt[2]{2}}{2}$, and performs interpolation on the reference signal $V_{r=3}$ based on an interpolation factor with a value of $\frac{\left(2-\sqrt[2]{2}\right)}{2}$, to obtain an analog signal $V_{k=3} = \frac{\sqrt[2]{2}}{2} * V_{r=1} + \frac{\left(2-\sqrt[2]{2}\right)}{2} * V_{r=3}$, where a phase of the analog signal $V_{k=3}$ is 180 degrees. A fourth interpolation network in the four interpolation networks is configured to generate a baseband receive signal $V_{s=6}$ based on the baseband receive signal $V_{s=3}$ with the phase of 90 degrees, where the baseband receive signal $V_{s=3}$ and the baseband receive signal $V_{s=6}$ are in a differential form, and a phase of the baseband receive signal $V_{s=6}$ is 270 degrees. The fourth interpolation network performs interpolation on the reference signal $V_{r=2}$ with the phase of 270 degrees based on an interpolation factor with a value of $\frac{\sqrt[2]{2}}{2}$, and performs interpolation on the reference signal $V_{r=3}$ based on an interpolation factor with a value of $\frac{(2-\sqrt[2]{2})}{2}$, to obtain an analog signal

$$V_{k=4} = \frac{\sqrt[2]{2}}{2} * V_{r=2} + \frac{(2-\sqrt[2]{2})}{2} * V_{r=2}$$

, where a phase of the analog signal $V_{k=4}$ is 270 degrees.

That is, the analog signal $V_k$ satisfies the following formula: $V_k = \sum_{i=1}^{j} \alpha(i) * \theta_i$, where $V_k$ indicates one analog signal obtained by a kth interpolation network in the 2n interpolation networks, $k \in [1, 2n]$, j indicates a total quantity of input signals received by the kth interpolation network, $\theta_i$ indicates an ith input signal received by the kth interpolation network, i<n, and $\alpha(i)$ indicates an interpolation factor corresponding to the ith input signal.

In some other embodiments, a selection module may be used to select, from a baseband receive signal $V_{s=1}$ with a phase of 0 degrees and a baseband receive signal $V_{s=5}$ with a phase of 180 degrees, the baseband receive signal $V_{s=1}$ with the phase of 0 degrees as an analog signal. This is not limited in embodiments of this application.

For example, each interpolation network in the phase processing circuit 32 in FIG. 42 includes one or more electronic components, an interpolation factor is determined based on an electrical parameter of the one or more electronic components, and the plurality of electronic components are coupled in one or both of the following manners: parallel connection and series connection.

In this case, when the radio frequency circuit 30 is disposed in the communication device shown in FIG. 1, it indicates that the phase processing circuit 32 in the radio frequency circuit 30 is located between the analog baseband processing circuit 113 in the baseband processing circuit 11 and the frequency mixer 31. Specifically, when a signal is received, an output end of the phase processing circuit 32 is coupled to the analog baseband processing circuit 113, and an input end of the phase processing circuit 32 is coupled to the frequency mixer 31. The baseband processing circuit 11 obtains reception information based on an orthogonal analog signal.

In some other embodiments, the phase processing circuit 32 in the radio frequency circuit 30 is located between the analog baseband processing circuit 113 and the converter 112 in the baseband processing circuit 11. Specifically, when a signal is received, an output end of the phase processing circuit 22 is coupled to the converter 112, and an input end of the phase processing circuit 32 is coupled to the frequency mixer 31 via the analog baseband processing circuit 113. This is not limited in embodiments of this application.

In addition, an embodiment of this application provides a baseband signal processing method. The method includes: performing frequency mixing on a radio frequency receive signal, to generate m baseband receive signals, where m is a positive integer greater than or equal to 3; and receiving the m baseband receive signals, and generating an orthogonal analog signal based on the m baseband receive signals.

The orthogonal analog signal includes n pairs of orthogonal analog signals, where one pair of orthogonal analog signals includes two mutually orthogonal analog signals, and n is a positive integer greater than or equal to 1. The receiving the m baseband receive signals, and generating an orthogonal analog signal based on the m baseband receive signals specifically includes: receiving at least two input signals, and performing interpolation on the at least two input signals based on an interpolation factor of each input signal in the at least two input signals, to obtain one analog signal. The input signal is one of the baseband receive signal and a reference signal.

For example, the baseband signal processing method further includes: generating one reference signal based on one baseband receive signal, where the baseband receive signal and the reference signal are in a differential form; or obtaining one reference signal from an alternating current ground.

For example, the analog signal $V_k$ satisfies the following formula: $V_k = \sum_{i=1}^{j} \alpha(i) * \theta_i$, where $V_k$ indicates a kth analog signal in the n pairs of orthogonal analog signals, j indicates a total quantity of input signals received when the kth analog signal is generated, $\theta_i$ indicates an ith input signal in the at least two input signals, i<2n, and $\alpha(i)$ indicates an interpolation factor corresponding to the ith input signal.

Although this application is described with reference to specific features and embodiments thereof, it is clear that various modifications and combinations may be made to this application without departing from the spirit and scope of this application. Correspondingly, the specification and accompanying drawings are merely example descriptions of this application defined by the appended claims, and are considered as any of or all modifications, variations, combinations, or equivalents that fall within the scope of this application. It is clear that a person skilled in the art can make various modifications and variations to this application without departing from the spirit and scope of this application. In this way, this application is intended to cover these modifications and variations of this application provided that they fall within the scope of protection defined by the claims and their equivalent technologies of this application.

**Claims**

1. A radio frequency circuit, comprising:

    a frequency mixer and a phase processing circuit coupled to the frequency mixer, wherein the phase processing circuit is configured to receive an orthogonal baseband signal, and generate a multi-phase signal based on the orthogonal baseband signal, wherein the multi-phase signal comprises m analog signals, a phase difference between any two of the analog signals having adjacent phases is fixed, and m is a positive integer greater than or equal to 3; and the frequency mixer is configured to perform frequency mixing on the multi-phase signal to generate a radio frequency transmit signal.

2. The radio frequency circuit according to claim 1, wherein the phase processing circuit is specifically configured to perform interpolation on at least two of a baseband transmit signal in the orthogonal baseband signal and a reference signal based on different interpolation factors, to generate the multi-phase signal.

3. The radio frequency circuit according to claim 2, wherein

    the phase processing circuit is further configured to generate one reference signal based on one baseband transmit signal in the orthogonal baseband signal, wherein the baseband transmit signal and the reference signal are in a differential form; or
    the phase processing circuit is further configured to obtain one reference signal from an alternating current ground of the radio frequency circuit.

4. The radio frequency circuit according to claim 2 or 3, wherein the orthogonal

    baseband signal comprises n pairs of orthogonal baseband signals, wherein each pair of orthogonal baseband signals comprises two mutually orthogonal baseband transmit signals; the phase processing circuit comprises m interpolation networks;
    any of the interpolation networks is configured to receive at least two input signals, and perform interpolation on the at least two input signals based on an interpolation factor of each input signal in the at least two input signals, to obtain one analog signal, wherein n is a positive integer greater than or equal to 1; and
    the input signal is one of the baseband transmit signal and the reference signal.

5. The radio frequency circuit according to claim 4, wherein

    the analog signal $V_k$ satisfies the following formula: $V_k = \sum_{i=1}^{j} \alpha(i) * \theta_i$, wherein $V_k$ indicates one analog signal obtained by a $k^{th}$ interpolation network in the m interpolation networks, $k \in [1, m]$, j indicates a total quantity of input signals received by the $k^{th}$ interpolation network, $\theta_i$ indicates an $i^{th}$ input signal received by the $k^{th}$ interpolation network, and $\alpha(i)$ indicates the interpolation factor corresponding to the $i^{th}$ input signal.

6. The radio frequency circuit according to claim 4 or 5, wherein

    the phase processing circuit further comprises a phase converter; and
    the phase converter is configured to generate one reference signal based on one baseband transmit signal, wherein the baseband transmit signal and the reference signal are in a differential form.

7. The radio frequency circuit according to any one of claims 4 to 6, wherein the interpolation network comprises one or more electronic components, the interpolation factor is determined based on an electrical parameter of the one or more electronic components, and the plurality of electronic components are coupled in one or both of the following manners: parallel connection and series connection.

8. The radio frequency circuit according to any one of claims 4 to 6, wherein any interpolation network is further configured to generate one reference signal based on one baseband transmit signal, wherein the baseband transmit signal and the reference signal are in a differential form.

9. The radio frequency circuit according to any one of claims 1 to 8, wherein all the m analog signals are single-ended signals.

10. The radio frequency circuit according to any one of claims 1 to 8, wherein the m analog signals comprise x pairs of differential signals, wherein x is a positive integer greater than or equal to 3, and m=2*x.

11. The radio frequency circuit according to claim 4, wherein

    when m=6, a first interpolation network in the six interpolation networks receives a first input signal and a third input signal, performs interpolation on the first input signal based on a 1st interpolation factor, and performs interpolation on the third input signal based on a 2nd interpolation factor, to obtain a first analog signal, wherein the 1st interpolation factor is $\frac{(3+\sqrt[2]{3})}{6}$, and the 2nd interpolation factor is $\frac{(3-\sqrt[2]{3})}{6}$; or the first interpolation network receives the first input signal and a fifth input signal, performs interpolation on the first input signal based on a 17th interpolation factor, and performs interpolation on the fifth input signal based on an 18th interpolation factor, to obtain the first analog signal, wherein the 17th interpolation factor is $\frac{1}{2}$, and the 18th interpolation factor is $\frac{1}{2}$;

a second interpolation network in the six interpolation networks receives the first input signal, a second input signal, and the third input signal, performs interpolation on the first input signal based on a 3rd interpolation factor, performs interpolation on the second input signal based on a 4th interpolation factor, and performs interpolation on the third input signal based on a 5th interpolation factor, to obtain a second analog signal, wherein the 3rd interpolation factor is $\frac{(3+\sqrt[2]{3})}{12}$, the 4th interpolation factor is $\frac{1}{2}$, and the 5th interpolation factor is $\frac{(3-\sqrt[2]{3})}{12}$;

a third interpolation network in the six interpolation networks receives the first input signal, the second input signal, and the third input signal, performs interpolation on the first input signal based on a 6th interpolation factor, performs interpolation on the second input signal based on a 7th interpolation factor, and performs interpolation on the third input signal based on an 8th interpolation factor, to obtain a third analog signal, wherein the 6th interpolation factor is $\frac{(3-\sqrt[2]{3})}{12}$, the 7th interpolation factor is $\frac{1}{2}$, and the 8th interpolation factor is $\frac{(3+\sqrt[2]{3})}{12}$;

a fourth interpolation network in the six interpolation networks receives the first input signal and the third input signal, performs interpolation on the first input signal based on a 9th interpolation factor, and performs interpolation on the third input signal based on a 10th interpolation factor, to obtain a fourth analog signal, wherein the 9th interpolation factor is $\frac{(3-\sqrt[2]{3})}{6}$, and the 10th interpolation factor is $\frac{(3+\sqrt[2]{3})}{6}$; or the fourth interpolation network receives the third input signal and the fifth input signal, performs interpolation on the first input signal based on a 19th interpolation factor, and performs interpolation on the fifth input signal based on a 20th interpolation factor, to obtain the fourth analog signal, wherein the 19th interpolation factor is $\frac{1}{2}$, and the 20th interpolation factor is $\frac{1}{2}$;

a fifth interpolation network in the six interpolation networks receives the first input signal, the third input signal, and a fourth input signal, performs interpolation on the first input signal based on an 11th interpolation factor, performs interpolation on the third input signal based on a 12th interpolation factor, and performs interpolation on the fourth input signal based on a 13th interpolation factor, to obtain a fifth analog signal, wherein the 11th interpolation factor is $\frac{(3-\sqrt[2]{3})}{12}$, the 12th interpolation factor is $\frac{(3+\sqrt[2]{3})}{12}$, and the 13th interpolation factor is $\frac{1}{2}$; and

a sixth interpolation network in the six interpolation networks receives the first input signal, the third input signal, and the fourth input signal, performs interpolation on the first input signal based on a 14th interpolation factor, performs interpolation on the third input signal based on a 15th interpolation factor, and performs interpolation on the fourth input signal based on a 16th interpolation factor, to obtain a sixth analog signal, wherein the 14th interpolation factor is $\frac{(3+\sqrt[2]{3})}{12}$, the 15th interpolation factor is $\frac{(3-\sqrt[2]{3})}{12}$, and the 16th interpolation factor is $\frac{1}{2}$, wherein

the fifth input signal is a first reference signal obtained from the alternating current ground of the radio frequency circuit; and

when n=2, the two pairs of orthogonal baseband signals comprise a first pair of orthogonal baseband signals and a second pair of orthogonal baseband signals, the first input signal is a first baseband transmit signal in the first pair of orthogonal baseband signals, the second input signal is a second baseband transmit signal in the first pair of orthogonal baseband signals, the third input signal is a third baseband transmit signal in the second pair of orthogonal baseband signals, the first baseband transmit signal and the third baseband transmit signal are in a differential form, the fourth input signal is a fourth baseband transmit signal in the second pair of orthogonal baseband signals, and the second baseband transmit signal and the fourth baseband transmit signal are in a differential form; or

when n=1, the first input signal is a fifth baseband transmit signal in the one pair of orthogonal baseband signals, the second input signal is a sixth baseband transmit signal in the one pair of orthogonal baseband signals, the third input signal is a second reference signal generated based on the fifth baseband transmit signal, the second reference signal and the fifth baseband transmit signal are in a differential form, the fourth input signal is a third reference signal generated based on the sixth baseband transmit signal, and the third reference signal and the sixth baseband transmit signal are in a differential form.

12. The radio frequency circuit according to claim 4, wherein

when m=3, a first interpolation network in the three interpolation networks receives a first input signal and a third input signal, performs interpolation on the first input signal based on a $1^{st}$ interpolation factor, and performs interpolation on the third input signal based on a $2^{nd}$ interpolation factor, to obtain a first analog signal, wherein the $1^{st}$ interpolation factor is $\frac{(3+\sqrt[2]{3})}{6}$,

and the $2^{nd}$ interpolation factor is $\frac{(3-\sqrt[2]{3})}{6}$; or the first interpolation network receives the first input signal and a fifth input signal, performs interpolation on the first input signal based on a $3^{rd}$ interpolation factor, and performs interpolation on the fifth input signal based on a $4^{th}$ interpolation factor, to obtain the first analog signal, wherein the $3^{rd}$ interpolation factor is $\frac{1}{2}$, and the $4^{th}$ interpolation factor is $\frac{1}{2}$; a second interpolation network in the three interpolation networks receives the first input signal, the second input signal, and the third input signal, performs interpolation on the first input signal based on a $5^{th}$ interpolation factor, performs interpolation on the second input signal based on a $6^{th}$ interpolation factor, and performs interpolation on the third input signal based on a $7^{th}$ interpolation factor, to obtain a third analog signal, wherein the $5^{th}$ interpolation factor is $\frac{(3-\sqrt[2]{3})}{12}$, the $6^{th}$ interpolation factor is $\frac{1}{2}$, and the $7^{th}$ interpolation factor is $\frac{(3+\sqrt[2]{3})}{12}$; and a third interpolation network in the six interpolation networks receives the first input signal, the third input signal, and a fourth input signal, performs interpolation on the first input signal based on an $8^{th}$ interpolation factor, performs interpolation on the third input signal based on a $9^{th}$ interpolation factor, and performs interpolation on the fourth input signal based on a $10^{th}$ interpolation factor, to obtain a fifth analog signal, wherein the $8^{th}$ interpolation factor is $\frac{(3-\sqrt[2]{3})}{12}$, the $9^{th}$ interpolation factor is $\frac{(3+\sqrt[2]{3})}{12}$, and the $10^{th}$ interpolation factor is $\frac{1}{2}$, wherein the fifth input signal is a first reference signal obtained from the alternating current ground of the radio frequency circuit; and when n=2, the two pairs of orthogonal baseband signals comprise a first pair of orthogonal baseband signals and a second pair of orthogonal baseband signals, the first input signal is a first baseband transmit signal in the first pair of orthogonal baseband signals, the second input signal is a second baseband transmit signal in the first pair of orthogonal baseband signals, the third input signal is a third baseband transmit signal in the second pair of orthogonal baseband signals, the first baseband transmit signal and the third baseband transmit signal are in a differential form, the fourth input signal is a fourth baseband transmit signal in the second pair of orthogonal baseband signals, and the second baseband transmit signal and the fourth baseband transmit signal are in a differential form; or

when n=1, the first input signal is a fifth baseband transmit signal in the one pair of orthogonal baseband signals, the second input signal is a sixth baseband transmit signal in the one pair of orthogonal baseband signals, the third input signal is a second reference signal generated based on the fifth baseband transmit signal, the second reference signal and the fifth baseband transmit signal are in a differential form, the fourth input signal is a third reference signal generated based on the sixth baseband transmit signal, and the third reference signal and the sixth baseband transmit signal are in a differential form.

13. The radio frequency circuit according to claim 4, wherein

when m=8, a first interpolation network in the eight interpolation networks receives a first input signal and a third input signal, performs interpolation on the first input signal based on a $1^{st}$ interpolation factor, and performs interpolation on the third input signal based on a $2^{nd}$ interpolation factor, to obtain a first analog signal, wherein the $1^{st}$ interpolation factor is $\frac{\left(2+\sqrt[2]{2}\right)}{4}$, and the $2^{nd}$ interpolation factor is $\frac{\left(2-\sqrt[2]{2}\right)}{4}$ ; or the first interpolation network receives the first input signal and a fifth input signal, performs interpolation on the first input signal based on a $17^{th}$ interpolation factor, and performs interpolation on the fifth input signal based on an $18^{th}$ interpolation factor, to obtain the first analog signal, wherein the $17^{th}$ interpolation factor is $\frac{\sqrt[2]{2}}{2}$, and the $18^{th}$ interpolation factor is $\frac{(2-\sqrt[2]{2})}{2}$ ;

a second interpolation network in the eight interpolation networks receives the first input signal and a second input signal, performs interpolation on the first input signal based on a $3^{rd}$ interpolation factor, and performs interpolation on the second input signal based on a $4^{th}$ interpolation factor, to obtain a second analog signal, wherein the $3^{rd}$ interpolation factor is $\frac{1}{2}$, and the $4^{th}$ interpolation factor is $\frac{1}{2}$ ;

a third interpolation network in the eight interpolation networks receives the second input signal and a fourth input signal, performs interpolation on the second input signal based on a $5^{th}$ interpolation factor, and performs interpolation on the fourth input signal based on a $6^{th}$ interpolation factor, to obtain a third analog signal, wherein the $5^{th}$ interpolation factor is $\frac{\left(2+\sqrt[2]{2}\right)}{4}$, and the $6^{th}$ interpolation factor is $\frac{\left(2-\sqrt[2]{2}\right)}{4}$ ; or the third interpolation network receives the second input signal and the fifth input signal, performs interpolation on the second input signal based on a $19^{th}$ interpolation factor, and performs interpolation on the fifth input signal based on a $20^{th}$ interpolation factor, to obtain the third analog signal, wherein the $19^{th}$ interpolation factor is $\frac{\sqrt[2]{2}}{2}$, and the $20^{th}$ interpolation factor is $\frac{(2-\sqrt[2]{2})}{2}$ ;

a fourth interpolation network in the eight interpolation networks receives the second input signal and the third input signal, performs interpolation on the second input signal based on a $7^{th}$ interpolation factor, and performs interpolation on the third input signal based on an $8^{th}$ interpolation factor, to obtain a fourth analog signal, wherein the $7^{th}$ interpolation factor is $\frac{1}{2}$, and the $8^{th}$ interpolation factor is $\frac{1}{2}$ ;

a fifth interpolation network in the eight interpolation networks receives the first input signal and the third input signal, performs interpolation on the first input signal based on a $9^{th}$ interpolation factor, and performs interpolation on the third input signal based on a $10^{th}$ interpolation factor, to obtain a fifth analog signal, wherein the $9^{th}$ interpolation factor is $\frac{\left(2-\sqrt[2]{2}\right)}{4}$, and the $10^{th}$ interpolation factor is $\frac{\left(2+\sqrt[2]{2}\right)}{4}$ ; or the fifth interpolation network receives the third input signal and the fifth input signal, performs interpolation on the third input signal based on a $21^{st}$ interpolation factor, and performs interpolation on the fifth input signal based on a $22^{nd}$ interpolation factor, to obtain the fifth analog signal, wherein the $21^{st}$ interpolation factor is $\frac{\sqrt[2]{2}}{2}$, and the $22^{nd}$ interpolation factor is $\frac{(2-\sqrt[2]{2})}{2}$ ;

a sixth interpolation network in the eight interpolation networks receives the third input signal and the fourth input signal, performs interpolation on the third input signal based on an $11^{th}$ interpolation factor, and performs interpolation on the fourth input signal based on a $12^{th}$ interpolation factor, to obtain a sixth analog signal, wherein the 11th interpolation factor is $\frac{1}{2}$, and the 12th interpolation factor is $\frac{1}{2}$;

a seventh interpolation network in the eight interpolation networks receives the second input signal and the fourth input signal, performs interpolation on the second input signal based on a 13th interpolation factor, and performs interpolation on the fourth input signal based on a 14th interpolation factor, to obtain a seventh analog signal, wherein the 13th interpolation factor is $\frac{\left(2-\sqrt[2]{2}\right)}{4}$, and the 14th interpolation factor is $\frac{\left(2+\sqrt[2]{2}\right)}{4}$; or the seventh interpolation network receives the fourth input signal and the fifth input signal, performs interpolation on the fourth input signal based on a 23rd interpolation factor, and performs interpolation on the fifth input signal based on a 24th interpolation factor, to obtain the seventh analog signal, wherein the 23rd interpolation factor is $\frac{\sqrt[2]{2}}{2}$, and the 24th interpolation factor is $\frac{(2-\sqrt[2]{2})}{2}$; and

an eighth interpolation network in the eight interpolation networks receives the first input signal and the fourth input signal, performs interpolation on the first input signal based on a 15th interpolation factor, and performs interpolation on the fourth input signal based on a 16th interpolation factor, to obtain an eighth analog signal, wherein the 15th interpolation factor is $\frac{1}{2}$, and the 16th interpolation factor is , wherein the fifth input signal is a first reference signal obtained from the alternating current ground of the radio frequency circuit; and

when n=2, the two pairs of orthogonal baseband signals comprise a first pair of orthogonal baseband signals and a second pair of orthogonal baseband signals, the first input signal is a first baseband transmit signal in the first pair of orthogonal baseband signals, the second input signal is a second baseband transmit signal in the first pair of orthogonal baseband signals, the third input signal is a third baseband transmit signal in the second pair of orthogonal baseband signals, the first baseband transmit signal and the third baseband transmit signal are in a differential form, the fourth input signal is a fourth baseband transmit signal in the second pair of orthogonal baseband signals, and the second baseband transmit signal and the fourth baseband transmit signal are in a differential form; or

when n=1, the first input signal is a fifth baseband transmit signal in the one pair of orthogonal baseband signals, the second input signal is a sixth baseband transmit signal in the one pair of orthogonal baseband signals, the third input signal is a second reference signal generated based on the fifth baseband transmit signal, the second reference signal and the fifth baseband transmit signal are in a differential form, the fourth input signal is a third reference signal generated based on the sixth baseband transmit signal, and the third reference signal and the sixth baseband transmit signal are in a differential form.

14. The radio frequency circuit according to claim 4, wherein

when m=4, a first interpolation network in the four interpolation networks receives a first input signal and a third input signal, performs interpolation on the first input signal based on a 1st interpolation factor, and performs interpolation on the third input signal based on a 2nd interpolation factor, to obtain a first analog signal, wherein the 1st interpolation factor is $\frac{\left(2+\sqrt[2]{2}\right)}{4}$, and the 2nd interpolation factor is $\frac{\left(2-\sqrt[2]{2}\right)}{4}$; or the first interpolation network receives the first input signal and a fifth input signal, performs interpolation on the first input signal based on a 3rd interpolation factor, and performs interpolation on the fifth input signal based on a 4th interpolation factor, to obtain the first analog signal, wherein the 3rd interpolation factor is $\frac{\sqrt[2]{2}}{2}$, and the 4th interpolation factor is $\frac{(2-\sqrt[2]{2})}{2}$;

a second interpolation network in the four interpolation networks receives the first input signal and a second input signal, performs interpolation on the first input signal based on a 5th interpolation factor, and performs interpolation on the second input signal based on a 6th interpolation factor, to obtain a second analog signal, wherein the 5th interpolation factor is $\frac{1}{2}$, and the

$6^{th}$ interpolation factor is $\frac{1}{2}$ ;

a third interpolation network in the four interpolation networks receives the second input signal and a fourth input signal, performs interpolation on the second input signal based on a $7^{th}$ interpolation factor, and performs interpolation on the fourth input signal based on an $8^{th}$ interpolation factor, to obtain a third analog signal, wherein the $7^{th}$ interpolation factor is $\frac{\left(2+\sqrt[2]{2}\right)}{4}$ , and the $8^{th}$ interpolation factor is $\frac{\left(2-\sqrt[2]{2}\right)}{4}$ ; or the third interpolation network receives the second input signal and the fifth input signal, performs interpolation on the second input signal based on a $9^{th}$ interpolation factor, and performs interpolation on the fifth input signal based on a $10^{th}$ interpolation factor, to obtain the third analog signal, wherein the $9^{th}$ interpolation factor is $\frac{\sqrt[2]{2}}{2}$ , and the $10^{th}$ interpolation factor is $\frac{\left(2-\sqrt[2]{2}\right)}{2}$ ; and

a fourth interpolation network in the four interpolation networks receives the second input signal and the third input signal, performs interpolation on the second input signal based on an $11^{th}$ interpolation factor, and performs interpolation on the third input signal based on a $12^{th}$ interpolation factor, to obtain a fourth analog signal, wherein the $11^{th}$ interpolation factor is $\frac{1}{2}$ , and the $12^{th}$ interpolation factor is $\frac{1}{2}$ , wherein

the fifth input signal is a first reference signal obtained from the alternating current ground of the radio frequency circuit; and

when n=2, the two pairs of orthogonal baseband signals comprise a first pair of orthogonal baseband signals and a second pair of orthogonal baseband signals, the first input signal is a first baseband transmit signal in the first pair of orthogonal baseband signals, the second input signal is a second baseband transmit signal in the first pair of orthogonal baseband signals, the third input signal is a third baseband transmit signal in the second pair of orthogonal baseband signals, the first baseband transmit signal and the third baseband transmit signal are in a differential form, the fourth input signal is a fourth baseband transmit signal in the second pair of orthogonal baseband signals, and the second baseband transmit signal and the fourth baseband transmit signal are in a differential form; or

when n=1, the first input signal is a fifth baseband transmit signal in the one pair of orthogonal baseband signals, the second input signal is a sixth baseband transmit signal in the one pair of orthogonal baseband signals, the third input signal is a second reference signal generated based on the fifth baseband transmit signal, the second reference signal and the fifth baseband transmit signal are in a differential form, the fourth input signal is a third reference signal generated based on the sixth baseband transmit signal, and the third reference signal and the sixth baseband transmit signal are in a differential form.

15. The radio frequency circuit according to claim 4, wherein the phase processing

circuit comprises 2n input ends, and the 2n input ends respectively receive the n pairs of orthogonal baseband signals; and

when a quantity of input signals received by at least one interpolation network comprised in the m interpolation networks is different from a quantity of input signals received by another interpolation network, the phase processing circuit further comprises at least one dummy unit dummy, the at least one dummy unit is coupled to any two input ends in the 2n input ends, the dummy unit comprises one or more electronic components coupled between the any two input ends, and the plurality of electronic components are coupled between the any two input ends in one or both of the following manners: parallel connection and series connection.

16. The radio frequency circuit according to claim 7, wherein the electronic

component comprises one or more of the following: a capacitor, a resistor, and an inductor; and when the electronic component is a resistor, the electrical parameter is a resistance value; when the electronic component is a capacitor, the electrical parameter is a capacitance value; or when the electronic component is an inductor, the electrical parameter is an inductance value.

17. The radio frequency circuit according to any one of claims 1 to 16, wherein

the radio frequency circuit further comprises a local oscillator circuit, wherein the local oscillator circuit is configured to generate m local oscillator transmit signals, wherein a phase of each local oscillator transmit signal in the m local oscillator transmit signals one-to-one corresponds to a phase of each analog signal in the multi-phase signal; and

the frequency mixer is configured to separately perform frequency mixing on the multi-phase signal based on the m local oscillator transmit signals, to generate the radio frequency transmit signal.

18. A radio frequency circuit, comprising:

a frequency mixer and a phase processing circuit coupled to the frequency mixer, wherein the frequency mixer is configured to perform frequency mixing on a radio frequency receive signal to generate m baseband receive signals, wherein a phase difference between any two baseband receive signals that have adjacent phases is fixed, and m is a positive integer greater than or equal to 3; and the phase processing circuit is configured to receive the m baseband receive signals, and generate an orthogonal analog signal based on the m baseband receive signals.

19. The radio frequency circuit according to claim 18, wherein the phase processing circuit is specifically configured to perform interpolation on at least two of the baseband receive signal and a reference signal based on different interpolation factors, to generate n pairs of orthogonal analog signals, wherein one pair of orthogonal analog signals comprises two mutually orthogonal analog signals, and n is a positive integer greater than or equal to 1.

20. The radio frequency circuit according to claim 19, wherein

the phase processing circuit is further configured to generate one reference signal based on one baseband receive signal, wherein the baseband receive signal and the reference signal are in a differential form; or the phase processing circuit is further configured to obtain one reference signal from an alternating current ground of the radio frequency circuit.

21. The radio frequency circuit according to claim 19 or 20, wherein

the phase processing circuit comprises 2n interpolation networks; and any of the interpolation networks is configured to receive at least two input signals, and perform interpolation on the at least two input signals based on an interpolation factor of each input signal in the at least two input signals, to obtain one analog signal, wherein the input signal is one of the baseband receive signal and the reference signal.

22. The radio frequency circuit according to claim 21, wherein

the analog signal $V_k$ satisfies the following formula: $V_k = \sum_{i=1}^{j} \alpha(i) * \theta_i$, wherein $V_k$ indicates one analog signal obtained by a $k^{th}$ interpolation network in the 2n interpolation networks, k ∈ [1, 2n], j indicates a total quantity of input signals received by the $k^{th}$ interpolation network, $\theta_i$ indicates an $i^{th}$ input signal in at least two input signals received by the $k^{th}$ interpolation network, and $\alpha(i)$ indicates the interpolation factor corresponding to the $i^{th}$ input signal.

23. The radio frequency circuit according to any one of claims 18 to 22, wherein

the radio frequency circuit further comprises a local oscillator circuit, wherein the local oscillator circuit is configured to generate m local oscillator receive signals, wherein a phase of each local oscillator receive signal in the m local oscillator receive signals one-to-one corresponds to a phase of each radio frequency receive signal in m radio frequency receive signals; and the frequency mixer is configured to perform frequency mixing on the m radio frequency receive signals based on the m local oscillator receive signals respectively, to generate the m baseband receive signals, wherein m is a positive integer, and m ≥ 6.

24. A communication device, wherein

the communication device comprises a baseband processing circuit and the radio frequency circuit according to any one of claims 1 to 23, and the baseband processing circuit is coupled to the radio frequency circuit, wherein the baseband processing circuit is configured to generate an orthogonal baseband signal based on transmit information; and/or the baseband processing circuit is configured to obtain reception information based on an orthogonal analog signal.

25. A baseband signal processing method, comprising:

receiving an orthogonal baseband signal, and generating a multi-phase signal based on the orthogonal baseband signal, wherein the multi-phase signal comprises m analog signals, a phase difference between any two of the analog signals having adjacent phases is fixed, and m is a positive integer greater than or equal to 3; and performing frequency mixing on the multi-phase signal to generate a radio frequency transmit signal.

26. The baseband signal processing method according to claim 25, wherein
the receiving an orthogonal baseband signal, and generating a multi-phase signal based on the orthogonal baseband signal specifically comprises:

   receiving at least two input signals, and performing interpolation on the at least two input signals based on an interpolation factor of each input signal in the at least two input signals, to obtain one analog signal, wherein
   the input signal is one of a baseband transmit signal in the orthogonal baseband signal and a reference signal.

27. The baseband signal processing method according to claim 26, wherein
the method further comprises:

   generating one reference signal based on one baseband transmit signal in the orthogonal baseband signal, wherein the baseband transmit signal and the reference signal are in a differential form; or
   obtaining one reference signal from an alternating current ground.

28. The baseband signal processing method according to claim 26 or 27, wherein

   the analog signal $V_k$ satisfies the following formula: $V_k = \sum_{i=1}^{j} \alpha(i) * \theta_i$ , wherein $V_k$ indicates a $k^{th}$ analog signal in the m analog signals, j indicates a total quantity of input signals received when the $k^{th}$ analog signal is generated, $\theta_i$ indicates an $i^{th}$ input signal in the at least two input signals, and $\alpha(i)$ indicates the interpolation factor corresponding to the $i^{th}$ input signal.

29. A baseband signal processing method, comprising:

   performing frequency mixing on a radio frequency receive signal to generate m baseband receive signals, wherein a phase difference between any two baseband receive signals that have adjacent phases is fixed, and m is a positive integer greater than or equal to 3; and
   receiving the m baseband receive signals, and generating an orthogonal analog signal based on the m baseband receive signals.

30. The baseband signal processing method according to claim 29, wherein

   the orthogonal analog signal comprises n pairs of orthogonal analog signals, wherein one pair of orthogonal analog signals comprises two mutually orthogonal analog signals, and n is a positive integer greater than or equal to 1; and
   the receiving the m baseband receive signals, and generating n pairs of orthogonal analog signals based on the m baseband receive signals specifically comprises: receiving at least two input signals, and performing interpolation on the at least two input signals based on an interpolation factor of each input signal in the at least two input signals, to obtain one analog signal, wherein the input signal is one of the baseband receive signal and a reference signal.

31. The baseband signal processing method according to claim 30, wherein
the method further comprises:

   generating one reference signal based on one of the baseband receive signals, wherein the baseband receive signal and the reference signal are in a differential form; or
   obtaining one reference signal from an alternating current ground.

32. The baseband signal processing method according to claim 30 or 31, wherein

   the analog signal $V_k$ satisfies the following formula: $V_k = \sum_{i=1}^{j} \alpha(i) * \theta_i$ , wherein $V_k$ indicates a kth analog signal in the n pairs of orthogonal analog signals, j indicates a total quantity of input signals received when the kth analog signal is generated, $\theta_i$ indicates an ith input signal in the at least two input signals, i<2n, and $\alpha(i)$ indicates the interpolation factor corresponding to the ith input signal.

[FIG. 1]

10

| | 11 | | 12 | | 13 |

Transmit information → **Baseband processing circuit** → Baseband transmit signal → **Radio frequency circuit** → Radio frequency transmit signal → **Antenna** → Radio frequency transmit signal

Receive information ← Baseband processing circuit ← Baseband receive signal ← Radio frequency circuit ← Radio frequency receive signal ← Antenna ← Radio frequency receive signal

[FIG. 2]

<u>12</u>

122

123

Amplifier

121

Local
oscillator
signal circuit

[FIG. 3]

<u>11</u>

112b

112 { 112a

113b

113 { 113a

111

Digital
baseband
processing
circuit

Converter

Analog
baseband
processing
circuit

Converter

Analog
baseband
processing
circuit

112b

113b

[FIG. 4]

EP 4 542 866 A1

[FIG. 5]

(a)

(b)

[FIG. 6]

20

[FIG.7]

[FIG. 8]

EP 4 542 866 A1

[FIG. 9]

fbb                          flo                          fbb+flo

[FIG. 10]

221-1

[FIG. 11]

221-1

[FIG. 12]

[FIG. 13]

221-1

$V_{s=1}$

$V_{r=3}$

S1 — E21

S2 — E21

$V_{k=1}$

[FIG. 14]

221-4

$V_{s=3}$

$V_{r=3}$

S10 — E21

S11 — E21

$V_{k=4}$

[FIG. 15]

[FIG. 16]

[FIG. 17]

[FIG. 18]

[FIG. 19]

[FIG. 20]

22

$V_{s=1}$

| S18 | E8 |
| S19 | E9 |
221-9    $V_{k=1}$

| S20 | E10 |
| S21 | E11 |
221-10    $V_{k=2}$

$V_{s=2}$

| S22 | E8 |
| S23 | E9 |
221-11    $V_{k=3}$

| S24 | E10 |
| S25 | E11 |
221-12    $V_{k=4}$

| S26 | E9 |
| S27 | E8 |
221-13    $V_{k=5}$

$V_{s=3}$

| S28 | E10 |
| S29 | E11 |
221-14    $V_{k=6}$

| S30 | E9 |
| S31 | E8 |
221-15    $V_{k=7}$

| S32 | E10 |
| S33 | E11 |
221-16    $V_{k=8}$

$V_{s=4}$

[FIG. 21]

221-9

$V_{s=1}$

$V_{r=3}$

| S18 | E22 |
| S19 | E23 |

$V_{k=1}$

[FIG. 22]

221-11

$V_{s=2}$

$V_{r=3}$

| S22 | E22 |
| S23 | E23 |

$V_{k=3}$

[FIG. 23]

221-13

$V_{s=3}$

$V_{r=3}$

| S26 | E22 |
| S27 | E23 |

$V_{k=5}$

[FIG. 24]

221-15

$V_{s=4}$

$V_{r=3}$

| S30 | E22 |
| S31 | E23 |

$V_{k=7}$

[FIG. 25]

22

[FIG. 26]

$V_{s=1}$

$V_{s=3}$

221-9

S18

E100

E8

E200

S19

E9

$V_{k=1}$

[FIG. 27]

E8

E82

E81

E9

E94

E91

E92

E93

[FIG. 28]

[FIG. 29]

[FIG. 30]

## [FIG. 31]

[FIG. 32]

221-4

$V_{r=1}$

S10 — E21

$V_{r=3}$

S11 — E21

$V_{k=4}$

[FIG. 33]

22

[FIG. 34]

[FIG. 35]

221-13

$V_{r=1}$

S26 — E22

$V_{r=3}$

S27 — E23

$V_{k=5}$

[FIG. 36]

221-15

$V_{r=2}$

S30 — E22

$V_{r=3}$

S31 — E23

$V_{k=7}$

[FIG. 37]

22

[FIG. 38]

[FIG. 39]

[FIG. 40]

[FIG. 41]

22

[FIG. 42]

30

## INTERNATIONAL SEARCH REPORT

| International application No. |
| --- |
| **PCT/CN2023/103312** |

**A.    CLASSIFICATION OF SUBJECT MATTER**

H04B 1/04(2006.01)i

According to International Patent Classification (IPC) or to both national classification and IPC

**B.    FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNKI, CJFD, CNTXT, DWPI, ENTXT, ENTXTC, VEN, WPABS, WPABSC: 多相位, 混频, 相位处理, 正交, multiple, phase, mix+, process+, orthogonal

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111211737 A (XINYUAN MICROELECTRONICS (SHANGHAI) CO., LTD.; XINYUAN HOLDINGS LIMITED) 29 May 2020 (2020-05-29) description, paragraphs [0042]-[0064] | 1-17, 24-28 |
| A | CN 102045080 A (NOVATEK MICROELECTRONICS CO., LTD.) 04 May 2011 (2011-05-04) description, paragraphs [0044]-[0064] | 18-24, 29-32 |
| A | DE 102006004951 A1 (ATMEL GERMANY GMBH) 09 August 2007 (2007-08-09) entire document | 1-32 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 August 2023** | **29 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103312**

| Patent document cited in search report | | | Publication date (day/month/year) | Patent family member(s) | | | Publication date (day/month/year) |
|---|---|---|---|---|---|---|---|
| CN | 111211737 | A | 29 May 2020 | US | 2021281218 | A1 | 09 September 2021 |
| | | | | US | 11563407 | B2 | 24 January 2023 |
| CN | 102045080 | A | 04 May 2011 | | None | | |
| DE | 102006004951 | A1 | 09 August 2007 | US | 2007177693 | A1 | 02 August 2007 |
| | | | | EP | 1816740 | A1 | 08 August 2007 |

Form PCT/ISA/210 (patent family annex) (July 2022)